# EUROPEAN PATENT APPLICATION

(11) **EP 3 367 187 A1**
(43) Date of publication of application: **29.08.2018**
(21) Application number: 16856945.7
(22) Date of filing: 21.10.2016
(51) Int. Cl.: G05B 19/042

(54) **COMMUNICATIONS EQUIPMENT, ADAPTER DEVICE AND COMMUNICATIONS SYSTEM**

(30) Priority: 21.10.2015 CN 201510685988; 21.10.2015 CN 201510685614
(71) Applicant: Tendyron Corporation, Beijing 100083 (CN)
(72) Inventor: LI, Dongsheng, Beijing 100083 (CN)
(74) Representative: Maiwald Patent- und Rechtsanwaltsgesellschaft mbH
(86) International application number: PCT/CN2016/102961
(87) International publication number: WO 2017/067514

(57) **Abstract**

A communication device, an adapter device and a communication system (100) are provided. The system (100) includes: a master communication device (10) and a slave communication device (20), the master communication device (10) includes: a first external interface (130) including a first pin (131) and a second pin (132), and a signal generating module (110) electrically connected to the first pin (131); the signal generating module (110) is configured to generate X signals according to time interval corresponding to an N-bit string to be sent, in which the time interval corresponding to the N-bit string to be sent represents time interval between start times of each two adjacent signals, different time intervals corresponding to different bit strings, where N≥1, X≥1 and X is a natural number; said first external interface (130) is configured to send said X signals through the first pin (131).

## Description

### CROSS-REFERENCE TO RELATED APPLICATION

This application claims priority to and benefits of Chinese Patent Application Serial No. 201510685988.4 and Chinese Patent Application Serial No. 201510685614.2, filed with the State Intellectual Property Office of P. R. China on October 21, 2015, the entire content of which is incorporated herein by reference.

### FIELD

The present disclosure relates to an electric technology field, and more particularly to a communication device, an adapter device, a communication system, a signal generation device and a communication device.

### BACKGROUND

At present, electronic products develop rapidly, with various external interfaces. For a product having a main chip, there is generally an external interface with both charging and communication functions. However, for a typical electronic product, the charging interface and the communication interface are separated, that is, the communication and the charging are performed by using different signal lines respectively. For this, at least three or more lines are needed and a lot of hardware support is needed, thus wasting resources. Further, most electronic products do not support inverse plugging function. With the continuous improvement of comfort of the products, an interface communication convenient for the user and without limiting inserting direction becomes more and more important.

At present, electronic products develop rapidly, with various external interfaces. For a product having a main chip, there are generally external interfaces for charging and communication. However, for a typical electronic product, the charging interface and the communication interface are separated, that is, the communication and the charging are performed by using different signal lines respectively. For this, at least three or more lines are needed and a lot of hardware support is needed, thus wasting resources. Further, most electronic products do not support inverse plugging function. With the continuous improvement of comfort of the products, an interface communication convenient for the user and without limiting inserting direction becomes more and more important. However, if two-line communication is used, how to realize data sending of an electronic product using the two-line communication becomes an urgent problem to be solved for those skilled in the art.

### SUMMARY

The present disclosure seeks to solve at least one of the above problems.

An objective of the present disclosure is to provide a communication device.

Another objective of the present disclosure is to provide an adapter device.

Another objective of the present disclosure is to provide a communication system.

Another objective of the present disclosure is to provide a signal generator.

To achieve the above objectives, technical solutions of the present disclosure are implemented as follows.
(Solution 1) A communication device may include: a first external interface including a first pin and a second pin, and a signal generation module electrically connected to the first pin; in which, the signal generation module is configured to generate X signals according to time interval corresponding to an N-bit string to be sent, the time interval corresponding to the N-bit string to be sent represents time interval between start times of each two adjacent signals, different bit strings correspond respectively to different time intervals, where N≥1, X≥1, and X is a natural number; the first external interface is configured to send the X signals via the first pin.
(Solution 2) The communication device denoted as (Solution 1) further includes: a signal receiving module connected to the first external interface; whe rein, the first external interface is configured to receive Y signals;the signal receiving module is configured to detect the Y signals received by the first external interface, and to obtain a bit string corresponding to continuous L time intervals in Y-1 time intervals of the Y signals according to a bit string corresponding to a single time interval of the continuous L time intervals in the Y-1 time intervals, wherein in a case of L>1, respective time intervals in the continuous L time intervals are the same, where Y and L are positive integers, and L≤Y-1.
(Solution 3) In the communication device denoted as (Solution 2), the second pin is electrically connected to the signal receiving module and configured to receive the Y signals.
(Solution 4) In the communication device denoted as (Solution 2), the first pin is electrically connected to the signal receiving module, the second pin is connected to a ground end; and the first pin is configured to receive the Y signals.
(Solution 5) The communication device denoted as any one of (Solutions 1-4) further includes: a power supply interface connected to a power supply; and wherein the signal generation module is connected between the power supply interface and the first pin.
(Solution 6) The communication device denoted as any one of (Solutions 1-4) further includes: a power supply interface connected to a power supply and the first pin.
(Solution 7) In the communication device denoted as any one of (Solutions 1-4 and 6), the signal generation module comprises a main control chip and a signal generation unit, wherein,the main control chip is connected to the signal generation unit, and the main control chip is configured to generate X control signals according to the time interval corresponding to the N-bit string to be sent, and to output the X control signals to trigger the signal generation unit to generate the X signals; and the signal generation unit is connected between a ground end and the first pin, and the signal generation unit is configured to control a connection between the ground end and the first pin to be turned on or off under the control of the X control signals output by the main control chip, and to generate the X signals, wherein the time interval corresponding to the N-bit string to be sent represents time interval between start times of each two adjacent signals, where X≥1, and X is a natural number.
(Solution 8) In the communication device denoted as (Solution 7), the signal generation unit comprises: a first connection end electrically connected to the ground end; a second connection end electrically connected to the first pin; and a control end connected to the main control chip, and configured to control a connection between the first connection end and the second connection end to be turned on or off according to the X control signals output by the main control chip.
(Solution 9) In the communication device denoted as (Solution 5), the signal generation module comprises a main control chip and a signal generation unit, wherein,the main control chip is connected to the signal generation unit, and the main control chip is configured to generate X control signals according to the time interval corresponding to the N-bit string to be sent, and to output the X control signals to trigger the signal generation unit to generate the X signals; and the signal generation unit is arranged between the power supply interface and the first pin, and the signal generation unit is configured to control a connection between the power supply interface and the first pin to be turned on or off under the control of the X control signals output by the main control chip, and to generate the X signals, wherein the time interval corresponding to the N-bit string to be sent represents time interval between start times of each two adjacent signals, where X≥1, and X is a natural number.
(Solution 10) In the communication device denoted as (Solution 9), the signal generation unit comprises: a first connection end electrically connected to the power supply interface; a second connection end electrically connected to the first pin; and a control end connected to the main control chip, and configured to control a connection between the first connection end and the second connection end to be turned on or off according to the X control signals output by the main control chip.
(Solution 11) In the communication device denoted as any one of (Solutions 1-10), the X signals comprise X low level pulses.
(Solution 12) The communication device denoted as any one of (Solutions 7-11) further includes a boost reset circuit, wherein the boost reset circuit is electrically connected between the power supply interface and the signal generation unit, electrically connected to the main control chip, and configured to enter a working state or a non-working state under the control of a boost control signal output by the main control chip.
(Solution 13) In the communication device denoted as (Solution 12), the boost reset circuit comprises a DC/DC boost component, and the DC/DC boost component comprises: an input end electrically connected to the power supply interface; an output end electrically connected to the signal generation unit; and a control end electrically connected to the main control chip, configured to control the DC/DC boost component to enter a working state or a non-working state according to the boost control signal output by the main control chip.
(Solution 14) In the communication device denoted as (Solution 13), the boost reset circuit comprises a filter connected between the ground end and the output end of the DC/DC boost component.
(Solution 15) In the communication device denoted as (Solution 14), the boost reset circuit comprises a switcher, wherein the switcher comprises: a third connection end electrically connected to the ground end; a fourth connection end electrically connected to the output end; and a control end electrically connected to the main control chip, and configured to control a connection between the third connection end and the fourth connection end to be turned on or off according to a turning-on/turning-off control signal output by the main control chip.
(Solution 16) The communication device denoted as any one of (Solutions 1-15) further includes: a line protection circuit connected in series between a first component and a second component, wherein, the first component is configured as the signal generation module, and the second component is configured as the first pin; or the first component is configured as the power supply interface, and the second component is configured as the signal generation module; or the first component is configured as the power supply interface, and the second component is configured as the first pin; or the first component is configured as the power supply interface, and the second component is configured as the boost reset circuit; or the first component is configured as the boost reset circuit, and the second component is configured as the signal generation unit; or the first component is configured as the ground end, and the second component is configured as the second pin.
(Solution 17) In the communication device denoted as (Solution 16), the line protection circuit comprises a control module and a switch module, wherein, the switch module comprises a fifth connection end, a sixth connection end and a controlled port; the control module comprises a first detection port, a second detection port and a control port, wherein the first detection port is electrically connected to the fifth connection end of the switch module, the second detection port is electrically connected to the sixth connection end of the switch module, and the control port is electrically connected to the controlled port of the switch module; the control module is configured to, when the switch module switches on a connection between the fifth connection end and the sixth connection end, detect a first level of the fifth connection end of the switch module via the first detection port, and to detect a second level of the sixth connection end of the switch module via the second detection port, and when a difference between the first level and the second level satisfies a condition to trigger line protection, to output a first control signal to the controlled port of the switch module via the control port, and to control the switch module to switch off the connection between the fifth connection end and the sixth connection end; wherein the fifth connection end is electrically connected to the first component; or the sixth connection end is electrically connected to the second component.
(Solution 18) An adapter device may include: a communication device according to solution 1, a second external interface and a codec, in which the codec is electrically connected between the second external interface and the signal generation module of the communication device, the second external interface is configured to receive first data sent from an external terminal electrically connected to the second external interface; the codec is configured to decode the first data according to a protocol supported by the second external interface, to obtain an N-bit string to be sent, and to send the N-bit string to be sent to the signal generation module.
(Solution 19) The adapter device denoted as (Solution 18) further includes: a signal receiving module connected to the first external interface of the communication device and the codec; wherein, the first external interface is configured to receive Y signals; the signal receiving module is configured to detect the Y signals received by the first external interface, and to obtain a bit string corresponding to continuous L time intervals in Y-1 time intervals of the Y signals according to a bit string corresponding to a single time interval of the continuous L time intervals in the Y-1 time intervals, and to send the bit string corresponding to the continuous L time intervals to the codec, wherein in a case of L>1, respective time intervals in the continuous L time intervals are the same, where Y and L are positive integers, and L≤ Y-1; the codec is configured to receive the bit string corresponding to the continuous L time intervals sent from the signal receiving module, and to encode the bit string corresponding to the continuous L time intervals according to the protocol supported by the second external interface to obtain second data; the second external interface is configured to send the second data to the external terminal.
(Solution 20) In the adapter device denoted as (Solution 19), the second pin is electrically connected to the signal receiving module and configured to receive the Y signals.
(Solution 21) In the adapter device denoted as (Solution 19), the first pin is electrically connected to the signal receiving module, the second pin is connected to a ground end; and the first pin is configured to receive the Y signals.
(Solution 22) The adapter device denoted as any one of (Solutions 18-21) further includes: a power supply interface connected to a power supply; and wherein the signal generation module is connected between the power supply interface and the first pin.
(Solution 23) The adapter device denoted as any one of (Solutions 18-21) further includes: a power supply interface connected to a power supply and the first pin.
(Solution 24) In the adapter device denoted as any one of (Solutions 18-21 and 23), the signal generation module comprises a main control chip and a signal generation unit, wherein, the main control chip is connected to the signal generation unit, and the main control chip is configured to generate X control signals according to the time interval corresponding to the N-bit string to be sent, and to output the X control signals to trigger the signal generation unit to generate the X signals; and the signal generation unit is arranged between a ground end and the first pin, and the signal generation unit is configured to control a connection between the ground end and the first pin to be turned on or off under the control of the X control signals output by the main control chip, and to generate the X signals, wherein the time interval corresponding to the N-bit string to be sent represents time interval between start times of each two adjacent signals, where X≥1, and X is a natural number.
(Solution 25) In the adapter device denoted as (Solution 24), the signal generation unit comprises: a first connection end electrically connected to the ground end; a second connection end electrically connected to the first pin; and a control end connected to the main control chip, and configured to control a connection between the first connection end and the second connection end to be turned on or off according to the X control signals output by the main control chip.
(Solution 26) In the adapter device denoted as (Solution 22), the signal generation module comprises a main control chip and a signal generation unit, wherein, the main control chip is connected to the signal generation unit, and the main control chip is configured to generate X control signals according to the time interval corresponding to the N-bit string to be sent, and to output the X control signals to trigger the signal generation unit to generate the X signals; and the signal generation unit is arranged between the power supply interface and the first pin, and the signal generation unit is configured to control a connection between the power supply interface and the first pin to be turned on or off under the control of the X control signals output by the main control chip, and to generate the X signals, wherein the time interval corresponding to the N-bit string to be sent represents time interval between start times of each two adjacent signals, where X≥1, and X is a natural number.
(Solution 27) In the adapter device denoted as (Solution 26), the signal generation unit comprises: a first connection end electrically connected to the power supply interface; a second connection end connected to the first pin; and a control end connected to the main control chip, and configured to control a connection between the first connection end and the second connection end to be turned on or off according to the X control signals output by the main control chip.
(Solution 28) In the adapter device denoted as any one of (Solutions 24-27), the codec is electrically connected to the main control chip, and configured to decode the first data according to the protocol supported by the second external interface, to obtain the N-bit string to be sent, and to send the N-bit string to be sent to the main control chip.
(Solution 29) In the adapter device denoted as any one of (Solutions 18-27), the X signals comprise X low level pulses.
(Solution 30) The adapter device denoted as any one of (Solutions 24-28) further includes: a boost reset circuit, wherein the boost reset circuit is electrically connected between the power supply interface and the signal generation unit, electrically connected to the main control chip, and configured to enter a working state or a non-working state under the control of a boost control signal output by the main control chip.
(Solution 31) In the adapter device denoted as (Solution 30), the boost reset circuit comprises a DC/DC boost component, and the DC/DC boost component comprises: an input end electrically connected to the power supply interface; an output end electrically connected to the signal generation unit; and a control end electrically connected to the main control chip, configured to control the DC/DC boost component to enter a working state or a non-working state according to the boost control signal output by the main control chip.
(Solution 32) In the adapter device denoted as (Solution 31), the boost reset circuit comprises a filter connected between the ground end and the output end of the DC/DC boost component.
(Solution 33) In the adapter device denoted as (Solution 32), the boost reset circuit comprises a switcher, wherein the switcher comprises: a third connection end electrically connected to the ground end; a fourth connection end electrically connected to the output end; and a control end electrically connected to the main control chip, and configured to control a connection between the third connection end and the fourth connection end to be turned on or off according to a turning-on/turning-off control signal output by the main control chip.
(Solution34) The adapter device denoted as any one of (Solutions 18-33) further includes: a line protection circuit connected in series between a first component and a second component, wherein, the first component is configured as the signal generation module, and the second component is configured as the first pin; or the first component is configured as the power supply interface, and the second component is configured as the signal generation module; or the first component is configured as the power supply interface, and the second component is configured as the first pin; or the first component is configured as the power supply interface, and the second component is configured as the boost reset circuit; or the first component is configured as the boost reset circuit, and the second component is configured as the signal generation unit; or the first component is configured as the ground end, and the second component is configured as the second pin.
(Solution 35) In the adapter device denoted as (Solution 34), the line protection circuit comprises a control module and a switch module, wherein, the switch module comprises a fifth connection end, a sixth connection end and a controlled port; the control module comprises a first detection port, a second detection port and a control port, wherein the first detection port is electrically connected to the fifth connection end of the switch module, the second detection port is electrically connected to the sixth connection end of the switch module, and the control port is electrically connected to the controlled portof the switch module; the control module is configured to, when the switch module switches on a connection between the fifth connection end and the sixth connection end, detect a first level of the fifth connection end of the switch module via the first detection port, and to detect a second level of the sixth connection end of the switch module via the second detection port, and when a difference between the first level and the second level satisfies a condition to trigger line protection, to output a first control signal to the controlled portof the switch module via the control port, and to control the switch module to switch off the connection between the fifth connection end and the sixth connection end; wherein the fifth connection end is electrically connected to the first component; or the sixth connection end is electrically connected to the second component.
(Solution 36) A communication device may include: a third external interface including a third pin and a fourth pin, and a signal receiving module electrically connected to the third pin; in which, the third external interface is configured to receive W signals via the third pin, the signal receiving module is configured to detect the W signals received by the third pin, and to obtain a bit string corresponding to each continuous L time intervals in W-1 time intervals of the W signals according to a bit string corresponding to a single time interval in the continuous L time intervals in the W-1 time intervals, in a case of L>1, respective time intervals of the L time intervals are the same, where W and L are positive integers, and L≤ W-1.
(Solution 37) The communication device denoted as (Solution 36) further includes a signal generation module connected to the third external interface, wherein the signal generation module is configured to generate Z signals according to time interval corresponding to an N-bit string to be sent, wherein, the time interval corresponding to the N-bit string to be sent represents time interval between start times of each two adjacent signals, different bit strings correspond to different time intervals respectively, where N≥1, Z≥1, and Z is a natural number; the third external interface is further configured to send the Z signals.
(Solution 38) In the communication device denoted as (Solution 36), the third pin is electrically connected to the signal generation module, the fourth pin is connected to a ground end; and the third pin is configured to receive the Z signals.
(Solution 39) In the communication device denoted as (Solution 36), the fourth pin is electrically connected to the signal generation module and configured to send the Z signals.
(Solution 40) The communication device denoted as any one of (Solutions 36-39) further includes: an anti reverse connection module, wherein, the anti reverse connection module is electrically connected to the third external interface, and electrically connected to an input end of the signal generation module and an input end of the signal receiving module, an output end of the signal generation module and an output end of the signal receiving module are electrically connected to a ground end respectively, the anti reverse connection module is connected to the ground end; the anti reverse connection module is configured to conduct a first connection between a first connection point and one of the third pin and the fourth pin to be turned on, and to control a second connection between the ground end and the other one of the third pin and the fourth pin to be turned on, wherein the first connection point is a junction where the anti reverse connection module is connected to the input end of the signal generation module and the input end of the signal receiving module.
(Solution 41) In the communication device denoted as (Solution 40), the anti reverse connection module comprises a first anti reverse connection unit, a second anti reverse connection unit, a first port, a second port, a third port and a fourth port, wherein the first port is connected to the third pin, the second port is connected to the fourth pin, the third port is electrically connected to the first connection point, and the fourth port is electrically connected to the ground end; the first anti reverse connection unit is connected to the first port, the second port and the third portrespectively, configured to control a connection between the third port and one of the first port and the second port; the second anti reverse connection unit is connected to the fourth port, the first port and the second port, configured to control a connection between the fourth port and the other one of the first port and the second port.
(Solution 42) In the communication device denoted as (Solution 40 or 41), the signal generation module comprises a main control chip and a signal generation unit, where, the main control chip is connected to the signal generation unit, and the main control chip is configured to generate Z control signals according to the time interval corresponding to the N-bit string to be sent, and to output the Z control signals to trigger the signal generation unit to generate the Z signals; and the signal generation unit is arranged between a ground end and the first connection point, and the signal generation unit is configured to control a connection between the ground end and the first connection point to be turned on or off under the control of the Z control signals output by the main control chip, and to generate the Z signals.
(Solution 43) In the communication device denoted as (Solution 42), the signal generation unit comprises: a first connection end electrically connected to the ground end; a second connection end electrically connected to the first connection point; and a control end connected to the main control chip, and configured to control a connection between the first connection end and the second connection end to be turned on or off according to the Z control signals output by the main control chip.
(Solution 44) In the communication device denoted as (Solutions 36-38 and 40-43), the Z signals comprise Z low level pulses.
(Solution 45) The communication device denoted as any one of (Solutions 40-44) further includes: a fixed load, wherein one end of the fixed load is electrically connected to the first connection point, and the other end of the fixed load is electrically connected to the ground end.
(Solution 46) In the communication device denoted as (Solution 45), the fixed load further comprises a charging switch and a charging battery, wherein, the charging switch is connected between the first connection point and one end of the charging battery, configured to be controlled to switch on or off a connection between the first connection point and the charging battery, wherein the other end of the charging battery is connected to the ground end.
(Solution 47) The communication device denoted as any one of (Solutions 45-46) further includes: a filter, wherein the filter is connected between the ground end and the first connection point, or the filter is connected between the ground end and a junction connecting the charging switch and the charging battery.
(Solution 48) The communication device denoted as (Solution 36) further includes: an anti reverse connection module, wherein the signal receiving module comprises an input end and an output end; the anti reverse connection module is electrically connected to the third external interface, and electrically connected to the input end and the output end of the signal receiving module; the anti reverse connection module is configured to control a first connection between the input end of the signal receiving module and one of the third pin and the fourth pin to be turned on, and to control a second connection between the output end of the signal receiving module and the other one of the third pin and the fourth pin to be turned on.
(Solution 49) In the communication device denoted as (Solution 48), the anti reverse connection module comprises a first anti reverse connection unit, a second anti reverse connection unit, a first port, a second port, a third port and a fourth port, wherein the first port is connected to the third pin, the second port is connected to the fourth pin, the third port is electrically connected to the input end of the signal receiving module, and the fourth port is electrically connected to the output end of the signal receiving module; the first anti reverse connection unit is connected to the first port, the second port and the third portrespectively, configured to control a connection between the third port and one of the first port and the second port to be turned on; the second anti reverse connection unit is connected to the fourth port, the first port and the second port, configured to control a connection between the fourth port and the other one of the first port and the second port to be turned on.
(Solution 50) In the communication device denoted as any one of (Solutions 41-49), the first anti reverse connection unit comprises a first anti reverse connection element and a second anti reverse connection element, the second anti reverse connection unit comprises a third anti reverse connection element and a fourth anti reverse connection element; the first anti reverse connection element is connected between the first port and the third port, configured to control a connection between the first port and the third port to be turned on; the second anti reverse connection element is connected between the second port and the third port, configured to control a connection between the second port and the third port to be turned on; the third anti reverse connection element is connected between the fourth port and the first port, configured to control a connection between the fourth port and the first port to be turned on; the fourth anti reverse connection element is connected between the fourth port and the second port, configured to control a connection between the fourth port and the second port to be turned on.
(Solution 51) The communication device denoted as any one of (Solutions 48-50) further includes: a fixed load, wherein one end of the fixed load is connected to a connection point between the anti reverse connection module and the input end of the signal receiving module, and the other end of the fixed load is connected to the ground end.
(Solution 52) In the communication device denoted as (Solution 51), the fixed load further comprises a charging switch and a charging battery, wherein, the charging switch is connected between one end of the charging battery and a junction connecting the anti reverse connection module and the input end of the signal receiving module, configure to be controlled to switch on or off a connection between the charging battery and the junction connecting the anti reverse connection module and the input end of the signal receiving module, the other end of the charging battery is connected to the ground end.
(Solution 53) The communication device denoted as any one of (Solutions 51-52) further includes: a filter, wherein the filter is connected between the ground end and the junction connecting the anti reverse connection module and the input end of the signal receiving module, or the filter is connected between the ground end and a junction connecting the charging switch and the charging battery.
(Solution 54) In the communication device denoted as any one of (Solutions 36-53), the W signals comprise W low level pulses.
(Solution 55) A communication system may include a master communication device and a slave communication device, in which the master communication device includes a communication device according to any one of solutions 1 to 18, the slave communication device includes a communication device according to any one of solutions 36 to 54, the third external interface of the slave communication device is connected to the first external interface of the master communication device.
(Solution 56) The communication system denoted as (Solution 55) further includes a communication terminal, wherein the second external interface of the master communication device is connected to the communication terminal.
   It can be seen from the above technical solutions that, the present disclosure provides a communication device, an adapter device and a communication system. The communication deivce only has two interfaces for communication. According to embodiments of the present disclosure, two-line communication between communication devices each only having two interfaces may be realized. In addition, the slave communication device may obtain power from the master communication device. The slave communication device also has an anti reverse connection function.
(Solution 57) A signal generator may include: a main control chip, an output port and a signal generation unit electrically connected to the main chip and the output port respectively, wherein the main control chip is configured to generate X signals according to time interval corresponding to an N-bit string to be sent, and to output the X control signals to trigger the signal generation unit to generate the X signals, where N≥1, X≥1, and X is a natural number; the signal generation unit is configured to generate the X signals, wherein the time interval corresponding to the N-bit string to be sent represents time interval between start times of each two adjacent signals;the output port is configured to output the X signals.
(Solution 58) The signal generator denoted as (Solution 57) further includes: a power supply interface connected with the power supply, and the signal generation unit is connected between the power supply interface and the output port.
(Solution 59) The signal generator denoted as (Solution 57) further includes: a power supply interface connected with the power supply, and the power supply interface is electrically connected with the output port.
(Solution 60) In the signal generator denoted as (Solution 58), the signal generation unit is set between the power supply interface and the output port, disconnecting or conducting a path between the power supply interface and the output port under the control of the X control signals output by the main control chip, for producing the X signals.
(Solution 61) In the signal generator denoted as (Solution 60), the signal generation unit comprises: a first connection end electrically connected to the power supply interface; a second connection end electrically connected to the output port; and a control end connected to the main control chip, and configured to control a connection between the first connection end and the second connection end to be turned on or off according to the X control signals output by the main control chip.
(Solution 62) The signal generator denoted as (Solution 58) further includes: an input port connected electrically to the power supply interface; the signal generation unit is set between the input port and the output port, disconnecting or conducting a path between the input port and the output port under the control of the X control signals output from the main control chip, for producing the X signals.
(Solution 63) In the signal generator denoted as (Solution 62), the signal generation unit comprises: a first connection end electrically connected to the power supply interface; a second connection end electrically connected to the output port; and a control end connected to the main control chip, and configured to control a connection between the first connection end and the second connection end to be turned on or off according to the X control signals output by the main control chip.
(Solution 64) In the signal generator denoted as (Solution 57 or 59), the signal generation unit is set between the ground end and the output port, and the path between the ground end and the output port is disconnected or through under the control of the X control signals output by the main control chip.
(Solution 65) In the signal generator denoted as (Solution 64), the signal generation unit comprises: a first connection end electrically connected to the power supply interface; a second connection end electrically connected to the output port; and a control end connected to the main control chip, and configured to control a connection between the first connection end and the second connection end to be turned on or off according to the X control signals output by the main control chip.
(Solution 66) In the signal generator denoted as any one of (Solutions 57-65), the X signals comprise X low level pulses.
(Solution 67) In the signal generator denoted as any one of (Solutions 58-66) further includes: a boost reset circuit, wherein the boost reset circuit is electrically connected between the power supply interface and the output port, electrically connected to the main control chip, and configured to enter a working state or a non-working state under the control of a boost control signal output by the main control chip.
(Solution 68) In the signal generator denoted as (Solution 67), the boost reset circuit comprises a DC/DC boost component, and the DC/DC boost component comprises: an input end electrically connected to the power supply interface; an output end electrically connected to the output port; and a control end electrically connected to the main control chip, configured to control the DC/DC boost component to enter a working state or a non-working state according to the boost control signal output by the main control chip.
(Solution 69) In the signal generator denoted as (Solution 68), the boost reset circuit comprises a filter connected between the ground end and the output end of the DC/DC boost component.
(Solution 70) In the signal generator denoted as (Solution 69), the boost reset circuit comprises a switcher, wherein the switcher comprises: a first connection end electrically connected to the ground end; a second connection end electrically connected to the output end; and a control end electrically connected to the main control chip, and configured to control a connection between the first connection end and the second connection end to be turned on or off according to a turning-on/turning-off control signal output by the main control chip.
(Solution 71) A communication device may include: a signal generator, as described in any of solutions 57 to 61, 64 to 70, and a first external interface composed of the first and second pins, and the output port is electrically connected with the first pin.
(Solution 72) A communication device may include: a signal generator, as described in any of solutions 57 to 61, 64 to 70, and a first external interface composed of the first and second pins, and the output port is electrically connected with the second pin.
(Solution 72) A communication device may include: a signal generator, as described in any of solutions 62 to 63, 66 to 70, and a first external interface composed of the first and second pins, and the output port is electrically connected with the second pin.

It can be seen from the solutions provided in the present disclosure that, the present disclosure provides a signal generation device and a communication device. The signal generation device provided in the present disclosure may send bit data to an opposite communication device, thus realizing two-line communication between communication devices each having only two pins. In addition, the signal generation device of the master communication device may increase output voltage at the output end, such that the voltage output from the first external interface of the master communication device to the salve communication device is increased. In this way, the voltage supplying for or charging the slave communication device is high enough, thus preventing occurrence of a case that minimum input voltage of each component in the slave communication device cannot be satisfied because of power loss or voltage drop in circuit. In addition, the signal generation device may provide a reset function for the master communication device.

### BRIEF DESCRIPTION OF THE DRAWINGS

In order to explicitly illustrate technical solutions in embodiments of the present disclosure, a brief introduction for the accompanying drawings used when describing the embodiments will be listed as follows. Apparently, the drawings described below are only corresponding to some embodiments of the present disclosure, and those skilled in the art may obtain other drawings according to these drawings without creative labor.
Fig. 1 is a block diagram illustrating a communication system according to embodiment 1 of the present disclosure.
Fig. 2 is a block diagram illustrating a master communication device according to embodiment 1 of the present disclosure.
Fig. 3 is a block diagram illustrating a master communication device according to embodiment 1 of the present disclosure.
Fig. 4 is a block diagram illustrating a master communication device according to embodiment 1 of the present disclosure.
Fig. 5 is a block diagram illustrating a master communication device according to embodiment 1 of the present disclosure.
Fig. 6 is a block diagram illustrating a master communication device according to embodiment 1 of the present disclosure.
Fig. 7A- Fig. 7B are block diagrams illustrating a master communication device having a boost reset circuit according to embodiment 1 of the present disclosure.
Fig. 7C is a block diagram illustrating a boost reset circuit according to embodiment 1 of the present disclosure.
Fig. 7D- Fig. 7E are schematic circuit diagrams illustrating a master communication device 10 having a boost reset circuit according to embodiment 4 of the present disclosure.
Fig. 8A- Fig. 8B are block diagrams illustrating a master communication device having a line protection circuit according to embodiment 1 of the present disclosure.
Fig. 8C is a block diagram illustrating a line protection circuit according to embodiment 1 of the present disclosure.
Fig. 8D- Fig. 8E are schematic circuit diagrams illustrating a master communication device 10 having a line protection circuit according to embodiment 5 of the present disclosure.
Fig. 9 is a block diagram illustrating a slave communication device according to embodiment 1 of the present disclosure.
Fig. 10 is a block diagram illustrating a slave communication device according to embodiment 1 of the present disclosure.
Fig. 11 is a block diagram illustrating a slave communication device according to embodiment 1 of the present disclosure.
Fig. 12 is a block diagram illustrating a slave communication device according to embodiment 1 of the present disclosure.
Fig. 13 is a block diagram illustrating an anti reverse connection module according to embodiment 1 of the present disclosure.
Fig. 14 is a schematic diagram illustrating an anti reverse connection module according to embodiment 1 of the present disclosure.
Fig. 14A- Fig. 14C are schematic diagrams illustrating an anti reverse connection module according to embodiment 6 of the present disclosure.
Fig. 15 is a schematic circuit diagram illustrating a communication system according to embodiment 2 of the present disclosure.
Fig. 16 is a schematic circuit diagram illustrating a communication system according to embodiment 3 of the present disclosure.
Fig. 17 is a schematic diagram of the master communication device according to embodiment 7 of the present disclosure.
Fig. 18 is a schematic diagram of a signal generator according to embodiment 7 of the embodiment of the present disclosure.
Fig. 19 is a schematic diagram of another signal generator according to embodiment 7 of the present disclosure.
FIG. 20 is a schematic diagram of another signal generator according to embodiment 7 of the present disclosure.
Fig. 21 is a schematic diagram of another signal generator according to embodiment 7 of the present disclosure.
Fig. 22 is a schematic diagram of another signal generator according to embodiment 7 of the present disclosure.
Fig. 23 is a schematic diagram of another signal generator according to embodiment 7 of the present disclosure.
Fig. 24 is a schematic diagram of another signal generator according to embodiment 7 of the present disclosure.
Fig. 25 is a schematic diagram of an optional master communication device according to embodiment 8 of the present disclosure.
Fig. 26 is a schematic diagram of another optional master communication device according to embodiment 9 of the present disclosure.
Fig. 27 is a schematic diagram of another optional master communication device according to embodiment 10 of the present disclosure.
Fig. 28 is a schematic diagram of another optional master communication device according to embodiment 10 of the present disclosure.
Fig. 29 is a schematic diagram of an optional slave communication device according to embodiment 11 of the embodiment of the present disclosure.
Fig. 30 is a circuit diagram of another optional master communication device according to embodiment 12 of the present disclosure.

### DETAILED DESCRIPTION

In order to explicitly illustrate technical solutions in embodiments of the present disclosure, the technical solutions in the embodiments of the present disclosure will be described clearly and completely in connection with the drawings in the embodiments of the present disclosure as follows. Apparently, the described embodiments are only part of embodiments of the present disclosure, instead of the entire embodiments. Based on embodiments described herein, those skilled in the art may obtain all other embodiments without creative labor, which belongs to the protection scope of the present disclosure.

In the description of the present disclosure, it should be understood that, terms such as "central", "longitudinal", "lateral", "front", "rear", "right", "left", "horizontal", "vertical" , "top", "bottom", "inner", "outer" should be construed to refer to the orientation as then described or as shown in the drawings under discussion. These relative terms are for convenience of description and do not require that the present disclosure be constructed or operated in a particular orientation. In addition, terms such as "first" and "second" are used herein for purposes of description and are not intended to indicate or imply relative importance or significance or to imply the number of indicated technical features.

In the description of the present disclosure, it should be understood that, unless specified or limited otherwise, the terms "mounted", "connected", "coupled", are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

Embodiments of the present disclosure will be further described in detail with reference to drawings below.

### Embodiment 1

This embodiment provides a communication system.

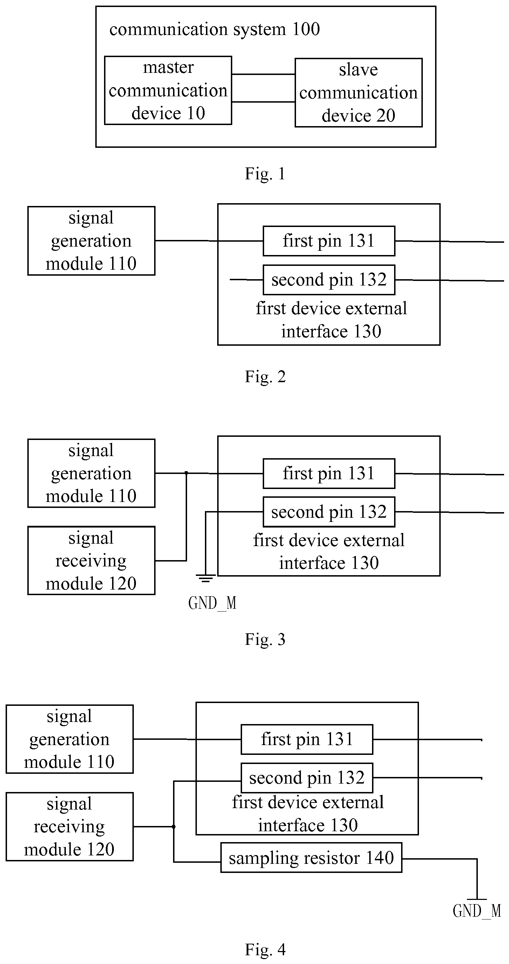

Fig. 1 is a block diagram illustrating a communication system according to an embodiment of the present disclosure. As illustrated in Fig. 1, the communication system 100 includes a master communication device 10 and a slave communication device 20. A third external interface of the slave communication device 20 is connected to a first external interface of the master communication device 10. The third external interface of the slave communication device 20 consists of two pins. The first external interface of the master communication device 10 also consists of two pins. The master communication device 10 and the slave communication device 20 realize data communication via respective two pins.

Fig. 2 is a block diagram illustrating a master communication device 10 according to an embodiment of the present disclosure. As illustrated in Fig.2, the master communication device 10 includes a signal generation module 110 and a first external interface 130. The first external interface 130 consists of a first pin 131 and a second pin 132. The signal generation module 110 is electrically connected to the first pin 131. The signal generation module 110 is configured to generate X signals according to time interval corresponding to an N-bit string to be sent. The time interval corresponding to the N-bit string to be sent represents time interval between start times of each two adjacent signals of the X signals. Different bit strings correspond to different time intervals respectively. N≥1, X≥1, and X is a natural number. The first external interface 130 is configured to send the X signals via the first pin 131.

As an alternative implementation of this embodiment of the present disclosure, the signal generation module 110 may obtain a correspondence relationship between time interval and each one of 2^{N} N-bit strings. The 2^{N} bit strings are different from each other, and different bit strings correspond to different time intervals respectively, where N≥1. For example, when N=1, two 1-bit strings each are bit string 0 and bit string 1. The time interval corresponding to the bit string 0 is T+t1 and the time interval corresponding to the bit string 1 is T+t2, where t1 is not equal to t2. When N=2, four 2-bit strings each are bit string 00, bit string 01, bit string 10 and bit string 11, respectively corresponding to time intervals T+t3, T+t4, T+t5, T+t6, in which t3, t4, t5, and t6 are different from each other. When N is equal to 3 or larger than 3, the bit strings can be obtained by referring to the case when N=2, which is not elaborated herein. After that, the N-bit string to be sent can be obtained, and then the time interval corresponding to the N-bit string to be sent can be determined according to the correspondence relationship between time interval and each of the N-bit strings.

In an alternative implementation of this embodiment of the present disclosure, the N-bit string (i.e. N-bit data) includes 2^{N} different values. For example, when N=1, 1-bit data includes two different values, which are 0 and 1 respectively. When N=2, 2-bit data includes four different values, which are 00, 01, 10 and 11. Obtaining the correspondence relationship between the time interval and each of 2^{N} N-bit strings may be interpreted as follows. When N=1, the time interval corresponding to bit string 0 is obtained, and the time interval corresponding to bit string 1 is obtained. When N=2, the time interval corresponding to bit string 00 is obtained, the time interval corresponding to bit string 01 is obtained, the time interval corresponding to bit string 10 is obtained, and the time interval corresponding to bit string 11 is obtained. Different bit strings correspond to different time intervals. For example, time intervals respectively corresponding to bit strings 00, 01, 10 and 11 are different from each other. Certainly, when N is other values, the above interpretation is applicative, which is not elaborated herein.

In an alternative implementation of this embodiment of the present disclosure, when the signal generation module 110 generates the X signals, the signal generation module 110 may generate X low level pulses or X high level pulses. The low level pulse or the high level pulse may be denoted by a wave form that can distinguish low and high level pulses, such as a square wave, a sine wave, a triangle wave and the like, which is not limited herein. The slave communication device 20, as a receiving terminal, may determine received bit data according to time intervals of detected low level pulses or detected high level pulses. In this embodiment, the signal generation module 110 generating X low level pulses is taken as an example for description, for a case of the high level pulse, it is similar to that of the low level pulse, such that reference can be made to implementation of the low level pulse.

Thereby, with the master communication device 10 provided in embodiments of the present disclosure, when data is sent, the X signals generated by the signal generation module 110 may make the first pin 131 output X low level pulses or X high level pulses, and then corresponding bit data is sent, thus realizing data sending of the two-line communication device.

In an alternative implementation of this embodiment of the present disclosure, as illustrated in Fig. 3, the master communication device 10 further includes a signal receiving module 120 connected to the first external interface 130. The first external interface 130 is further configured to receive Y signals. The signal receiving module 120 is configured to detect the Y signals received by the first external interface 130, and to obtain a bit string transmitted in each continuous L time intervals in Y-1 time intervals of the Y signals according to a bit string corresponding to a single time interval in the continuous L time intervals in the Y-1 time intervals. In a case of L>1, respective time intervals in the L time intervals are the same, where Y and L are positive integers, and L≤Y-1.

In an alternative implementation of this embodiment of the present disclosure, the signal receiving module 120 obtains a value corresponding to a single time interval in each continuous L time intervals in the Y-1 time intervals, to obtain a value corresponding to the continuous L time intervals. The value corresponding to the continuous L time intervals is the value corresponding to the single time interval. The value is one of 2^{N} different values included in the N-bit string, i.e., in a case of L>1, in the Y-1 time intervals, respective time intervals in the continuous L time intervals are the same. A value of the N-bit string corresponding to a single time interval is the value corresponding to the L time intervals. For example, when seven signals are received, six time intervals are obtained, in which, there are continuous three same time intervals, it indicates that the sending terminal uses a plurality of same time intervals to represent a value of the N-bit string. The N-bit string corresponding to a single time interval in the three time intervals is obtained. Further, a value corresponding to the three time intervals is obtained. For example, N=2, the bit strings include 0 and 1, and a bit string corresponding to a single time interval is 0, then the value corresponding to the three time intervals is also 0. That is, by a way of repeating a plurality of same time intervals to represent a corresponding bit string, reliability of data receiving and sending is ensured. In a case of L=1, a value transmitted in one time interval is obtained.

In an alternative implementation of this embodiment of the present disclosure, receiving the Y signals by the first external interface 130 may be interpreted as detecting low level pulse for Y times or high level pulse for Y times. The low level pulse and/or the high level pulse may be denoted by a wave form that can distinguish low and high level pulses, such as a square wave, a sine wave, a triangle wave and the like, which is not limited herein.

In this embodiment, one of the two pins (the first pin 131 and the second pin 132) of the first external interface 130 may be electrically connected to the signal receiving module 120 in different implementations. In an alternative implementation of the present disclosure, as illustrated in Fig. 3, the first pin 131 is electrically connected to the signal receiving module 120, and the second pin 132 is connected to a ground end (GND_M). The first pin 131 is further configured to receive the Y signals. In this alternative embodiment, the second pin 132 may detect the low level pulse for Y times.

In another alternative implementation of this embodiment of the present disclosure, as illustrated in Fig. 4, the second pin 132 is electrically connected to the signal receiving module 120, and is configured to receive the Y signals. In this alternative implementation, the second pin 132 can detect the high level pulse for Y times. In this alternative implementation, as illustrated in Fig. 4, the master communication device 10 further includes a sampling resistor 140. One end of the sampling resistor 140 is connected to a connection point (which can also be called as junction) between the second pin 132 and the signal receiving module 120. Another end of the sampling resistor 140 is connected to the ground end (GND_M). Thereby, voltage on the sampling resistor 140 may be obtained according to current passing through the sampling resistor, and then the high/low level may be detected.

As an alternative implementation of embodiments of the present disclosure, the signal receiving module 120 includes a detection module (not illustrated) connected to one end of the sampling resistor 140. The detection module is configured to compare the voltage on the sampling resistor 140 with a reference voltage, and to output a high level or a low level according to a comparison result, such that Y times of high level pulse or Y times of low level pulse may be detected. In this alternative implementation, the detection module may be a comparator, a non-inverting input end (+) of the comparator is connected to one end of the sampling resistor 140, a reference voltage Vref is input into an inverting input end (-) of the comparator, and an output end of the comparator outputs the high level or low level. According to characteristics of the comparator, if input of the non-inverting input end is larger than that of the inverting input end, the high level is output, otherwise, the low level is output. Therefore, the signal receiving module 120 may detect the high level pulse for Y times or the low level pulse for Y times, and the corresponding N-bit string is determined according to time intervals of detected low level pulses or time intervals of detected high level pulses, thus realizing receiving of the bit data.

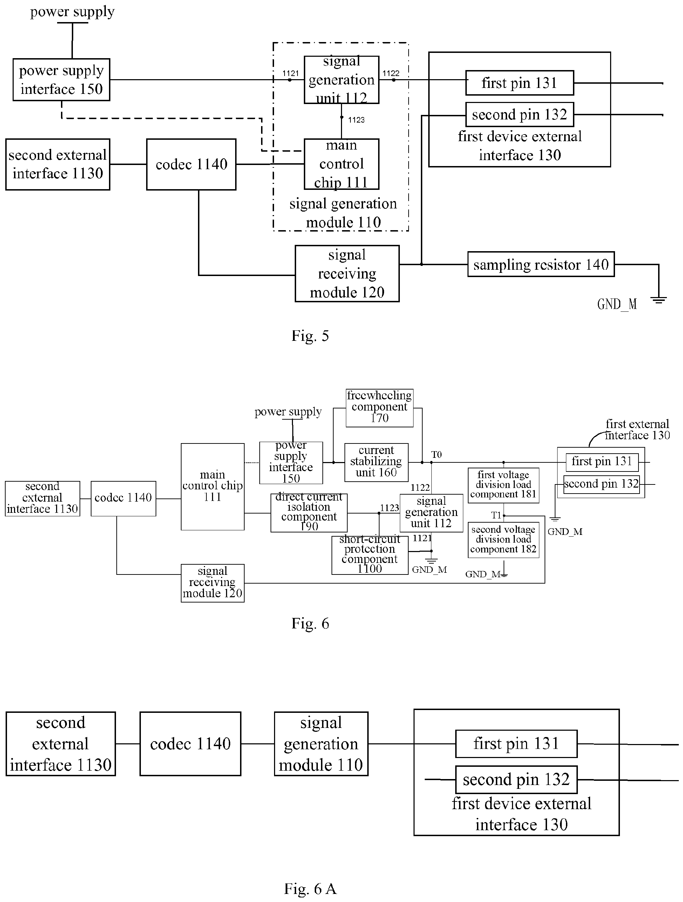

Base on Fig. 4, as an alternative implementation of this embodiment of the present disclosure, as illustrated in Fig. 5, the master communication device 10 may further include a power supply interface 150 connected to a power supply. The signal generation module 110 is connected between the power supply interface 150 and the first pin 131. Therefore, the power supply may supply power for the slave communication device 20 connected to the first external interface 130. The power supply may be an external power supply of the master communication device 10 or be an internal power supply of the master communication device 10. For example, the power supply may be an internal battery of the master communication device 10, or a continuous high level outputted by a main control chip of the master communication device 10 may be configured as the power supply, which is not limited herein.

In this alternative implementation, as illustrated in Fig. 5, the signal generation module 110 includes a main control chip 111 and a signal generation unit 112.

The main control chip 111 is connected to the signal generation unit 112. The main control chip 111 is configured to generate the X control signals according to the time interval corresponding to the N-bit string to be sent, and to output the X control signals to trigger the signal generation unit 112 to generate the X signals.

The signal generation unit 112 is arranged between the power supply interface 150 and the first pin 131. The signal generation unit 112 is configured to control a connection between the power supply interface 150 and the first pin 131 to be turned on or off under the control of the X control signals output by the main control chip 111, so as to generate the X signals, in which the time interval corresponding to the N-bit string to be sent represents time interval between start times of each two adjacent signals, where X≥1, and X is a natural number.

As an alternative implementation of embodiments of the present disclosure, the signal generation unit 112 includes: a first connection end 1121 electrically connected to the power supply interface 150, a second connection end 1122 electrically connected to the first pin 131, a control end 1123 connected to the main control chip 111. The control end 1123 is configured to control a connection between the first connection end 1121 and the second connection end 1122 to be turned on or off according to the X control signals output by the main control chip 111.

In this alternative implementation, the signal generation unit 112 may be a PMOS transistor. A source (S) electrode of the PMOS transistor is taken as the first connection end 1121 of the signal generation unit 112, a drain (D) electrode of the PMOS transistor is taken as the second connection end 1122 of the signal generation unit 112, and a grid (G) electrode of the PMOS transistor is taken as the control end 1123 of the signal generation unit 112. Certainly, the signal generation unit 112 may also be an NMOS transistor. Connections of respective electrodes of the NMOS transistor may be set with reference to the conduction condition of the NMOS transistor, which are not limited herein.

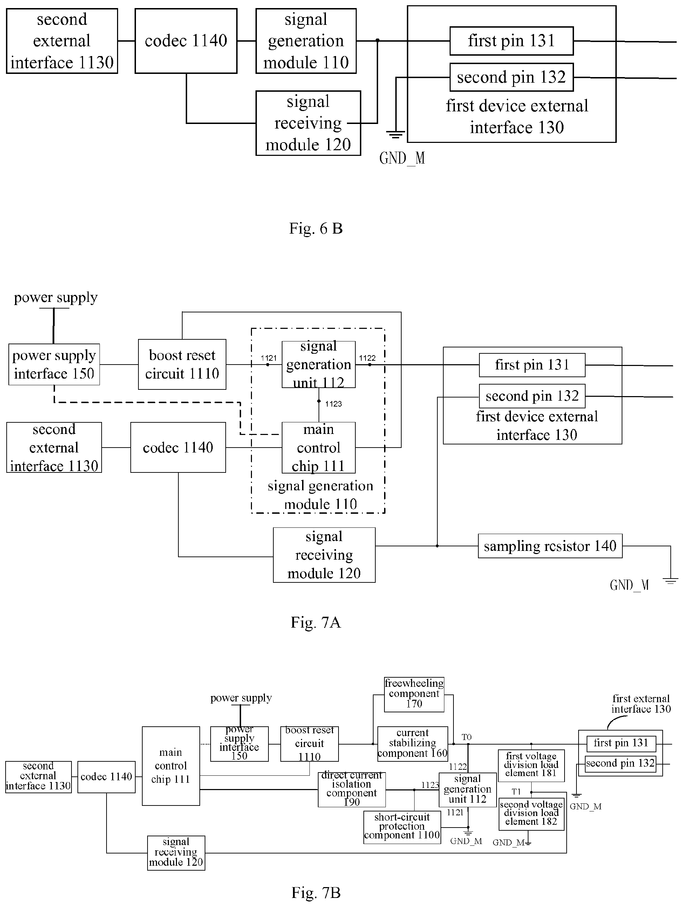

In another alternative implementation of this embodiment of the present disclosure, as illustrated in Fig. 6, the power supply interface 150 is electrically connected to the first pin 131. Therefore, the power supply may supply power for the slave communication device 20 connected to the first external interface 130. The power supply may be an external power supply of the master communication device 10 or be an internal power supply of the master communication device 10. For example, the power supply may be an internal battery of the master communication device 10, or a continuous high level output by a main control chip 111 of the master communication device 10 may be configured as the power supply, which is not limited herein.

In this alternative implementation, the signal generation unit 112 is arranged between the ground end (GND_M) and the first pin 131. A connection between the ground end (GND_M) and the first pin 131 may be controlled to be turned on or off by the X control signals output by the main control chip 111, such that the X signals are generated, in which the time interval corresponding to the N-bit string to be sent represents time interval between start times of each two adjacent signals, where X≥1, and X is a natural number.

As an alternative implementation of embodiments of the present disclosure, the signal generation unit 112 includes: a first connection end 1121 electrically connected to the ground end (GND_M), a second connection end 1122 electrically connected to the first pin 131, and a control end 1123 connected to the main control chip 111. The control end 1123 is configured to control a connection between the first connection end 1121 and the second connection end 1122 to be turned on or off according to the X control signals output by the main control chip 111.

In this alternative implementation, the signal generation unit 112 may be an NMOS transistor. A source (S) electrode of the NMOS transistor is taken as the first connection end 1121 of the signal generation unit 112, a drain (D) electrode of the NMOS transistor is taken as the second connection end 1122 of the signal generation unit 112, and a grid (G) electrode of the NMOS transistor is taken as the control end 1123 of the signal generation unit 112. Certainly, the signal generation unit 112 may also be a PMOS transistor. Connections of respective electrodes of the PMOS transistor may be set with reference to the conduction condition of the PMOS transistor, which are not limited herein.

In another alternative implementation of this embodiment of the present disclosure, as illustrated in Fig. 5 and Fig. 6, the power supply interface 150 may be electrically connected to the main control chip 111 (as denoted by the dotted line). Therefore, the power supply may supply power for the main control chip 111 and the master communication device 10. In addition, the power supply may also supply power for the slave communication device 20 connected to the first external interface 130.

As an alternative implementation of embodiments of the present disclosure, as illustrated in Fig. 6, the master communication device 10 may further include a current stabilizing component 160 connected between the power supply interface 150 and a connection point T0. As illustrated in Fig. 6, the connection point T0 is a junction connecting the signal generation unit 112 and the first pin 131. In a specific embodiment, as an alternative implementation, the current stabilizing component may include an inductor. The current stabilizing component may prevent break-variable of current of the circuit by using characteristics of the inductor. Thus other elements of the master communication device 10 may not be burnt when the signal generation unit 112 is in an on state with regard to the ground.

In addition, as an alternative implementation of embodiments of the present disclosure, as illustrated in Fig. 6, the master communication device 10 may also include a freewheeling component 170. A first end 171 of the freewheeling component 170 is electrically connected to the connection point T0. A second end 172 of the freewheeling component 170 is electrically connected to the power supply interface 150. The freewheeling component 170 may only be conducted from the first end 171 to the second end 172. In a specific embodiment, as an alternative implementation, the freewheeling component 170 may be a diode or other freewheeling elements, which is not limited in this embodiment. Taking the diode as an example, an anode of the diode is taken as the first end 171, and a cathode is taken as the second end 172. That is, the diode may be reversely connected in parallel to both ends of the inductor. When the signal generation unit 112 is switched to an off state from an on state, electromotive force between the two ends of the inductor in the current stabilizing component does not disappear immediately, voltage at the connection point T0 is not stable, and there is oscillation (glitch) at crests or troughs of a wave form. In addition, residual electromotive force may apply reverse voltage to the elements in the circuit, thus damaging the elements. While the diode (a diode having this function is called as the freewheeling diode) reversely connected in parallel to both ends of the inductor may release the residual electromotive force, thus protecting the safety of other elements in the circuit. Further, with the freewheeling component, the oscillation at the fast falling edge can be eliminated (i.e., a smooth waveform is obtained), thus smooth voltage is output (i.e., a high level or a low level).

As an alternative implementation of embodiments of the present disclosure, as illustrated in Fig. 6, the master communication device 10 may further include a first voltage division load component 181 and a second voltage division load component 182. The first voltage division load component 181 and the second voltage division load component 182 are connected in series between the connection point T0 and the ground end. The first voltage division load component 181 is connected between the connection point T0 and the second voltage division load component 182. The signal receiving module 120 is electrically connected to the connection point T0 via the first voltage division load component 181. As an alternative implementation, the first voltage division load component 181 and the second voltage division load component 182 may be resistors or other load components, which are not limited herein.

As illustrated in Fig. 6, the second voltage division load component 182 is connected between the ground end and the first voltage division load component 181. The signal receiving module 120 is connected to a connection point T1 between the first voltage division load component 181 and the second voltage division load component 182, so as to detect voltage at the connection point T1. In a specific embodiment, a supply voltage of the power supply may not be the same as a system detection voltage of the master communication device 10. For example, the supply voltage of the power supply is 5V, while a maximum detection voltage of a detection port can only be 3.5V. In this case, there is a need to make a maximum voltage input into the detection port be less than or equal to 3.5V by voltage division, so as to ensure that the detection port and the power supply are level-matched.

As illustrated in Fig. 6, as an alternative implementation of embodiments of the present disclosure, the master communication device 10 may further include a direct current isolation component 190. The direct current isolation component 190 is connected between the main control chip 111 and the signal generation unit 112. As an alternative implementation, the direct current isolation component 190 may be a capacitor or other components that can isolate the direct current, which is not limited herein. A direct current signal may be isolated by the direct current isolation component 190, such that it can prevent the control end of the main control chip 111 from outputting the high level for a long time due to wrong operations or other abnormal cases, thus preventing components from being burnt out caused by long time conducting state of a switch module.

As illustrated in Fig. 6, as an alternative implementation of embodiments of the present disclosure, the master communication device 10 may further include a short-circuit protection component 1100. The short-circuit protection component 1100 is connected in series between the first connection end 1121 and the third connection end of the signal generation unit 112. As an alternative implementation, the short-circuit protection component 1100 may be a resistor or other protection components, which is not limited herein. The short-circuit protection component 1100 can avoid, for example, a situation that the NOMS transistor is turned on due to abnormal charges accumulation at the G electrode of the NMOS transistor.

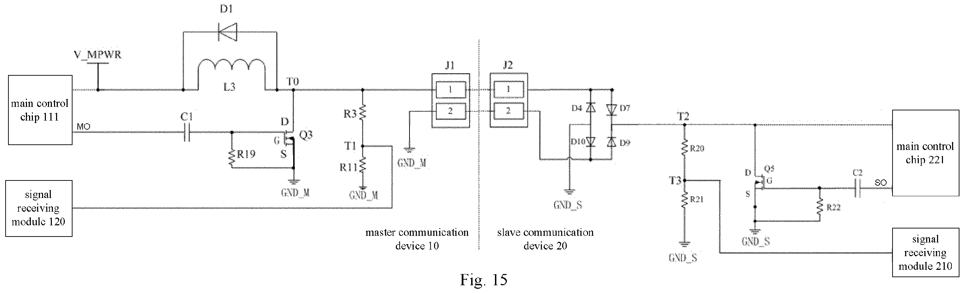

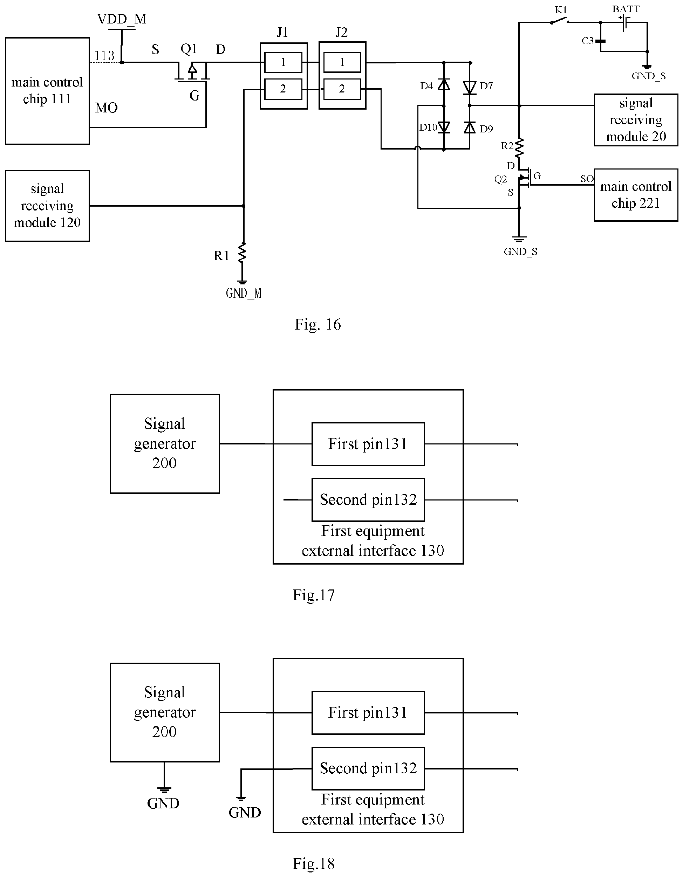

In detail, as a specific implementation, in embodiment 2, the master communication device 10 provided by the present disclosure is exemplarily illustrated. Fig. 15 is a schematic circuit diagram illustrating a communication system 100 according to embodiments of the present disclosure. With respect to circuit principle of the master communication device 10, reference may be made to detail description in embodiment 2. As another alternative implementation, in embodiment 3, the communication system 100 provided by the present disclosure is exemplarily illustrated. Fig. 16 is a schematic circuit diagram illustrating a communication system 100 according to embodiments of the present disclosure. With respect to circuit principle of the master communication device 10, reference may be made to detail description in embodiment 3.

As an alternative implementation of embodiments of the present disclosure, the master communication device 10 may further include a boost reset circuit 1110. The boost reset circuit 1110 may be connected between the power supply interface 150 and the first pin 131. Alternatively, the boost reset circuit 1110 may be connected between the power supply interface 150 and power supply. It aims to increase voltage output to the slave communication device 20 from the first pin 131, such that the voltage is high enough to supply power for or charge the slave communication device 20.

Specifically, as an optional implementation, on the basis of Fig. 5, the main communication device 10 may also include: a boost reset circuit unit 1110, as shown in Fig. 7A, the boost reset circuit unit 1110 can be connected between the third connection end 1121 of the power supply interface 150 and the signal generation unit 112 and connected with the master chip 111, as another optional implementation, as shown in Fig. 7B, The boost reset circuit unit 1110 can be connected between the power supply interface 150 and the connection point T0 and is connected to the master control chip 111 and configured to control the boost reset circuit unit 1110 into a working state or a non working state by a boost control signal output according to the main control chip 111.

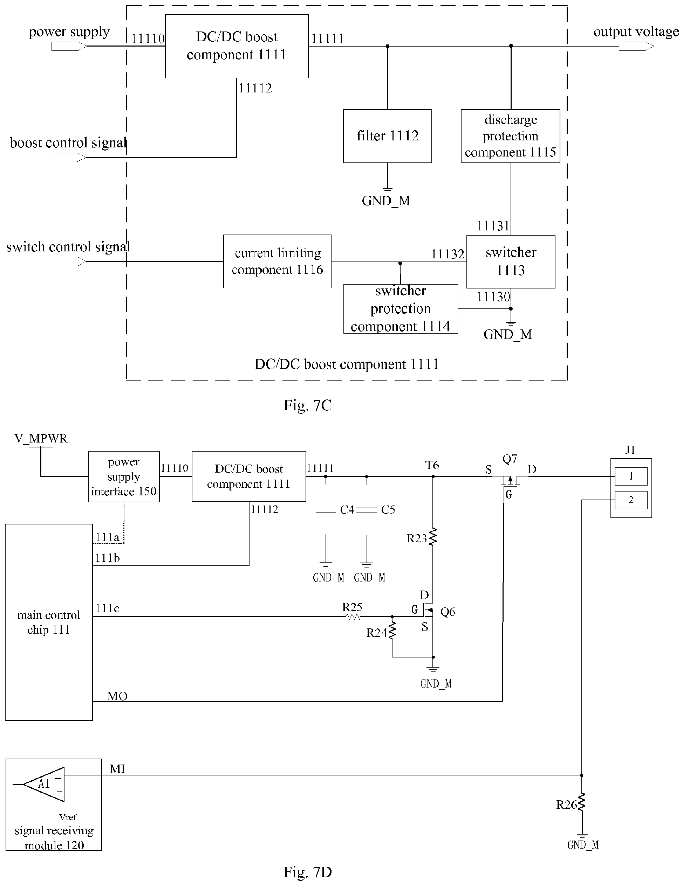

In specific implementation, as an alternative way, as illustrated in Fig. 7C, the boost reset circuit unit 1110 may include a DC/DC boost component 1111, and the DC/DC boost component 1111 includes an input end 11110, an electrical connection with the power supply interface 150, an output terminal 11111, a third connection end 1121 with a signal generating a single element 112 (a case of Fig. 7A) or an electrical connection with the connection point T0 (the case of Fig. 7B). And the control terminal 11112 is electrically connected with the main control chip 111 and is configured to control the DC/DC boost component 1111 into a working state or non working state by a boost control signal output according to the main control chip 111.

In this embodiment, in the normal state, the main control chip 111 will continue to send a boost control signal to the DC/DC boost component 1111, then the DC/DC boost component 1111 is in a working state, and when the DC/DC boost component 1111 is in a working state, the DC/DC boost component 1111 will boost the power supply voltage input to the input terminal 11110 in accordance with the boost control signal output by the main control chip 111. The output voltage of the end 11111 is higher than the power supply power supply; if the master control chip 111 does not send a boost control signal to the DC/DC boost component 1111, the DC/DC boost component 1111 is in a non operating state, and when the DC/DC boost component 1111 is in a non operating state, the output voltage of the output terminal 11111 of the DC/DC boost group 1111 is rapidly reduced to a low level, at this time, no matter the signal generation unit 112 of the first connection end 1121 and second connection end 1122 are turned on or off, and the first pin 131 will always output a low level signal; if the first pin 131 continues to output a low level of time to a preset time length (the preset length mainly control chip 111 does not send a single continuous time of the rise voltage control signal to the DC/DC boost component 1111), the continuous low level signal is a reset signal at this time. The master communication device 10 is in the reset state from the communication device 20, and the master communication device 10 can not send out the bit data to be output, and can not receive bit data sent from the communication device 20. Therefore, when the master communication device 10 detects a data transmission or receiving exception (for example, the response data that is not received in a valid time, etc.), the master and slave communication device can be started to enter the reset state by this way, that is, the master control chip 111 does not send a boost control signal to the DC/DC boost component 1111.

Thus, through the master communication device 10 provided in the embodiment of the present disclosure, the voltage of the power supply power supply voltage is controlled by the DC/DC boost component 1111 by the boost control signal output by the main control chip 111, so that the voltage of the input to the signal generation module 110 is the voltage supply after the boost, and the main control chip 111 does not output the boost control signal to start the master-slave through the main control chip 111. The function of the communication device to enter the reset state.

Further, as shown in Fig. 7C, the boost reset circuit unit 1110 may also include: a filter component 1112 connected between the end of the ground and the output end 11111 of the DC/DC boost component 1111; the filter component 1112 can effectively remove the burrs in the voltage signal after the boost of the DC/DC boost component 1111 and smooth the voltage signal. In the specific implementation, as an alternative, the filter component 1112 may include: the capacitance element, the number of the capacitive elements related to the specific model of the DC/DC boost component 1111, and the present embodiment is not limited.

Since the filter component 1112 will store electrical energy in the working state of the DC/DC boost component 1111, the filter component 1112 will gradually discharge when the DC/DC boost component 1111 is transformed from the working state to the non working state, and the output voltage is gradually reduced to zero, accordingly, the voltage signal of the first pin 131 output is also gradually changed from high to low, which is to be from high electricity. The process of converting to low level also takes a certain length of time. Thus, the time of the first pin 131 continuously output low level signal will be less than the preset time length, and the continuous low level signal may not be recognized as a reset signal from the communication device 20. To avoid this, the filter component 1112 should be discharged quickly so that the first 131 output continuous output low level is basically equal to the preset time length, so that, in order to enable the filter component 1112 to be able to discharge quickly, the boost reset circuit 1110, as shown in Fig. 7C, can also include: the off module 1113, which is connected to the ground end. In connection with the output end 11111 of the DC/DC boost component 1111, and connected with the master control chip 111; the off module 1113 receives a off control signal transmitted by the main control chip 111, disconnecting or conducting a path between the end of the ground end and the output 11111 under the control of the off control signal, by which the DC/DC boost component 1111 is transformed from a working state to a non working state, that is, the main control core. When the chip 111 stops sending the boost control signal to the DC/DC boost component 1111, the main control chip 111 sends a off control signal to the off module 1113 to control the path between the pass end 1113 guide end and the output 11111, so that both ends of the filter component 1112 are grounded, forming a back path, using the low block load in the circuit to discharge the electricity, and accelerating the electricity stored in the filter component 1112. The speed of release can speed up the initialization speed of the master communication device 10.

Further, as shown in Fig. 7C, the off block module 1113 includes: the first connection end 11130, an electrical connection with the ground end; the second connection end 11131, 11111 electrical connections with the output end; and the control terminal 11132, connected with the main control chip 111, and configured to control the first connection end 11130 and second connection end 11131 opening or conducting by a off control signal output according to the main control chip 111.

Further, the off block module 1113 may be an NMOS tube, which is a source (S) as the first connection end 11130 of the off module, and its drain (D) is the second connection end 11131 of the off module, and the gate (G) is the control end 11132 of the off module. The following description is illustrated in the example of the NMOS module, which is the on-off module 1113. Of course, the channel module 1113 can also be a PMOS tube, a diode or a triode, and each end connection is set with reference to a PMOS tube, a diode or a transistor, where no restriction is made.

Further, as shown in Fig. 7C, the boost reset circuit unit 1110 may also include: a off module protection module 1114 connected between the first connection end 11130 of the connection module 1113 and the control end 11132; as an alternative, the off module protection component 1114 may be a resistance or other protection component, and this embodiment is not limited. Through the on-off module protection component 1114, for example, the G pole of the NMOS tube can be prevented from causing abnormal charge accumulation by the MOS conduction breakdown, thus the on-off module protection component provided by the present embodiment can prevent the accidental burnout of the connection module 1113.

Further, as shown in Fig. 7C, the boost reset circuit unit 1110 may also include: a discharge protection component 1115 connected between the second connection end 11131 and the output end 11111 of the off module 1113; as an alternative, the discharge protection component 1115 may be a resistor or other protection component, and this embodiment is not limited. When the blocking module 1113 is a MOS tube, because the conduction resistance of the MOS is very small, it is usually only a few milliohm to zero ohms, and the method of discharging the capacitor at both ends of the shunt capacitor is equivalent to the short circuit discharge, and it is very easy to burn out the MOS tube. Therefore, the resistance of a few ohms in series between the drain pole of the MOS tube and the capacitor positive pole is then parallel to the capacitance, and then MOS plays the role of switching. The electric time is almost unaffected, which reduces the requirement for MOS pipe.

Further, as shown in Fig. 7C, the boost reset circuit unit 1110 may also include: a current limiting component 1116 connected between the control end 11132 of the off module 1113 and the main control chip 111; as an alternative, the current limiting component 1116 may be a resistor or other depletion component, and this actual application is not limited. Using the pressure drop on the current limiting component 1116, the voltage on the load after the current limiting component is reduced and the current is limited in a certain range, thereby reducing the power consumption of the circuit.

As an alternative implementation of the embodiment of the present disclosure, the boost reset circuit unit 1110 in the master communication device 10 can also be set between the power supply interface 150 and the power supply (an internal power supply interface of the communication device for the power supply interface), and the boost reset circuit unit 1110 also needs to be connected to the master chip 111 to receive a control signal of the main control chip 111; In the specific implementation, as an alternative, the boost reset circuit unit 1110 may use the structure of the boost reset circuit unit as shown in Fig. 7C, the internal structure of the boost reset circuit unit 1110 and the working principle can refer to the body description of the figure 7C in the present embodiment, which is no longer described here.

The aim of the optional implementation with the boost reset circuit unit is to increase the first pin 131 to the voltage from the communication device 20 so that a high enough voltage is supplied or charged from the communication device 20 so that the minimum input voltage of some components in the communication device 20 can not be reached as a result of the power loss or voltage reduction in the circuit. Occurs, and provides reset function for the master communication device 10.

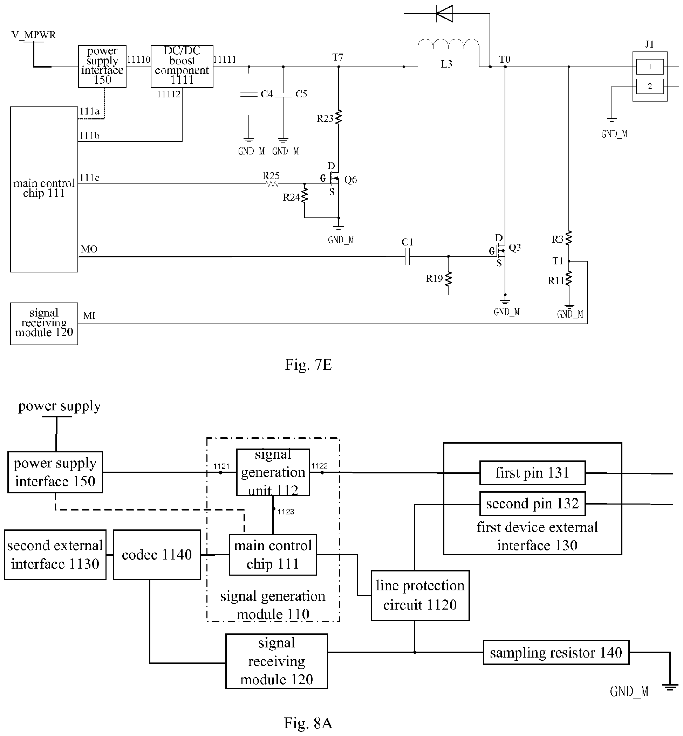

Specifically, as a specific implementation, in the embodiment 4, an example is made to illustrate the case with a boost reset circuit unit 1110 provided in the master communication device 10 provided by the present disclosure, and Fig. 7D and Fig. 7E are an electrical circuit schematic of an optional master communication device 10 according to an embodiment of the present disclosure, respectively, for a specific description in the implementation case 4.

As an alternative implementation of embodiments of the present disclosure, the master communication device 10 may further include a line protection circuit 1120. The line protection circuit 1120 may be connected in series between a first component and a second component. The first component and the second component may have composition forms as follows. The first component is the signal generation module 110, and the second component is the first pin 131. Alternatively, the first component is the power supply interface 150, and the second component is the signal generation module 110. Alternatively, the first component is the power supply interface 150, and the second component is the first pin 131. Alternatively, the first component is the power supply interface 150, and the second component is the current stabilizing component 160 or the freewheeling component 170. Alternatively, the first component is the current stabilizing component 160 or the freewheeling component 170, and the second component is the first pin 131. Alternatively, the first component is the power supply interface 150, and the second component is the boost reset circuit 1110. Alternatively, the first component is the boost reset circuit 1110, and the second component is the current stabilizing component 160 or the freewheeling component 170. Alternatively, the first component is the boost reset circuit 1110, and the second component is the signal generation module 110. Alternatively, the first component is the ground end (GND_M), and the second component is the second pin 132. Alternatively, the first component is the ground end (GND_M), and the second component is a sampling resistor 140. Alternatively, the first component is the sampling resistor 140, and the second component is the second pin (GND_M).

That is to say, in Fig. 7A, the circuit protection circuit unit 1120 can be connected in series between any two adjacent components between the power supply interface 150 and the first pin 131, and in Fig. 7B, the line protection circuit unit 1120 may be in series between any two adjacent components between the ground end GND_M and the second pin 132.

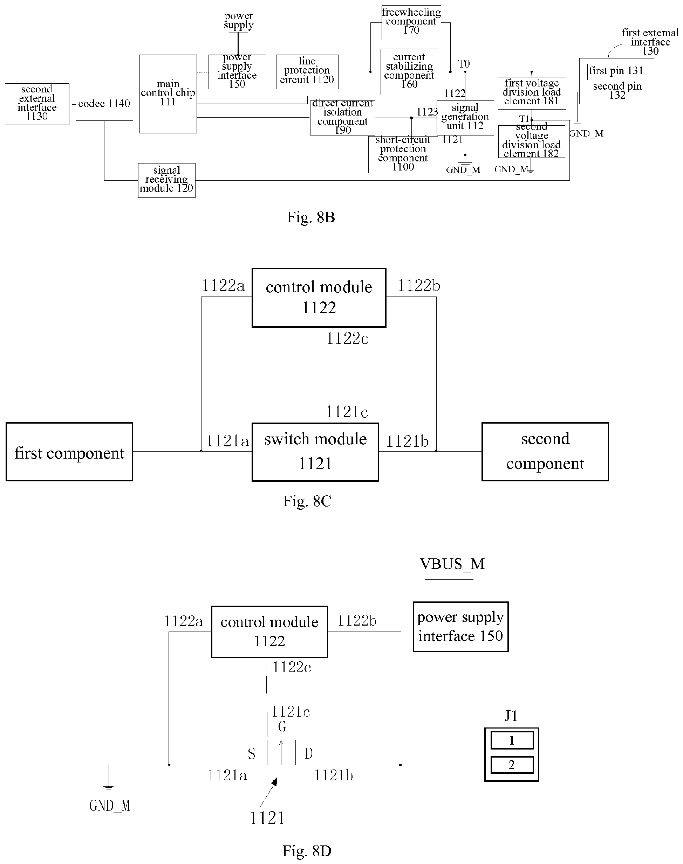

For example, as an optional implementation, on the basis of Fig. 5, the circuit protection circuit unit 1120 can be connected between the ground end and the second pin and is connected to the main control chip 111, as shown in Fig. 8A; as an alternative embodiment, the boost reset circuit unit 1110 can also be connected between the power supply interface 150 and the steady flow component 160 on the basis of the figure 6, and with the master control. The chip 111 connection is shown in figure 8B, and is configured to turn on or turn off the switch module in the boost reset circuit unit 1110. Of course, this embodiment only takes figure 8A and figure 8B as an example, and does not exclude other ways of connecting the above line protection circuit unit 1120 in series between the first component and the second component. The switch module of the line protection unit may be turned off when the master communication device or the circuit in the communication device connected to the master communication device is short, and thus the circuit of the host communication device is broken, thereby avoiding the components in the circuit when the circuit in the communication device is short circuited by the master communication device or the master communication device is too large because of the excessive current on the line. Burn it out.

In specific implementation, as an alternative, as shown in Fig. 8C, the circuit protection circuit unit 1120 may include: the switch module 1121 and the control module 1122; the switch module 1121 includes the fifth connection end 1121A, the sixth connection end 1121b and the controlled port 1121c, and the control module 1122 includes the first detection port 1122a, the second detection port 1122b, and the control port 1122c. The first detection port 1122a and the fifth connection end of the switch module 1121 are 1121A electrically connected, the second detection port 1122b is connected with the sixth connection end of the switch module 1121, the control port 1122c and the controlled port 1121c electrical connection of the switch module 1121; the fifth connection end 1121A is electrically connected with the first component, and the sixth connection end 1121b and the second component are electrically connected.

The control module 1122 is used to detect the first level V1 of the fifth connection end 1121A of the switch module 1121 through the first detection port 1122a by the first detection port 1122a, and the second level V2 of the sixth connection end 1121b of the switch module 1121 through the first detection port 1122a by the first detection port 1122a, and the difference between the second level V2 and the first level V1 to satisfy the line guarantees. When the trigger condition is protected, the first control signal is output by the control port 1122c to the controlled port 1121c of the switch module 1121, which is used to control the switch module 1121 to disconnect the fifth connection end 1121A and the sixth connection end 1121b.

In an optional implementation, the line protection triggering condition is that the difference between the second level V2 and the first level V1 is greater than the preset value, that is, when the level satisfies V2 - V1 > VF, the line protection is triggered, in which the VF is a preset value. Thus, the control module 1122 determines whether the current on the circuit is too large by detecting the difference between the two ends of the switch module 1121, and when the current is too large (i.e. the difference of the level is greater than the preset value), the control module 1122 outputs the first control signal to the switch module 1121 to disconnect the fifth connection end 1121A and sixth connection end 1121b of the switch module 1121, so as to short circuit when the line is short circuited. Line protection prevents the main components in the communication equipment from the master communication device or the main communication device, and is burnt out because of the excessive current on the line.

Alternatively, the control module 1122 is also used to output a second control signal to the controlled port 1121c of the switch module 1121 through the control port 1122c in the disconnected state of the fifth connection end 1121A and the sixth connection end 1121b of the switch module 1121, which is used to control the switch module 1121 to guide the fifth connection end 1121A and the sixth connection end 1121b. After the fifth connection end 1121A and the sixth connection end 1121b conduction, the control module 1122 detects the first level V1 of the fifth connection end 1121A of the switch module 1121 through the first detection port 1122a, and detects the second level V2 of the sixth connection end 1121b of the switch module 1121 through the second detection port 1122b, if the difference between the second level V2 and the first level V1 is not satisfied with the line protection trigger condition. (i.e., V2 - V1 < VF, where VF is a preset value), the short circuit exception in the circuit connected by the circuit protection circuit unit 1120 has disappeared, at this time, the fifth connection end of the switch module 1121, 1121A and the sixth connection end 1121b maintains the conduction state; otherwise, the difference between the second level V2 and the first level V1 satisfies the line protection triggering condition (i.e. V2 V1 > VF, wherein VF) For the preset value, the first control signal is output to the controlled port 1121c of the switch module 1121 by the control port 1122c, which is used to control the switch module 1121 to disconnect its fifth connection end 1121A and the sixth connection end 1121b, so that the line protection circuit unit 1120 is in a disconnected state. With the technical scheme provided by this implementation, the control module 1122 outputs the second control signal to the switch module 1121 when the circuit protection circuit unit 1120 is disconnected, so that the switch module 1121 reenters the state of the conduction and again determines whether the difference between the second level V2 and the first level V1 satisfies the line protection triggering condition and does not meet the trigger conditions for the line protection, After the abnormal recovery in the circuit connected by the circuit protection circuit unit 1120, the control module 1122 outputs the second control signal continuously to the switch module 1121, and the control switch module 1121 leads the fifth connection end 1121A and the sixth connection end 1121b, thereby restoring the circuit protection circuit unit 1120 from the disconnected state to the conduction state.

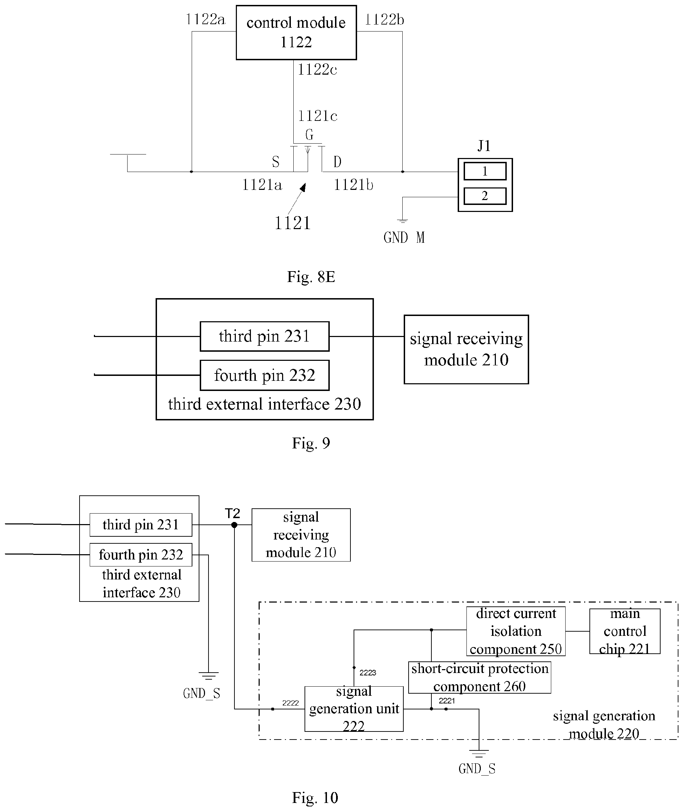

Specifically, as a specific implementation, in example 5, the case of the master communication device 10 provided with the line protection circuit unit 1120 provided by the present disclosure is illustrated with examples, and Fig. 8D and Fig. 8E are an electrical circuit schematic of an optional master communication device 10 according to the embodiment of the present disclosure, and refer to a specific description in the implementation case 5.

As an alternative implementation of embodiments of the present disclosure, the master communication device 10 may be taken as an adapter device. Based on Fig. 2, the adapter device may further include a second external interface 1130 and a codec 1140. As illustrated in Fig. 6A, one end of the codec 1140 is connected to the second external interface 1130, and the other end of the codec 1140 is connected to the signal generation module 110. The second external interface 1130 is configured to receive first data sent from an external terminal. The codec 1140 is configured to decode the first data according to a protocol supported by the second external interface 1130, to obtain the N-bit string to be sent, and to send the N-bit string to be sent to the signal generation module 110.

In detail, the second external interface 1130 may be a universal interface in the related art, including a wireless interface and a wired interface, such as, a USB interface, an audio interface, a serial port, Bluetooth, WiFi, NFC, and the like. An adapter device may be connected to the external terminal via the second external interface 1130, so as to receive the first data sent from the external terminal. The external terminal may be a mobile phone, a computer, a PAD, and the like. The transport protocol supported by the second external interface 1130 varies depending on interface type of the second external interface 1130. The second external interface 1130 may decode the received first data by using the protocol supported by the second external interface 1130. For example, the second external interface 1130 may decode the first data according to a USB protocol, an audio protocol, a serial port protocol, a Bluetooth protocol, a WiFi protocol, an NFC protocol, and the like, to obtain the bit string corresponding to the first data, i.e. the N-bit string to be sent. By performing data conversion, the second external interface 1130 can convert the data sent from the external terminal into data suitable for transmitting in this embodiment, thus realizing conversion between different interfaces and extending application scope of this embodiment.

As an alternative implementation of this embodiment of the present disclosure, the master communication device 10 may be taken as an adapter device. Different from the embodiment illustrated in Fig. 6A, in this embodiment, after the data is received by the first external interface 130, the data is sent to the codec 1140 for decoding, and then sent out via the second external interface 1130. Based on Fig. 3 and Fig. 6A, the codec 1140 in the adapter device is further connected to the signal receiving module 120, as illustrated in Fig. 6B. The codec 1140 is further configured to receive the bit string transmitted in L time intervals sent by the signal receiving module 120, to encode the bit string transmitted in the L time intervals according to the protocol supported by the second external interface 1130 to obtain second data. The second external interface 1130 is further configured to send the second data to the external terminal.

As an alternative implementation of embodiments of the present disclosure, as illustrated in Fig. 5, Fig. 6, Fig. 7A, Fig. 7B, Fig. 8A, and Fig. 8B, when the master communication device 10 is taken as an adapter device, the adapter device may further include a second external interface 1130 and a codec 1140. One end of the codec 1140 is connected to the second external interface 1130, and the other end of the codec 1140 is connected to the main control chip 111 of the signal generation module 110 and the signal receiving module 120.

When the adapter device receives data from the second external interface 1130, and sends out the data via the first device communication interface 130, the second external interface 1130 is configured to receive the first data sent from an external terminal. The codec 1140 is configured to decode the first data according to a protocol supported by the second external interface 1130 to obtain the N-bit string to be sent, and to send the N-bit string to be sent to the main control chip 111 of the signal generation module 110.

When the adapter device receives data from the first device communication interface 130, and sends out the data via the second external interface 1130, the codec 1140 is further configured to receive the bit string corresponding to L time intervals sent by the signal receiving module 120, to encode the bit string corresponding to the L time intervals according to the protocol supported by the second external interface 1130 to obtain second data. The second external interface 1130 is further configured to send the second data to the external terminal.

In the above-mentioned implementations, the second external interface 1130 may be a universal interface in the related art, including a wireless interface and a wired interface, such as, a USB interface, an audio interface, a serial port, Bluetooth, WiFi, NFC, and the like. A data transmission device may be connected to the external terminal via the second external interface 1130, so as to receive the first data sent from the external terminal. The external terminal may be a mobile phone, a computer, a PAD, and the like. The transport protocol supported by the second external interface 1130 varies depending on interface type of the second external interface 1130. The second external interface 1130 may decode the received first data by using the protocol supported by the second external interface 1130. For example, the second external interface 1130 may decode the first data according to a USB protocol, an audio protocol, a serial port protocol, a Bluetooth protocol, a WiFi protocol, an NFC protocol, and the like, to obtain the bit string corresponding to the first data, i.e. the N-bit string to be sent. By performing data conversion, the second external interface 1130 can convert the data sent from the external terminal into data suitable for transmitting in this embodiment, thus realizing conversion between different interfaces and extending application scope of this embodiment.

As an alternative implementation of embodiments of the present disclosure, the master communication device 10 may be a device capable to communicate with the slave communication device 20, such as a PC, a PAD (a tablet computer), a smart phone, a smart wearable device, and the like. Alternatively, the master communication device 10 may be an adapter device controlled by an external terminal. The communication system 100 may further include an external communication terminal. Under the control of the external communication terminal, the master communication device 10 which is taken as the adapter device transmits bit data with the slave communication device 20. In this case, the external communication terminal may be a master control device such as a PC, a PAD (tablet computer), a smart phone, a smart wearable device, and the like. The master communication device 10 is electrically connected to the communication terminal via the second external interface. The codec may perform corresponding transport protocol conversion on the bit data to be sent which is output from the external terminal to the master communication device 10 via the second external interface, and then input it into the main control chip. The main control chip outputs corresponding control signals according to obtained bit data to be sent, so as to control the master communication device 10 to transmit the bit data to be output to the slave communication device 20. At the same time, the main control chip may perform, via the codec, corresponding transport protocol conversion on the bit data received from the slave communication device 20, and then output it to the external communication terminal via the second external interface, thus realizing communication between a non-two-line device and a two-line device.

Thereby, with the master communication device 10 provided in embodiments of the present disclosure, when the data is sent, the level at the connection point T0 may be controlled by the signals generated by the signal generation module 110, such that the level of the first pin 131 changes (such as generating a high level pulse or a low level pulse), and then corresponding bit data is transmitted. When the data is received, the level of the first pin 131 or the second pin 132 may be detected via the signal receiving module 120, the main control chip 111 may obtain corresponding bit data according to the level changes continuously detected by the signal receiving module 120, and two-line communication between the master communication device 10 and the slave communication device 20 can be realized. In addition, the power supply interface 150 may be electrically connected to the first pin 131, the power supply may supply power for the slave communication device 20 connected to the first external interface 130. Thus the master communication device 10 may continuously supply power for the slave communication device 20. Therefore, with this embodiment, it can guarantee that the master communication device can supply power for the slave communication device at the same time when the two-line communication is performed between the master communication device and the slave communication device.

Fig. 9 to Fig. 12 are block diagrams illustrating a slave communication device 20 provided in embodiments of the present disclosure. As an alternative implementation of embodiments of the present disclosure, as illustrated in Fig. 9, the slave communication device 20 includes a signal receiving module 210 and a third external interface 230. The third external interface 230 is composed of a third pin 231 and a fourth pin 232. The signal receiving module 210 is electrically connected to the third pin 231 of the third external interface 230. The third external interface 230 is configured to receive W signals via the third pin 231. The signal receiving module 210 is configured to detect the W signals received by the third pin 231, and to obtain a bit string corresponding to each continuous L time intervals in W-1 time intervals of the W signals according to a bit string corresponding to a single time interval in the continuous L time intervals in the W-1 time intervals. In a case of L>1, respective time intervals in the L time intervals are the same, where W and L are positive integers, and L≤W-1.

As an alternative implementation of this embodiment of the present disclosure, the signal receiving module 210 obtains a value corresponding to a single time interval in each continuous L time intervals in the W-1 time intervals, to obtain a value corresponding to the L time intervals. The value corresponding to the L time intervals is the value corresponding to the single time interval. The value is one of 2^{N} different values included in the N-bit string, i.e., in a case of L>1, in the W-1 time intervals, respective time intervals in the continuous L time intervals are the same. A value of the N-bit string corresponding to a single time interval is the value corresponding to the L time intervals. For example, seven signals are received, and six time intervals are obtained, in which, three continuous time intervals are the same, i.e., the sending terminal uses a plurality of same time intervals to represent a value of N-bit data. N-bit data corresponding to a single time interval in the three time intervals is obtained. Further, a value transmitted in the three time intervals is obtained. For example, N=2, the bit strings include 0 and 1, and a bit string corresponding to a single time interval is 0, then the value corresponding to the three time intervals is also 0. That is, by a way of repeating a plurality of same time intervals to represent a corresponding bit string, reliability of data receiving and sending is ensured. In a case of L=1, a value transmitted in one time interval is obtained.

In an alternative implementation of this embodiment of the present disclosure, receiving the W signals by the third external interface 230 may refer to detecting low level pulse for W times or high level pulse for W times. The low level pulse or the high level pulse may be denoted by a wave form that can distinguish the low and high level pulse, such as a square wave, a sine wave, a triangle wave and the like, which is not limited herein.

Thereby, with the slave communication device 20 provided in embodiments of the present disclosure, when the data is received, the signal receiving module 210 may detect the low level pulse for Y times or the high level pulse for Y times, and a corresponding N-bit string is determined according to time intervals of low level pulses or high level pulses, thus realizing receiving of the bit data.

In an alternative implementation of this embodiment of the present disclosure, as illustrated in Fig. 10, the slave communication device 20 may further include a signal generation module 220 connected to the third external interface 230. The signal generation module 220 is configured to generate Z signals according to time interval corresponding to the N-bit string to be sent, in which the time interval corresponding to the N-bit string to be sent represents time interval between start times of each two adjacent signals, and different bit strings correspond to different time intervals respectively, where N≥1, Z≥1, and Z is a natural number. The third external interface 230 is further configured to send the Z signals.

As an alternative implementation of this embodiment of the present disclosure, familiar to principle of generating signals by the signal generation module 110 of the master communication device 10 in the embodiment illustrated in Fig. 2, the signal generation module 220 may firstly obtain a correspondence relationship between time interval and each of 2^{N} N-bit strings. The 2^{N} N-bit strings are different from each other, and different bit strings correspond to different time intervals respectively, where N≥1. And then, the signal generation module 220 obtains an N-bit string to be sent, so as to obtain the time interval corresponding to the N-bit string to be sent according to the correspondence relationship between the time interval and each of the N-bit strings.

In an alternative implementation of this embodiment of the present disclosure, when generating Z signals, the signal generation module 220 may generate Z low level pulses or Z high level pulses. The low level pulse or the high level pulse may be denoted by a wave form that can distinguish the low and high level pulse, such as a square wave, a sine wave, a triangle wave and the like, which is not limited herein. As a receiving terminal, the master communication device 10 may determine received bit data according to time intervals of detected low level pulses or detected high level pulses.

Thereby, with the slave communication device 20 provided in embodiments of the present disclosure, when data is sent, the Z signals generated by the signal generation module 220 may make the third pin 131 output Z low level pulses or Z high level pulses, and then corresponding bit data is transmitted, thus realizing data sending of the two-line communication device.

In this embodiment, one of the two pins (i.e., the third pin 231 and the fourth pin 232) of the third external interface 230 may be electrically connected to the signal generation module 220. In an alternative implementation of this embodiment of the present disclosure, as denoted by the solid line illustrated in Fig. 10, the third pin 231 is electrically connected to the signal generation module 220 and the fourth pin 232 is electrically connected to the ground end (GND_S). The third pin 231 is configured to send the Z signals. In this alternative implementation, the fourth pin 232 may output low level pulse for Z times.

In another alternative implementation of this embodiment of the present disclosure, the fourth pin 232 is electrically connected to the signal generation module 220, configured to send the Z signals. In this alternative implementation, the fourth pin 232 may output high level pulse for Z times. Thereby, by this way, the slave communication device 20 in embodiments of the present disclosure may realize data sending by using any pin of the third external interface 230.

In an alternative implementation of this embodiment of the present disclosure, as illustrated in Fig. 10, the signal generation module 220 includes a main control chip 221 and a signal generation unit 222.

The main control chip 221 is electrically connected to the signal generation unit 222, configured to generate the Z control signals according to the time interval corresponding to the N-bit string to be sent, and to output the Z control signals to trigger the signal generation unit 222 to generate Z signals.

The signal generation unit 222 is arranged between a ground end (GND_S) and a first connection point T2. The signal generation unit 222 is configured to control a connection between the ground end (GND_S) and the first connection point T2 to be turned on or off under the control of the Z control signals output by the main control chip 221, so as to generate the Z signals. The first connection point T2 is a junction where the third pin 231 is connected to an input end of the signal generation module 220 and an input end of the signal receiving module 210.

As an alternative implementation of embodiments of the present disclosure, the signal generation unit 222 includes a first connection end 2221, a second connection end 2222 and a control end 2223. The first connection end 2221 is connected to the ground end (GND_S). The second connection end 2222 is connected to the third pin 231. The control end 2223 is connected to the main control chip 221, and configured to control a connection between the first connection end 2221 and the second connection end 2222 to be turned on or off according to the Z signals output by the main control chip 221.

In this alternative implementation, the signal generation unit 222 may be an NMOS transistor. A source (S) electrode of the NMOS transistor is taken as the first connection end 2221 of the signal generation unit 222, a drain (D) electrode of the NMOS transistor is taken as the second connection end 2222 of the signal generation unit 222, and a grid (G) electrode of the NPMOS transistor is taken as the control end 2223 of the signal generation unit 222. Certainly, the signal generation unit 222 may also be a PMOS transistor. Connections of respective electrodes of the PMOS transistor may be set with reference to the conduction condition of the PMOS transistor, which are not limited herein.

As illustrated in Fig. 10, as an alternative implementation of embodiments of the present disclosure, the salve communication device 20 may further include a direct current isolation component 250. The direct current isolation component 250 is connected between the main control chip 221 and the signal generation unit 222. As an alternative implementation, the direct current isolation component 250 may be a capacitor or other components that can isolate the direct current, which is not limited herein. A direct current signal may be isolated by the direct current isolation component 250, such that it can prevent the control end of the main control chip 221 from outputting high level for a long time due to wrong operations or other abnormal cases, thus preventing components from being burnt out caused by long time conducting state of a switch module.

As an alternative implementation of embodiments of the present disclosure, as illustrated in Fig. 10, the slave communication device 20 may further include a short-circuit protection component 260. The short-circuit protection component 260 is connected in series between the first connection end 2221 and the third connection end of the signal generation unit 222. As an alternative implementation, the short-circuit protection component 260 may be a resistor or other protection components, which is not limited herein. The short-circuit protection component 260 may be a resistor or other protection components, which is not limited herein. The short-circuit protection component 260 can avoid, for example, a situation that the NMOS transistor is turned on due to abnormal charges accumulation at the G electrode of the NMOS transistor.

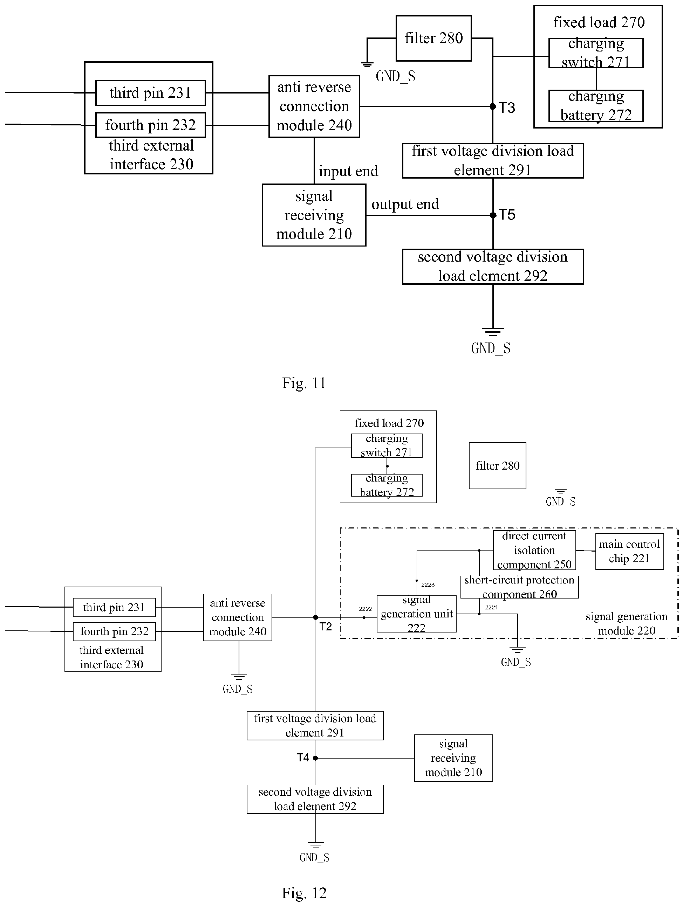

In an alternative implementation of this embodiment of the present disclosure, based on Fig. 9, the slave communication device 20 may further include an anti reverse connection module 240. As illustrated in Fig. 11, the anti reverse connection module 240 is electrically connected to the third external interface 230, and electrically connected to an input end and an output end of the signal receiving module 210. The anti reverse connection module 240 is configured to control a first connection between the input end of the signal receiving module 210 and one of the third pin 231 and the fourth pin 232 to be turned on, and to control a second connection between the output end of the signal receiving module 210 and the other one of the third pin 231 and the fourth pin 232 to be turned on. In detail, a current flow direction of the first connection is from the one of the third pin 231 and the fourth pin 232 to the input end of the signal receiving module 210. A current flow direction of the second connection is from the output end of the signal receiving module 210 to the other one of the third pin 231 and the fourth pin 232. The input end of the signal receiving module 210 refers to one end through which the current flows into, and the output end of the signal receiving module 210 refers to one end through which the current flows out.

In another alternative implementation of this embodiment of the present disclosure, based on Fig, 10, the slave communication device 20 further includes an anti reverse connection module 240. As illustrated in Fig. 12, the anti reverse connection module 240 is electrically connected to the third external interface 210, and electrically connected to an input end of the signal generation module 220 and an input end of the signal receiving module 210 respectively. An output end of the signal generation module 220 is electrically connected to a ground end (GND_S). An output end of the signal receiving module 210 is electrically connected to the ground end (GND_S) via a relatively large load (not illustrated). The anti reverse connection module 240 is connected to the ground end (GND_S). The anti reverse connection module 240 is configured to control a first connection between a first connection point T2 and one of the third pin 231 and the fourth pin 232 to be turned on (i.e., conduct the first connection between a first connection point T2 and one of the third pin 231 and the fourth pin 232), and to control a second connection between the ground end (GND_S) and the other one of the third pin 231 and the fourth pin 232 to be turned on. The first connection point T2 is a junction where the anti reverse connection module 240 is connected to the input end of the signal generation module 220 and the input end of the signal receiving module 210. In detail, a current flow direction of the first connection is from the one of the third pin 231 and the fourth pin 232 to the first connection point T2. A current flow direction of the second connection is from the ground end (GND_S) to the other one of the third pin 231 and the fourth pin 232. Each of the input ends of the signal receiving module 210 and the signal generation module 220 refers to one end through which the current flows into, and each of the outputs end of the signal receiving module 210 and the signal generation module 220 refers to one end through which the current flows out.

In Fig. 10, the signal generation unit 222 of the signal generation module 220 is arranged between the ground end and the first connection point T2. One end, connected to the first connection point T2, of the signal generation unit 222 is the input end of the signal generation module 222, and the other end, connected to the ground end, of the signal generation unit 222 is the output end of the signal generation module 222.

With the anti reverse connection module according to embodiments of the present disclosure, a function of anti reverse connection may be realized. That is, no matter the connections between the two pins of the third external interface 230 of the slave communication device 20 and the two pins of the first external interface 130 of the master communication device 10 are positive connections (i.e., the first pin 131 is connected to the third pin 231, and the second pin 231 is connected to the fourth pin 232) or reverse connections (i.e., the first pin 131 is connected to the fourth pin 232, and the second pin 231 is connected to the third pin 231), the master communication device 10 and the slave communication device 20 can communicate with each other. However, in the related art, only unilateral connection may be realized. For example, they can normally communicate only in the positive connection, while they cannot communicate in the reverse connection. Or, they can normally communicate only in the reverse connection, while they cannot communicate in the positive connection. In embodiments of the present disclosure, no matter the slave communication device is positively or reversely connected to the master communication device, the slave communication device can communicate with the master communicate device.

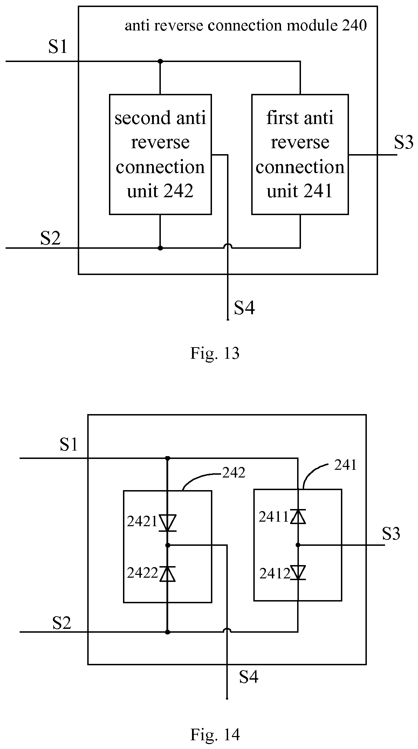

As an alternative implementation of embodiments of the present disclosure, as illustrated in Fig. 13, the anti reverse connection module 240 may include a first anti reverse connection unit 241, a second anti reverse connection unit 242, a first port S1, a second port S2, a third port S3 and a fourth port S4. The first anti reverse connection unit 241 is connected to the first port S1, the second port S2 and the third port S3 respectively, configured to control a connection between the third port S3 and one of the first port S1 and the second port S2 to be turned on. The second anti reverse connection unit 242 is connected to the fourth port S4, the first port S1 and the second port S2, configured to control a connection between the fourth port S4 and the other one of the first port S1 and the second port S2 to be turned on. If the anti reverse connection module 240 is applied in Fig. 11, connections between the anti reverse connection module 240, the third external interface 230 and the signal receiving module 210 can be described as follows. The first port S1 is connected to the third pin 231. The second port S2 is connected to the fourth pin 232. The third port S3 is electrically connected to the input end of the signal receiving module 210. The fourth port S4 is electrically connected to the output end of the signal receiving module 210. If the anti reverse connection module 240 is applied in Fig. 12, connections between the anti reverse connection module 240, the third external interface 230 and the signal receiving module 210 can be described as follows. The first port S1 is connected to the third pin 231. The second port S2 is connected to the fourth pin 232. The third port S3 is electrically connected to the first connection point T2. The fourth port S4 is electrically connected to the ground end of the slave communication device 20.

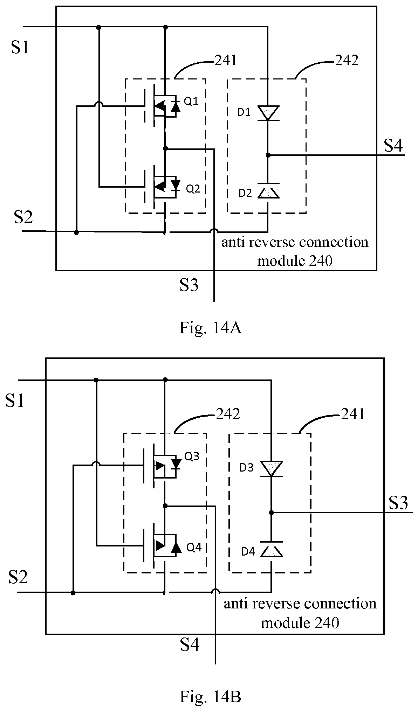

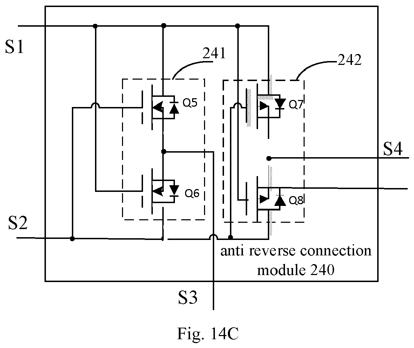

As an alternative implementation of embodiments of the present disclosure, as illustrated in Fig. 14, the first anti reverse connection unit 241 includes a first anti reverse connection element 2411 and a second anti reverse connection element 2412. The second anti reverse connection unit 242 includes a third anti reverse connection element 2421 and a fourth anti reverse connection element 2422. The first anti reverse connection element 2411 is connected between the first port S1 and the third port S3. The first anti reverse connection element 2411 can control a connection between the first port S1 and the third port S3 to be turned on. The second anti reverse connection element 2412 is connected between the second port S2 and the third port S3. The second anti reverse connection element 2412 can control a connection between the second port S2 and the third port S3 to be turned on. The third anti reverse connection element 2421 is connected between the fourth port S4 and the first port S1. The third anti reverse connection element 2421 can control a connection between the fourth port S4 and the first port S1 to be turned on. The fourth anti reverse connection element 2422 is connected between the fourth port S4 and the second port S2. The fourth anti reverse connection element 2422 can control a connection between the fourth port S4 and the second port S2 to be turned on. As an alternative implementation, each of the first anti reverse connection element 2411, the second anti reverse connection element 2412, the third anti reverse connection element 2421 and the fourth anti reverse connection element 2422 may be an anti reverse connection element such as a diode, a transistor, a MOS transistor, and the like, which is not limited herein. In a specific embodiment, a diode is configured as the anti reverse connection element, and such anti reverse connection module 240 is illustrated in Fig. 14. Thereby, the circuit in the anti reverse connection module 240 provided in embodiments of the present disclosure is easy to realize. Even if there are interfaces similar to Apple interface or USB TYPE-C interface that can realize reverse connection in the related art, these interfaces needs more hardware support, such that hardware cost is higher. While, the hardware cost of the anti reverse connection module in this embodiment is very low, the anti reverse connection function may be realized by using only four diodes, without a lot of hardware support. In addition, besides the diode, embodiments of the present disclosure further provide another three circuits that can implement the anti reverse connection module, as illustrated in Fig. 14A to Fig. 14C. Reference may be made to detail description in embodiment 6.

As illustrated in Fig. 11 and Fig. 12, the slave communication device 20 further includes a fixed load 270. As an alternative implementation of embodiments of the present disclosure, as illustrated in Fig. 11, one end of the fixed load 270 is connected to a connection point between the anti reverse connection module 240 and an input end of the signal receiving module 210. For convenience of description, this connection point is called as connection point T3 herein. In this alternative implementation, the fixed load 270 includes a charging switch 271 and a charging battery 272. The charging switch 271 is connected between the connection point T3 and the charging battery 272, configured to be controlled to switch on or off a connection between the connection point T3 and the charging battery 272.

As another alternative implementation of embodiments of the present disclosure, as illustrated in Fig. 12, one end of the fixed load 270 is electrically connected to the first connection point T2. In this alternative implementation, the fixed load 270 includes a charging switch 271 and a charging battery 272. The charging switch 271 is connected between the first connection point T2 and the charging battery 272, configured to be controlled to switch on or off a connection between the first connection point T2 and the charging battery 272. With the fixed load 270, when the master communication device 10 sends high level, the master communication device 10 may charge the slave communication device 20, thus the slave communication device 20 may perform communication and charging at the same time. Thereby, the slave communication device 20 may be controllable to charge an internal charging battery, such that the slave communication device 20 may supply itself when there is no master communication device 10 supplies power.

As illustrated in Fig. 11 and Fig. 12, the slave communication device 20 further includes a filter 280. As an alternative implementation of embodiments of the present disclosure, as illustrated in Fig. 11, the filter 280 is connected between the connection point T3 and the ground end (GND_S). Alternatively, the filter 280 is connected between the ground end (GND_S) and a connection point between the charging switch 271 and the charging battery 272, which is not shown in Fig. 11. As another alternative implementation of embodiments of the present disclosure, the filter 280 is connected between the first connection point T2 and the ground end (GND_S), which is not shown in Fig. 12. Alternatively, the filter 280 is connected between the ground end (GND_S) and a connection point between the charging switch 271 and the charging battery 272, as illustrated in Fig. 12. As an alternative implementation, the filter 280 may be a capacitor or other components, which is not limited herein. With the filter, glitches in the high level signals received by the third pin 231 of the third external interface 230 may be removed effectively, which makes the high level signals smooth, thus the charging battery may be charged continuously.

As an alternative implementation of embodiments of the present disclosure, as illustrated in Fig. 11 and Fig. 12, the slave communication device 20 further includes a first voltage division load element 291 and a second voltage division load element 292. As illustrated in Fig. 11, the first voltage division load element 291 and the second voltage division load element 292 are connected in series between the connection point T3 and the ground end. The first voltage division load element 291 is connected between the connection point T3 and the second voltage division load element 292. The signal receiving module 210 is electrically connected to the connection point T3 via the first voltage division load element 291. As illustrated in Fig. 12, the first voltage division load element 291 and the second voltage division load element 292 are connected in series between the connection point T2 and the ground end. The first voltage division load element 291 is connected between the connection point T2 and the second voltage division load element 292. The signal receiving module 210 is connected to the connection point T2 via the first voltage division load element 291. As an alternative implementation, the first voltage division load element 291 and the second voltage division load element 292 may be resistors or other load elements, which are not limited herein.

As illustrated in Fig. 11 and Fig. 12, the second voltage division load element 292 is connected between the ground end and the first voltage division load element 291. The signal receiving module 210 is connected to a connection point T4 (in Fig. 12) or T5 (in Fig. 11) between the first voltage division load element 291 and the second voltage division load element 292, so as to detect voltage at the connection point T4 (in Fig. 12) or T5 (in Fig. 11). In a specific embodiment, supply voltage of the power supply at the master communication device 10 may not be the same as a system detection voltage of the slave communication device 20. For example, the supply voltage of the power supply is 5V, while a maximum detection voltage that the signal receiving module 210 can bear is only 3.5V. In this case, there is a need to make a maximum voltage input to the signal receiving module 210 be less than or equal to 3.5V by voltage division, to ensure that the detection voltage of the signal receiving module 210 and the power supply are level-matched.

Thereby, with the slave communication device 20 provided in embodiments of the present disclosure, the signal receiving module 210 detects the voltage at the connection point T4 (equivalent to detecting level change at the connection point T2) or T5 (equivalent to detecting level change at the connection point T3), the voltage at the connection point T2 or T3 is a voltage signal received by the third external interface 230 from the first pin 131 of the master communication device 10. When in a silence state, the connection between the ground end and the connection point T2 (in Fig. 12) or T3 (in Fig. 11) is controlled off, the first pin 131 outputs a high level signal, the signal receiving module 210 detects a high level, and supplies power for the slave communication device 20. When receiving the data, the signal receiving module 210 detects a sudden fall on the voltage at the connection point T2 (in Fig. 12) or T3 (in Fig. 11), i.e., a low level pulse signal is detected. In this case, the voltage at the connection point T2 or T3 is pulled down by the ground end. It indicates that the slave communication device 20 is receiving data. The signal receiving module 210 obtains corresponding bit data according to continuously detected low level pulses. When the slave communication device 20 sends the data, the signal generation module 220 may control a connection of the signal generation unit between the connection point T2 (as illustrated in Fig. 12) and the ground end to be turned on or off according to the control signals of the main control chip 221, such that the third external interface 230 outputs a low level pulse signal or high level pulse signal, and then the corresponding bit data is transmitted. Thus, two-line communication between communication devices each having only two interfaces is realized.

In detail, as a specific implementation, the slave communication device 20 provided in embodiments of the present disclosure is illustrated in embodiment 2. Fig. 15 is a schematic circuit diagram of a communication system 100 according to an alternative embodiment of the present disclosure, in which reference may be made to detail description in embodiment 2. As another specific implementation, the slave communication device 20 provided in embodiments of the present disclosure is illustrated in embodiment 3. Fig. 16 is a schematic circuit diagram of a communication system 100 according to an alternative embodiment of the present disclosure, in which reference may be made to detail description in embodiment 3.

With the communication system according to embodiments of the present disclosure, two-line communication between communication devices each only having two interfaces may be realized. In addition, the slave communication device may obtain power from the master communication device, thus the charging may be performed at the time of performing communication. The slave communication device also has an anti reverse connection function, i.e., the communication may be performed no matter the slave communication device is positively or reversely connected to the master communication device.

### Embodiment 2

In this embodiment, operating principle of the communication system 100 in embodiment 1 is illustrated. Fig. 15 is an alternative schematic circuit diagram of a communication system 100 according to embodiment 1 of the present disclosure. As illustrated in Fig. 15, in the alternative schematic circuit diagram, the communication system 100 includes a master communication device 10 and a slave communication device 20. An external interface J1 of the master communication device 10 is connected to an external interface J2 of the slave communication device 20. Structures and connections of the master communication device 10 and the slave communication device 20 are described as follows.

In the following, description is made for the master communication device 10 provided in embodiments of the present disclosure. In this alternative schematic circuit diagram, a signal generation unit 112 is an NMOS transistor Q3. A source (S) electrode of the NMOS transistor Q3 is taken as a first connection end 1121 of the signal generation unit 112, a drain (D) electrode of the NMOS transistor Q3 is taken as a second connection end 1122 of the signal generation unit 112, and a grid (G) electrode of the NMOS transistor Q3 is taken as a control end 1123 of the signal generation unit 112. The first external interface 130 is J1. The first pin 131 is pin 1 of J1. The second pin 132 is pin 2 of J1. The power supply is V_MPWR. The current stabilizing component 160 is an inductor L3. The freewheeling component 170 is a diode D1. The first voltage division load element 181 is a voltage division resistor R3. The second voltage division load element 182 is a voltage division resistor R11. The direct current isolation component 190 is C1. Pin 1 of J1 is connected to the power supply V_MPWR via the inductor L3 and the diode D1. L3 is connected between the power supply and pin 1 of J1. D1 is connected in parallel with L3. An anode of D1 is electrically connected to pin 1 of J1, and a cathode of D1 is electrically connected to the power supply. Pin 2 of J1 is electrically connected to a ground end GND_M of the power supply. A control port MO of the main control chip 111 is electrically connected to the G electrode of Q3 via the direct current isolation capacitor C1, the S electrode of Q3 is connected to the ground end GND_M, and the D electrode of Q3 is connected to a connection point T0 between L3 and pin 1 of J1. R19 is connected in series between the direct current isolation capacitor C1 and the S electrode of Q3. The voltage division resistors R3 and R11 are connected in series between the connection point T0 and the ground end GND_M. The signal receiving module 120 is electrically connected to the connection point T1 between the voltage division resistors R3 and R11, detecting the voltage at T1 (equivalent to detecting level change of T0). The D electrode and S electrode of Q3 are controlled, by signals output by the control port MO of the main control chip 111, to switch on or off a connection between the ground end GND_M and the connection point T0. The NMOS transistor may use but is not limited to following types: 2N7002, FDV301, FDV303 and the like. The diode may use but is not limited to following types: BAR43, BAR54, BAR46, BAR50 and the like. In addition, resistances of the voltage division resistors R3 and R11 may be selected according to demand, to ensure that the voltage detected by the detection port matches to the output voltage of the power supply, which will not be described in detail. Resistances of the voltage division resistors R3 and R11 may follow a formula of: V_T1=R11/ (R3+R11) *V_T0.

In the following, operating principle of the master communication device 10 provided in embodiments of the present disclosure is briefly described.

In the silence state, Q3 is in an off state (in this case, the control port MO of the main control chip 111 sends a low level signal or does not send a signal), the voltage at the connection point T0 is the voltage of the power supply, which maintains a high level. The first pin outputs a high level (in this case, supplying power for the slave communication device 20). When the data is sent, the control port MO of the main control chip 111 sends a high level signal, to control Q3 to be turned on. The voltage at the connection point T0 is pulled down, then a low level pulse is generated, and the first pin outputs a low level pulse signal. After the data sending is finished, it is returned to the silence state. When the data is received, the signal receiving module 120 detects that the voltage at the connection point T1 suddenly falls to a low level from a high level. This indicates that the data is being received. The signal receiving module 120 may determine the received corresponding N-bit string according to time intervals between the continuously detected low level pulse signals.

In the following, description is made for the slave communication device 20 provided in embodiments of the present disclosure. In this alternative schematic circuit diagram, a signal generation unit 222 is an NMOS transistor Q5. A source (S) electrode of the NMOS transistor Q5 is taken as a first connection end 2221 of the signal generation unit 222, a drain (D) electrode of the NMOS transistor Q5 is taken as a second connection end 2222 of the signal generation unit 222, and a grid (G) electrode of the NMOS transistor Q5 is taken as a control end 2223 of the signal generation unit 222. The anti reverse connection module 240 includes a first anti reverse connection unit 241, a second anti reverse connection unit 242, a first port S1, a second port S2, a third port S3 and a fourth port S4. The first anti reverse connection unit 241 includes diodes D7 and D9. The second anti reverse connection unit 242 includes diodes D4 and D10. The third external interface 230 is J2. The third pin 231 is pin 1 of J2. The fourth pin 232 is pin 2 of J2. The first voltage division load element 291 is a voltage division resistor R20. The second voltage division load element 292 is a voltage division resistor R21. The direct current isolation component 250 is C2. Pin 1 of J2 is connected to S1. Pin 2 of J2 is connected to S2. S3 is connected to the D electrode of Q5. S4 is connected to the ground end GND_S of the slave communication device 20. An anode of D7 is connected to S1 (i.e., connected to the pin 1 of J2), and a cathode of D7 is connected to S3 (i.e., connected to the D electrode of Q5). An anode of D9 is connected to S4 (i.e., connected to the ground end GND_S), and a cathode of D9 is connected to S3 (i.e., connected to the D electrode of Q5). An anode of D4 is connected to S4 (i.e., connected to the ground end GND_S), and a cathode of D4 is connected to S1 (i.e., connected to the pin 1 of J2). An anode of D10 is connected to S4 (i.e., connected to the ground end GND_S), and a cathode of D10 is connected to S2 (i.e., connected to the pin 2 of J2). The control port SO of the main control chip 221 is connected to the G electrode of Q5 via the direct current isolation capacitor C2. The S electrode of Q5 is connected to the ground end GND_S. R22 is connected in series between the direct current isolation capacitor C2 and the S electrode of Q5. The voltage division resistors R20 and R21 are connected in series between the connection point T2 and the ground end GND_S. The signal receiving module 210 is electrically connected to the connection point T3 between the voltage division resistors R20 and R21. The signal receiving module 210 is configured to detect voltage at T3 (equivalent to detecting level change of T2). The D electrode and S electrode of Q5, under the control of output signals of the control port SO of the main control chip 221, switch a connection between the ground end GND_S and the connection point T2 to be turned on or off. The NMOS transistor may use but is not limited to following types: 2N7002, FDV301, FDV303 and the like. The diodes may use but are not limited to following types: BAR43, BAR54, BAR46, BAR50 and the like. In addition, the resistances of the voltage division resistors R20 and R21 may be selected according to demand, to ensure that the voltage detected by the signal receiving module 210 matches to the output voltage of the power supply at the master communication device 10, which will not be described in detail herein. The resistances of the voltage division resistors R20 and R21 may follow a formula of: V_T3=R21/ (R20+R21) *V_T2.

In the following, operating principle of the slave communication device 20 provided in embodiments of the present disclosure is briefly described.

In the silence state, Q5 is in an off state (in this case, the control port SO does not send a signal or sends a low level signal), and the signal receiving module 210 detects the voltage at the connection point T2. The signal receiving module 120 detects a high level continuously, in this case, the slave communication device 20 may be charged. When data is received, the signal receiving module 210 detects that the voltage at the connection point T2 suddenly falls to a low level from the high level. It indicates that the data is being received. The signal receiving module 210 may determine corresponding bit data according to time intervals between the continuously detected low level pulse signals. When the data is sent, the control port SO of the main control chip 221 sends a high level signal to control Q5 to be turned on. The voltage at the connection point T2 is pulled down, generating a low level pulse. The external interface J2 (one of pin 1 and pin 2 that is connected to the pin 1 of J1 of the master communication device 10) outputs the low level pulse signal to the pin 1 of J1 of the master communication device 10. The slave communication device 20 returns to the silence state after the data is sent.

In this embodiment, J2 of the slave communication device 20 may be positively connected or be reversely connected to J1. That is, pin 1 of J2 being connected to pin 1 of J2 and pin 2 of J2 being connected to pin 2 of J2, refers to that J2 is positively connected to J1, or pin 2 of J2 being connected to pin 1 of J2 and pin 1 of J2 being connected to pin 2 of J2, refers to that J2 is reversely connected to J1. When J2 of the slave communication device 20 is positively connected to J1, if Q5 is in an off state, a conduction flow of the anti reverse connection module 240 is: pin 1 of J1→ pin 1 of J2→ D7→ T2→ R20→ R21→ GND_S→ D10→pin 2 of J2 →pin 2 of J1. If Q5 is in an on state, a conduction flow of the anti reverse connection module 240 is: pin 1 of J1→ pin 1 of J2→ D7→ T2→ Q5→ GND_S→ D10→pin 2 of J2 →pin 2 of J1.

When J2 of the slave communication device 20 is reversely connected to J1, if Q5 is in an off state, a conduction flow of the anti reverse connection module 240 is: pin 1 of J1→ pin 2 of J2→ D9→ T2→ R20→ R21→ GND_S→ D4→pin 1 of J2 →pin 2 of J1. If Q5 is in an on state, a conduction flow of the anti reverse connection module 240 is: pin 1 of J1→ pin 2 of J2→ D9→ T2→ Q5→ GND_S→ D4→pin 1 of J2 →pin 2 of J1.

In the following, operating principle of the communication system 100 provided in embodiments of the present disclosure is briefly described.

In the silence state, at the master communication device 10 side: Q3 is in an off state, the voltage at the connection point T0 is the voltage of the power supply, which maintains a high level, and pin 1 of J1 outputs a high level, to supply power for the slave communication device 20. The signal receiving module 120 detects the voltage at the connection point T0. The signal receiving module 120 detects a high level continuously, and the first interface outputs a high level. At the slave communication device 20 side: Q5 is in an off state, the voltage at the connection point T2 is a high level voltage signal received from pin 1 of J1 by J2, and the voltage at the connection point T2 maintains a high level. The signal receiving module 210 detects the voltage at the connection point T2, and the signal receiving module 210 detects a high level continuously.

When the master communication device 10 sends data, the control port MO of the main control chip 111 of the master communication device 10 sends a high level signal to control Q3 to be turned on. The voltage at the connection point T0 is pulled down. Pin 1 of J1 outputs a low level pulse signal. The master communication device 10 returns to the silence state after the data is sent. While the slave communication device 20 receives the data, the signal receiving module 210 detects that the voltage at the connection point T2 suddenly falls to a low level from a high level. It indicates that the data is being received. The signal receiving module 210 of the slave communication device 20 may determine corresponding bit data according to time intervals between the continuously detected low level pulse signals.

When the slave communication device 20 sends data, the control port SO of the main control chip 221 of the slave communication device 20 sends a high level signal to control Q5 to be turned on. The voltage at the connection point T2 is pulled down. The external interface J2 (one of pin 1 and pin 2 of J2 that is connected to pin 1 of J1 of the master communication device 10) outputs a low level pulse signal to pin 1 of J1 of the master communication device 10. The slave communication device 20 returns to the silence state after the data is sent. While the master communication device 10 receives the data, the signal receiving module 120 detects that the voltage at the connection point T1 suddenly falls to a low level from a high level. It indicates that the data is being received. The signal receiving module 120 of the master communication device 10 may determine corresponding bit data according to time intervals between the continuously detected low level pulse signals.

It should be noted that, both the master communication device and the slave communication device in embodiments of the present disclosure may only perform one-way communication, i.e., they cannot receive data when sending data, and cannot send data when receiving data. After the master communication device finishes sending data, the master communication device may send an instruction indicating that data sending is finished to the slave communication device. The slave communication device stops receiving data, and then begins to send data. At this time, the master communication device may detect the data sent from the slave communication device, and the master communication device enters a data receiving state.

As an alternative implementation of embodiments of the present disclosure, the master communication device and the slave communication device may adopt same-type external interfaces or different-type external interfaces, same-type signal generation units or different-type signal generation units, same-type voltage division load elements or different-type voltage division load elements, same-type direct current isolation components or different-type direct current isolation components, as long as functions of respective components in embodiments of the present disclosure may be realized, they should all fall within the protection scope of the present disclosure.

With the communication system provided by this embodiment, it can realize two-line communication between communication devices each having only two interfaces. In addition, the slave communication device may acquire power from the master communication device, thus can be charged while performing communication. The slave communication device further has an anti reverse connection function, thus the communication may be performed no matter the slave communication device is positively or reversely connected to the master communication device.

### Embodiment 3

In this embodiment, operating principle of the communication system 100 in embodiment 1 is illustrated. Fig. 16 is an alternative schematic circuit diagram of a communication system 100 according to embodiment 1 of the present disclosure. As illustrated in Fig. 16, in the alternative schematic circuit diagram, the communication system 100 includes a master communication device 10 and a slave communication device 20. An external interface J1 of the master communication device 10 is connected to an external interface J2 of the slave communication device 20. Structures and connections of the master communication device 10 and the slave communication device 20 are described as follows.

In the following, description is made for the master communication device 10 provided in embodiments of the present disclosure. In this alternative schematic circuit diagram, a signal generation unit 112 is a PMOS transistor Q1. A source (S) electrode of the PMOS transistor Q1 is taken as a first connection end 1121 of the signal generation unit 112, a drain (D) electrode of the PMOS transistor Q1 is taken as a second connection end 1122 of the signal generation unit 112, and a grid (G) electrode of the PMOS transistor Q1 is taken as a control end 1123 of the signal generation unit 112. The first external interface 130 is J1. The first pin 131 is pin 1 of J1. The second pin 132 is pin 2 of J1. The power supply is VDD_M. Pin 1 of J1 is connected to the D electrode of Q1. The S electrode of Q1 is connected to the power supply VDD_M. The G electrode of Q1 is connected to the control port MO of the main control chip 111. The D electrode and the S electrode of Q1 are controlled, by signals output by the control port MO of the main control chip 111, to switch on or off a connection between VDD_M and pin 1 of J1. The sampling resistor R1 is connected between pin 2 of J1 and the ground end GND_M. The signal receiving module 120 is connected to pin 2 of J1. The signal receiving module 120 includes a comparator A1. A non-inverting input end of the comparator A1 is connected to a connection point between the signal receiving module 120 and pin 2 of J1. A reference voltage Vref is input to an inverting input end of the comparator A1. The comparator A1 compares a voltage input to pin 2 of J1 with the reference voltage Vref. When the voltage input to pin 2 of J1 is larger than the reference voltage Vref, a high level is output, otherwise a low level is output. The PMOS transistor may use but is not limited to following types: 2N7002, FDV301, FDV303 and the like. The resistance of the sampling resistor R1 may be selected according to demand, to ensure that there is a significant difference between the voltage detected by the detection port and the reference voltage Vref, which is not described in detail. Settings of the reference voltage Vref may be set according to the resistance of R1, such that the value of Vref is significantly smaller than the voltage value across both ends of the sampling resistor R1.

In the following, operating principle of the master communication device 10 provided in embodiments of the present disclosure is briefly described.

In the silence state, Q1 is in an on state (at this time, the control port MO of the main control chip 111 sends a low level signal or does not send a signal). VDD_M continuously supplies a high level, such that Vs>Vg, Q1 is turned on, and pin 1 outputs a high level, power is supplied for the slave communication device 20. When the data is sent, the control port MO of the main control chip 111 sends a high level signal, to control Q1 off. Pin 1 outputs a low level signal. After the date sending is finished, the master communication device 10 returns to the silence state. In this case, the control port MO of the main control chip 111 sends a low level signal or does not send a signal, and Q1 is normally turned on. When the data is received, the signal receiving module 120 detects a voltage across both ends of the load resistor R1, and detects that the voltage of the signal receiving module 120 suddenly rises to a high level from a low level, which indicates that data is being received. The comparator A1 compares the voltage detected by the signal receiving module 120 and the reference voltage Vref. The signal receiving module 120 may continuously detect time intervals between high level pulse signals and determine corresponding bit data according to the high or low level output by the comparator A1.

In the following, description is made for the slave communication device 20 provided in embodiments of the present disclosure. In this alternative schematic circuit diagram, the signal generation unit 222 is an NMOS transistor Q2. A source (S) electrode of the NMOS transistor Q2 is taken as a first connection end 2221 of the signal generation unit 222, a drain (D) electrode of the NMOS transistor Q2 is taken as a second connection end 2222 of the signal generation unit 222, and a grid (G) electrode of the NMOS transistor Q2 is taken as a control end 2223 of the signal generation unit 222. The anti reverse connection module 240 includes a first anti reverse connection unit 241, a second anti reverse connection unit 242, a first port S1, a second port S2, a third port S3 and a fourth port S4. The first anti reverse connection unit 241 includes diodes D7 and D9. The second anti reverse connection unit 242 includes diodes D4 and D10. The third external interface 230 is J2. The third pin 231 is pin 1 of J2. The fourth pin 232 is pin 2 of J2. The load resistor is R2. The battery switcher is K1. The charging battery is BATT. The filter is C3. Pin 1 of J2 is connected to S1. Pin 2 of J2 is connected to S2. S3 is connected to the D electrode of Q2. A connection between the ground end GND_S and the connection point T2 is turned on or off under the control of the output signal of the control port SO of the main control chip 221. The load resistor R2 is connected between the D electrode of Q2 and the connection point T2 between the signal generation unit 222 and the signal receiving module 210. The battery switcher K1 and the charging battery BATT are connected in series between the connection point T2 and the ground end GND_S of the slave communication device. One end of the filter C3 is connected to a connection point between the battery switcher K1 and the charging battery BATT, and the other end of the filter C3 is connected to the ground end GND_S. The NMOS transistor may use but is not limited to following types: 2N7002, FDV301, FDV303 and the like. The diodes may use but are not limited to following types: BAR43, BAR54, BAR46, BAR50 and the like. In addition, the resistance of resistor R2 may be selected according to demand, to ensure that there is a significant difference between the voltage detected by the detection port and the reference voltage Vref, which is not described in detail.

In the following, operating principle of the slave communication device 20 provided in embodiments of the present disclosure is briefly described.

In the silence state, Q2 is in an off state (in this case, the control port SO of the main control chip 221 does not send a signal or sends a low level signal), and the signal receiving module 210 detects the voltage at the connection point T2. The signal receiving module 210 detects a high level continuously, the charging battery may be charged, and power is supplied for the slave communication device 20. When data is received, the signal receiving module 210 detects that the voltage at the connection point T2 suddenly falls to a low level from the high level. It indicates that data is being received. The signal receiving module 120 may determine corresponding bit data according to time intervals between the continuously detected low level pulse signals. When the data is sent, the control port SO of the main control chip 221 sends a high level signal to control Q2 to be turned on. Current passing through a loop from the connection point T2 of the slave communication device 20 to the load resistor R1 of the master communication device 10 may increase. The current from T2 passes through R2->GND_S->R1->GND_M. The master communication device 10 receives data by detecting voltage change of the load resistor R1, and returns to the silence state after the data sending is finished.

In this embodiment, J2 of the slave communication device 20 may be positively connected or be reversely connected to J1. That is, pin 1 of J2 being connected to pin 1 of J2 and pin 2 of J2 being connected to pin 2 of J2, refers to that J2 is positively connected to J1, or pin 2 of J2 being connected to pin 1 of J2 and pin 1 of J2 being connected to pin 2 of J2, refers to that J2 is reversely connected to J1. When J2 of the slave communication device 20 is positively connected to J1, if Q2 is in an off state, a conduction flow of the anti reverse connection module 240 is: pin 1 of J1→ pin 1 of J2→ D7→ T2→ SI. If Q2 is in an on state, a conduction flow of the anti reverse connection module 240 is: pin 1 of J1→ pin 1 of J2→ D7→ T2→ Q2→ GND_S→ A10→pin 2 of J2 →pin 2 of J1 → GND_M.

When J2 of the slave communication device 20 is reversely connected to J1, if Q2 is in an off state, a conduction flow of the anti reverse connection module 240 is: pin 1 of J1→ pin 2 of J2→ D9→ T2→ SI. If Q2 is in an on state, a conduction flow of the anti reverse connection module 240 is: pin 1 of J1→ pin 2 of J2→ D9→ T2→ Q2→ GND_S→ D4→ pin 1 of J2 → pin 2 of J1→ GND_M.

In the following, operating principle of the communication system 100 provided in embodiments of the present disclosure is briefly described.

In the silence state, at the master communication device 10 side: Q1 is in an on state (in this case, the control port MO of the main control chip 111 sends a low level signal or does not send a signal) . VDD_M continuously supplies a high level, such that Vs>Vg, Q1 is turned on, and pin 1 of J1 outputs a high level. The signal receiving module 120 of the master communication device 10 detects a voltage across both ends of the load resistor R1. At the slave communication device 20 side: Q2 is in an off state (in this case, the control port SO of the main control chip 221 does not send a signal or sends a low level signal). The voltage at the connection point T2 is a high level voltage signal received from pin 1 of J1 by J2. The voltage at the connection point T2 maintains the high level. The signal receiving module 210 of the slave communication device 20 detects the voltage at the connection point T2. The signal receiving module 210 detects a high level continuously.

The master communication device 10 sends data. The control port MO of the main control chip 111 of the master communication device 10 sends a high level signal to control Q1 off. Pin 1 of J1 outputs a low level signal. The master communication device 10 returns to the silence state after the data is sent. In this case, the control port MO of the main control chip 111 sends a low level signal or does not send a signal, and Q1 is normally turned on. When the slave communication device 20 receives the data, the signal receiving module 210 detects that the voltage at the connection point T2 suddenly falls to a low level from a high level. It indicates that the data is being received. The signal receiving module 210 of the slave communication device 20 may determine corresponding bit data according to time intervals between the continuously detected low level pulse signals.

The slave communication device 20 sends data. The control port SO of main control chip 221 of the slave communication device 20 sends a high level signal to control Q2 to be turned on. Current passing through a loop from the connection point T2 of the slave communication device 20 to the load resistor R1 of the master communication device 10 may increase. The current from T2 passes through R2-> GND_S-> R1-> GND_M. The master communication device 10 receives data by detecting voltage change of the load resistor R1, and returns to the silence state after the data sending is finished. The master communication device 10 receives data. The signal receiving module 120 detects the voltage across both ends of the load resistor R1. If the voltage suddenly increases, it indicates data is being received. The comparator A1 compares the voltage detected by the signal receiving module 120 and the reference voltage Vref. The signal receiving module 120 of the master communication device 10 may determine corresponding bit data according to time intervals between continuously detected high level pulse signals.

It should be noted that, both the master communication device and the slave communication device in embodiments of the present disclosure may only perform one-way communication, i.e., they cannot receive data when sending data, and cannot send data when receiving data. After the master communication device finishes sending data, the master communication device may send an instruction indicating that the data sending is finished to the slave communication device. The slave communication device stops receiving data, and then begins to send data. At this time, the master communication device may detect the data sent from the slave communication device, and the master communication device enters a data receiving state.

As an alternative implementation of embodiments of the present disclosure, the master communication device and the slave communication device may adopt same-type external interfaces or different-type external interfaces, same-type signal generation units or different-type signal generation units, same-type voltage division load elements or different-type voltage division load elements, same-type direct current isolation components or different-type direct current isolation components, as long as functions of respective components in embodiments of the present disclosure may be realized, they should all fall within the protection scope of the present disclosure.

With the communication system provided by this embodiment, it can realize two-line communication between communication devices each having only two interfaces. In addition, the slave communication device may acquire power from the master communication device, thus can be charged while performing communication. The slave communication device further has an anti reverse connection function, thus the communication may be performed no matter the slave communication device is positively or reversely connected to the master communication device.

### Embodiment 4

This embodiment illustrates the principle of the boost and reset circuit unit in the master communication device 10, which is implemented in embodiment 1. The schematic diagrams of 7D and 7E are two optional master communication devices 10 of the embodiment 1 of the present disclosure.

As shown in Fig. 7D, the connection break module 1113 is the NMOS tube Q6, and its source (S) is the first connection end 11130 of the off module, and its drain (D) is used as the second connection end 11131 of the off module, and the gate (G) is the control end 11132 of the off module; the signal generation unit 112 is the PMOS tube Q7, and its source (S) is the first connection end 1121 of the signal generation unit, and its drain (D) is used as a letter. The second connection end 1122 of the number generating unit, the gate (G) as the control end 1123 of the signal generation unit; the detection module is the comparator A1; the first external interface 130 is J1, the first pin 131 is the J1 pin 1, the second pin 132 is J1 of the pin 2, the power supply V_MPWR, the filter group 1112 is the capacitance C4 and C5, the discharge protection component 1115 is resistance R23, and the current limiting component 1116 of the current limiting component 1116 for resistance R25, The block module protection module 1114 is a resistance R24, and the sampling resistance 140 is R26; in which the power supply interface 150, the control end 11112 of the DC/DC boost component 1111 are electrically connected to the power port 111a of the main control chip 111, the boost reset control port 111b, the power supply interface 150 is electrically connected to the input terminal 11110 of the DC/DC up voltage component 1111, and the filter capacitor C4 and C5 are connected to the DC/DC boost component 1111, respectively. Between the end 11111 and the ground end GND_M; the off control port 111C of the master chip 111 is electrically connected to the G end of the Q6 through the loss resistance R25, the S end GND_M of the Q6, the D end of the Q6 and the connection point of the Q7 end between the output end 11111 of the DC/DC boost component 1111 and the Q7 end. The 11C output's off control signal is controlled to disconnect or guide the path between the ground end GND_M and the connection point T6; the pin 1 of the J1 is connected to the D end of the Q7, the S end of the Q7 is connected to the output end 11111 of the DC/DC boost component 1111, and the G end of the Q7 is connected to the signal of the main control chip 111 to generate the control port MO, which is disconnected or guided under the control signal of the output control port of the signal generation control port. The path between the DC/DC boost component 1111 and the pin 1 of the J1; the sampling resistance R26 is connected between the pin 2 of the J1 and the end GND_M, and the pin 2 of the J1 is connected to the detection port MI of the signal receiving module 120, and the detection port MI detects the voltage at both ends of the R26, and inputs the comparator A1; the comparator A1 is connected with the detection port, and the reverse input terminal of the comparator inputs the reference voltage. The comparator A1 compares the voltage input of the detection port MI to the reference voltage Vref, and outputs a high level when the voltage of the detection port MI is greater than the reference voltage Vref, otherwise the low level is output.

Among them, the DC/DC boost component 1111 can include the DC/DC boost chip, the inductor and the diode and the like, which is the common knowledge of the technical personnel in the field, no longer on the structure of the DC/DC boost component 1111, and the DC/DC boost chip can be used but not limited to the following models: MC34063A, BQ24195L, MP3209, etc.; PMOS tubes can be adopted but not limited to the following models: 2N7002, FDV301 FDV303 and so on; the NMOS tube can be used but not limited to the following models: 2N7002, FDV301, FDV303 and so on. To speed up the discharge speed V4 and V5 (V4=R23*C4, V5=R23*C5) R23 of capacitance C4 and C5, the smaller the better the better, the better the selection of a few ohms; the sampling resistance can be selected according to the demand, so that the voltage detected by the detection port is obvious to the reference voltage. The score of the high and low, no longer here. The setting of reference voltage Vref can also be set according to the resistance value of R26, so that the value of Vref is much less than the value of voltage at both ends of R26 resistance.

The following is a brief description of the working principle of the master communication device 10 provided by the present disclosure.

In the silent state, the DC/DC boost component 1111 receives the boost control signal sent by the boost reset control port 111b and boosts the power supply voltage of the power supply, and the capacitance C4 and C5 remove the burr in the voltage signal after the boost; the Q6 is in a disconnected state (at this time, the off control port 111C sends a low level signal or does not send a signal), and the voltage of the connection point T6 passes through DC/DC liters. The voltage after the pressure component 1111 increases, the Q7 is in the conduction state (at this time, the signal generation control port MO sends a low level signal or does not send a signal), V_MPWR keeps the power supply high, causes the Vs>Vg, Q7 to pass, and the J1 pin 1 continuously outputs the high level (the voltage after the boost).

When the data is sent, the signal generation control port MO sends a high level signal to control the Q7 disconnection. The J1 pin 1 outputs the low level signal, and the transmission data is returned to the silent state (at this time, the signal generation control port MO sends the low level signal or does not send the signal, the Q7 normal state); the detection port MI detects the voltage at both ends of the sampling resistance R26 and detects the detection port. The voltage of the MI suddenly rises from a low level to a high level, indicating that in receiving data, the comparator A1 compares the voltage of the detection port MI detected by the comparator A1 with the reference voltage Vref, and the signal receiving module 120 can determine the corresponding bit string of corresponding length N at the time interval between the high level pulse signals in accordance with the high and low level of the comparator A1 output.

When the reset is needed, the boost reset control port 111b does not send a boost control signal to the DC/DC boost component 1111, the DC/DC boost component 1111 stops working, the output voltage of the output end 11111 is zero, the voltage of the connection point T6 is pulled down, and the J1 pin 1 continues to output a low level signal regardless of Q7 conduction or turn off, and the master communication device 10 can not send it to the communication device 20 through the level change. Bit data can not receive bit data transmitted from communication device 20. At this time, the master communication device 10 and the communication device 20 are in reset state.

However, because the capacitor C4 and C5 have a certain electrical energy storage, after the DC/DC boost component 1111 stops working, C4 and C5 will go through a period of time (such as 10ms) to discharge completely, so the connection point T6 will also slow down from high level to low level, accordingly, the level of the 1 output of J1's pin will also change from high to low, so the C4 and C5 will need to be quickly placed by controlling Q6 conductance. Electric. Specifically, the pass off control port 111C sends a high level signal, controls the Q6 conduction, the voltage of the connection point T6 is pulled low, the C4 and C5 can be discharged completely completely, the level of the J1 pin 1 output will also be rapidly changed from high to low, thus the time of continuous output of the low level signal from the pin 1 identified from the communication device 20 is (preset long -10ms), leading to the failure to effectively identify the communication device 20 from the communication device 20. The continuous output low level signal is the reset signal.

Therefore, when the boost reset control port 111b does not send the initial time of the boost control signal to the DC/DC boost component 1111, the off control port 111C sends a off control signal to the Q6 and makes a rapid discharge of the C4 and C5 by controlling the Q6 conduction. Specifically, the connection control port 111C sends the high level signal, controls the Q6 conduction, C4 and C5 form the circuit with R23 and GND_M respectively, so that C4 and C5 can be fully discharged completely, and the level of the J1 pin 1 output will also be rapidly changed from high level to low level.

As shown in Fig. 7E, the connection break module 1113 is the NMOS tube Q6, and its source (S) is the first connection end 11130 of the off module, and its drain (D) is used as the second connection end 11131 of the off module, and the gate (G) is the control end 11132 of the off module; the signal generation unit 112 is the NMOS tube Q3, and its source (S) is the first connection end 1121 of the signal generation unit, and its drain (D) is used as a letter. The second connection end 1122 of the number generating unit, which is the gate (G) as the control end 1123 of the signal generation unit; the first external interface 130 is J1, the first pin 131 is the pin 1 of J1, the second pin 132 is the pin 2 of the J1, the power supply V_MPWR, the filter component 1112 is the capacitance C4 and C5, the discharge protection component 1115 is the resistance R23, the current limiting component 1116 is resistance R25, and the off module protects component 1114 for the module 1114 to be 1114 Resistance R24, the steady flow component 160 is inductor L3, the continuous flow component 170 is a diode D1, the first voltage load element 181 is the voltage divider resistance R3, the second partial pressure load element 182 is the voltage divider resistor R11, the straight component 190 is the capacitance C1, the short circuit protection component 1100 is the resistance R19; in which the control terminal 11112 of the power supply interface 150 and the DC/DC boost component 1111 is connected to the power port 11 of the main control chip 111 respectively. 1a, boost reset control port 111b, the power supply interface 150 is electrically connected to the input end 11110 of the DC/DC boost component 1111; the filter capacitance C4 and C5 are connected between the output end 11111 of the DC/DC boost component 1111 and the end GND_M; the pin 1 of the J1 is connected to the output end 11111 of the DC/DC boost component 1111 by the inductance L3 and the diode D1, and the D1 is connected to the pin 1 and the negative electrode is connected to the negative electrode 1. To the output end 11111, the pin 2 of the J1 is electrically connected with the ground end GND_M of the power supply; the open control port 111C of the main control chip 111 is electrically connected to the G end of the Q6 through the depletion resistance R25, the S end end end GND_M of the Q6, the D end of the Q6 and the connection between the output end 11111 of the DC/DC boost component 1111, and the connection between the connection point and the terminus, The D end and the S end disconnect or guide the path between the end GND_M and the connection point T7 under the control signal of the off control port 111C; the signal generation control port MO of the main control chip 111 connects to the G end of Q3 through a straight capacitor C1, and the S end of the Q3 is connected to the connection point of the pin 1. Under the control of the control signal of the signal generating control port MO, a path between the end GND_M and the connection point T0 is disconnected, the voltage resistance R3 and the R11 are connected in series between the connection point T0 and the earth end GND_M, and the detection port MI is electrically connected to the connection point T1 of the voltage resistance R3 and R11, and the voltage of the port MI detection is detected.

Among them, the DC/DC boost component 1111 can include the DC/DC boost chip, the inductor and the diode and the like, which is the common knowledge of the technical personnel in the field, no longer on the structure of the DC/DC boost component 1111, and the DC/DC boost chip can be used but not limited to the following models: MC34063A, BQ24195L, MP3209, etc.; NMOS tubes can be adopted but not limited to the following models: 2N7002, FDV301 FDV303, etc.; diodes can be used but not limited to the following models: BAR43, BAR54, BAR46, BAR50, etc.; to speed up the discharge speed V4 and V5 (V4=R23*C4, V5=R23*C5) R23 of capacitance C4 and C5, the smaller the better the better, a few ohms can be selected. In addition, the resistance of the voltage divider R3 and the R11 can be selected according to the demand, so that the voltage detected by the detection port is matched with the output voltage of the power supply, and no longer will be described. Among them, the resistance value of divider resistance R3 and R11 can be followed by the following formula, V_T1=R11/ (R3+R11) *V_T0.

The following is a brief description of the working principle of the master communication device 10 provided by the present disclosure.

In the silent state, the DC/DC boost component 1111 receives the boost control signal sent by the boost reset control port 111b and boosts the power supply voltage of the power supply, and the capacitance C4 and C5 remove the burr in the voltage signal after the boost; both Q3 and Q6 are in disconnection (at this time, the signal generation control port MO, the off control port 111C sends the low level signal or does not send the signal. " The voltage of connection point T0 and T7 is voltage rising after DC/DC boost component 1111, keeps high level, J1 pin 1 outputs high level.

When the data is sent, the signal generation control port MO sends a high level signal, controls the Q3 conduction, the voltage of the connection point T0 is pulled down, the level of the J1 pin 1 output is changed from high to low, the low level pulse is produced, the first pin output low level pulse signal, and the main control chip 111 can transmit the corresponding bit data according to the time interval between the low level pulse signals and send the end of the data. After the signal is generated, the control port MO sends a low level signal and controls the Q3 to disconnect. The voltage of the connection point T0 is a voltage after the 1111 boost of the DC/DC boost component, and the level of the J1 pin 1 output changes from low to high to the silent state; when the data is received, the detection port MI detects the voltage of the connecting point T1 suddenly from the high level to the low level, indicating that the data is received and the signal receiving mode is received. Block 120 can determine the corresponding bit string corresponding to the length of N based on the time interval between the low-level pulse signals detected by the detection port MI.

When the reset is needed, the boost reset control port 111b does not send a boost control signal to the DC/DC boost component 1111, the DC/DC boost component 1111 stops working, the output voltage of the 11111 output is zero, the voltage of the connection point T7, T0 is pulled down, and the J1 pin 1 continues to output the low level signal, regardless of Q3 conduction or disconnection, and the master communication device 10 can not go from the communication device 20 through the level change. Sending bit data or receiving bit data transmitted from communication device 20, at this time, the master communication device 10 and the communication device 20 are in reset state.

However, because the capacitor C4 and C5 have a certain electrical energy storage, after the DC/DC boost component 1111 stops working, C4 and C5 will go through a period of time (such as 20ms) to discharge completely, so the connection point T7 will also slow down from high level to low level, accordingly, the level of the 1 output of J1's pin will also change from high to low, so the C4 and C5 will need to be quickly placed by controlling Q6 conductance. Electric. Specifically, the pass off control port 111C sends a high level signal, controls the Q6 conduction, the voltage of the connection point T7 is pulled low, the C4 and C5 can be discharged completely completely, the level of the J1 pin 1 output will also be rapidly changed from high to low, thus the time of continuous output of the low level signal from the pin 1 identified from the communication device 20 is (preset long -20ms), leading to the failure to effectively identify the communication device 20 from the communication device 20. The continuous output low level signal is the reset signal.

Therefore, when the boost reset control port 111b does not send the initial time of the boost control signal to the DC/DC boost component 1111, the off control port 111C sends a off control signal to the Q6, and the C4 and C5 are quickly discharged by controlling the Q6 conduction. Specifically, the connection control port 111C sends the high level signal, controls the Q6 conduction, C4 and C5 form the circuit with R23 respectively, so that the C4 and C5 can be fully discharged completely, the level of the J1 pin 1 output will also be rapidly changed from high to low.

By the master communication device 10 provided in this embodiment, the first pin 131 can be output to the voltage from the communication device 20 so that a high enough voltage is supplied or charged from the communication device 20 so as to avoid the occurrence of a minimum input voltage from the communication device 20 because of the power loss or voltage reduction in the circuit; and The communication device 10 and the reset function are provided from the communication device 20.

### Embodiment 5

In this embodiment, the principle of line protection circuit unit 1120 in the master communication device 10 of embodiment 1 is illustrated. Fig. 8D is a circuit schematic diagram of an optional master communication device 10 for the embodiment 1 for this embodiment, illustrated by an embodiment between the line protection circuit unit 1120 in series between the ground end GND_M and the second pin 132; FIG. 8E provides a circuit schematic diagram of another optional master communication device 10 for the embodiment 1 for this embodiment, which is connected in series with the line protection circuit unit 1120. An embodiment is illustrated between the power supply interface 150 and the first pin 131 as an embodiment.

The following embodiment is illustrated with an embodiment of the line protection circuit unit 1120 in series between the end GND_M and the second pin 132, and as shown in Fig. 8D, the switch module 1121 in the circuit protection circuit unit 1120 includes the fifth connection end 1121A, the sixth connection end 1121b and the controlled port 1121c, and the control module 1122 includes the first detection port 1122a, the second detection port 1122b, and the control port 1122c. The first external interface includes pins 1 and pin 2; the power supply is VBUS_M; the first detection port 1122a is connected to the fifth connection end of the switch module 1121, the second detection port 1122b is 1121b connected to the sixth connection end of the switch module 1121, the control port 1122c is connected to the controlled port 1121c of the switch module 1121, and the switch module 1121 is electrically connected to the end GND_M and the pin 2. Between the fifth connecting end 1121A and the ground end GND_M, the sixth connection end 1121b is electrically connected with the pin 2. In the present implementation, the fifth connection end 1121A of the switch module 1121 can be directly connected to the ground end GND_M, and can be electrically connected to the ground end GND_M, for embodiment, its components or some functional circuits, such as resistance, or some functional circuits, are electrically connected to the ground end GND_M. The pin 1 of the first external interface can be directly connected to the power supply interface 150, or connected to the power supply interface 150 by other components, and the power supply interface 150 is connected to the power supply VBUS_M.

In this embodiment, the switch module 1121 is an NMOS tube, whose gate G is a controlled port 1121c of the switch module 1121, and its source S is the fifth connection end 1121A of the switch module 1121, and the drain D is the sixth connection end 1121b of the switch module 1121. The control module 1122 is used to detect the first level V1 of the source S of the NMOS tube by the first detection port 1122a, and to detect the second level V2 of the drain pole D of the NMOS tube through the second detection port 1122b, when the NMOS tube is in the conduction state. In addition, when the difference between the second level V2 and the first level V1 satisfies the line protection trigger conditions, the difference between the second level V2 and the first level V1 is greater than the preset value (V2 - V1 > VF, where VF is a preset value), and the control module 1122 outputs the first control signal to the gate G of the NMOS tube through the control port 1122c, the first control signal is a low level signal, of which the low level signal is the finger. A level signal that is lower or equal to the S level of the NMOS tube source is used to make the NMOS tube enter the cut-off state, thereby disconnecting the fifth connecting end 1121A of the switch module 1121 and the sixth connection end 1121b, so that the pin 2 and the ground end GND_M are formed to form a circuit breaker.

Alternatively, the control module 1122 can include lithium battery protection IC chip (Japan Seiko S-8261ABJMD-G3JT2). The lithium battery protected IC chip can output low level signals when the difference between the second level V2 and the first level V1 is greater than 100mV (V2 - V1 > 100mV, 100mV is the preset value). When the low level signal is detected, the main chip 111 outputs low-level signal to the gate G of the NMOS tube, so that the NMOS tube enters the cut-off state. Therefore, the main control chip 111 can cooperate with the lithium battery to protect the IC, and realize the short circuit protection of the circuit, and the lithium battery protection IC cost is low, the function integration is high, it is beneficial to reduce the production cost of the circuit protection circuit 1 and the function of the extension circuit protection circuit 1.

Thus, when the level difference between the NMOS tube source S and the drain D is too large (i.e., there is a short circuit anomaly in the communication device connected with the master communication device), the control module controls the NMOS tube into the cut-off state and disconnects the circuit between the pin 2 and the end GND_M to prevent the components in the master communication device from being damaged by the existence of a short circuit anomaly in the circuit.

Alternatively, the control module 1122 is also used when the NMOS tube is in cut-off state, that is, when the pin 2 and the end GND_M are disconnected, the second control signal is output to the gate G of the NMOS tube through the control port 1122c, the second control signal is a high level signal, which is used to make the NMOS tube into the conduction state, so that the pin 2 is connected to the earth end GND_M. After the pin 2 is connected to the ground end GND_M, the control module 1122 detects the first level V1 of the NMOS tube source S again through the first detection port 1122a, and detects the second level V2 of the NMOS tube drain D through the second detection port 1122b. At this time, if the difference between the second level V2 and the first level V1 is not satisfied with the line protection trigger condition (i.e., V2 to be the default value), the main communication is explained. If the device or the short circuit exception in the communication device connected with the master communication device has disappeared, the pin 2 and the ground end GND_M continue to maintain the conduction state; otherwise, when the difference between the second level and the first level V1 satisfies the line protection trigger (i.e., V2 V1 > VF, VF is a pre set value), the control module 1122 outputs the first control letter to the gate G of the NMOS pipe through the control port 1122c. The first control signal is a low level signal, which is used to make the NMOS tube into the cut-off state, thereby disconnecting the pin 2 with the ground end GND_M so that the master communication device is in a short circuit protection state. Thus, when the master communication device is in the state of short circuit protection (the NMOS tube is in the cut-off state), the control module 1122 outputs the high level signal to the NMOS tube so that the NMOS tube reenters the state of the conduction, and again determines whether the difference between the second level V2 and the first level V1 satisfies the line protection trigger condition, and when the trigger condition of the line protection is not satisfied, that is, in the master communication device or with the master. After the communication device connection is recovered from the short circuit anomaly of the communication device, the control module 1122 outputs the high level signal to the NMOS tube continuously, and controls the NMOS tube to pass through, thereby restoring the slave communication device connected to the master communication device from the short circuit protection state to the normal working state.

The following embodiment is illustrated with an embodiment of the line protection circuit unit 1120 in series between the power supply interface and the first pin, as shown in Fig. 4, as shown in Fig. 4, the switch module 1121 in the circuit protection circuit unit 1120 includes the fifth connection end 1121A, the sixth connection end 1121b and the controlled port 1121c, and the control module 1122 includes the first detection port 1122a, the second detection port 1122b and the control port 1122c; The first external interface includes pins 1 and pin 2; the power supply is VBUS_M; the first detection port 1122a is connected to the fifth connection end of the switch module 1121, the second detection port 1122b is 1121b connected to the sixth connection end of the switch module 1121, the control port 1122c is connected to the controlled port 1121c of the switch module 1121, and the switch module 1121 is electrically connected to the power supply interface 150 and the pin 1. Between the fifth connecting end 1121A and the pin 1 electrically connected, the sixth connection end 1121b is electrically connected with the power supply interface 150, the power supply interface 150 is connected to the power supply VBUS_M. In this embodiment, the sixth connection end of the switch module can directly connect to the power supply interface 150, and can indirectly connect with the power supply interface 150, such as other components such as resistance, or some functional circuits and power supply. The interface is 150 electrical connections.

In this embodiment, the switch module 1121 is a PMOS tube, whose gate G is the controlled port 1121c of the switch module 1121, and its drain D is the fifth connection end 1121A of the switch module 1121, and the source S is the sixth connection end 1121b of the switch module 1121. The control module 1122 is used to detect the first level V1 of the drain pole D of the PMOS tube by the first detection port 1122a, and detect the second level V2 of the source S of the PMOS tube through the second detection port 1122b, when the PMOS tube is in the conduction state. In addition, when the difference between the second level V2 and the first level V1 satisfies the line protection trigger conditions, the difference between the second level V2 and the first level V1 is greater than the preset value (V2 - V1 > VF, where VF is a preset value), and the control module 1122 outputs the first control signal to the gate G of the PMOS tube through the control port 1122c, the first control signal is a high level signal, of which the high level signal is the finger. A level signal higher or equal to or equal to the S level of the PMOS tube source is used to make the PMOS tube enter the cut-off state, thereby disconnecting the fifth connection end 1121A of the switch module 1121 and the sixth connection end 1121b, so that the pin 1 and the power supply interface 150 form a circuit breaker.

Alternatively, the control module 1122 can include lithium battery protection IC chip (Japan Seiko S-8261ABJMD-G3JT2). The lithium battery protected IC chip can output low level signals when the difference between the second level V2 and the first level V1 is greater than 100mV (V2 - V1 > 100mV, 100mV is the preset value). When the low level signal is detected, the main control chip 111 outputs the high level signal to the gate G of the PMOS tube, so that the PMOS tube enters the cut-off state. Therefore, the main control chip 111 can cooperate with the lithium battery to protect the IC, and realize the short circuit protection of the circuit, and the lithium battery protection IC cost is low, the function integration is high, it is beneficial to reduce the production cost of the circuit protection circuit 1 and the function of the extension circuit protection circuit 1.

Thus, when the level difference between the PMOS tube source S and the drain D is too large (i.e., there is a short circuit anomaly in the communication device connected with the master communication device), the control module controls the PMOS tube into the cut-off state and disconnects the circuit between the pin 1 and the power supply interface 150 to prevent the master communication device or the components from the communication device connected with the master communication device. There is an abnormal and damaged circuit in the circuit.

Alternatively, the control module 1122 is also used when the PMOS tube is in cut-off state, that is, when the pin 1 is disconnected with the power supply interface 150, the second control signal is output to the gate G of the PMOS tube through the control port 1122c, the second control signal is a low level signal, which is used to make the PMOS tube into the conduction state, so that the pin 1 is connected to the power supply interface 150. After the pin 1 is connected with the power supply interface 150, the control module 1122 detects the first level V1 of the PMOS tube drain D again through the first detection port 1122a, and detects the second level V2 of the PMOS tube source S through the second detection port 1122b, at this time, if the difference between the second level V2 and the first level V1 is not satisfied with the line protection triggering condition (i.e. V2 V1 < < < < < >), the main pass is explained. The short circuit exception of the communication device that is connected with the master communication device has disappeared, and the pin 1 continues to maintain the conduction state with the power supply interface 150; otherwise, the difference between the second level V2 and the first level V1 satisfies the line protection trigger (i.e. V2 V1 > VF, where VF is a preset value), and the control module 1122 outputs the first control to the gate G of the PMOS tube through the control port 1122c. The first control signal is a high level signal, which is used to make the PMOS tube into the cut-off state, thereby disconnecting the pin 1 with the power supply interface 150, so that the master communication device or the communication device connected with the master communication device is in a short circuit protection state. Thus, when the master communication device or the communication device is connected to the communication device in a state of short circuit protection (the PMOS tube is in the cut-off state), the control module 1122 outputs a low level signal to the PMOS tube, so that the PMOS tube reenters the state of the conduction, and again determines whether the difference between the second level V2 and the first level V1 satisfies the line protection triggering condition and does not meet the line protection touch. When a condition is transmitted, the control module 1122 outputs a low level signal to the PMOS tube continuously after a short circuit anomaly of the communication device connected to the master communication device or the master communication device, and controls the PMOS tube to pass through, thereby restoring the slave communication device connected to the master communication device or the master communication device from the short circuit protection state to the normal working state.

Using the technical scheme provided by this embodiment, only the control module can be used to detect the level difference between the two connection ends of the switch module to determine whether the line has an abnormality. It is not necessary to load the resistance in the line, measure the voltage at both ends of the resistance, calculate the current through the resistance, and judge whether the current through the resistance is too large, and then the switch is controlled through the judgment result. Therefore, the technology scheme provided by the implementation is simple in structure, and it can judge whether the line is open or not.

### Embodiment 6

This embodiment provides three specific circuits for implementing the anti reverse connection module 240, as illustrated in Fig. 14A to Fig. 14C, and description is made for the circuit principle of the anti reverse connection module 240 in the slave communication device 20 in embodiment 1.

Fig. 14A is an alternative schematic circuit diagram illustrating the anti reverse connection module 240 according to embodiment 1 of the present disclosure.

As illustrated in Fig. 14A, the first anti reverse connection element 2411 and the second anti reverse connection element 2412 in the first anti reverse connection unit 241 adopt NMOS transistors, i.e. Q1 and Q2 respectively. The third anti reverse connection element 2421 and the fourth anti reverse connection element 2422 in the second anti reverse connection unit 242 adopt diodes, i.e. D1 and D2 respectively. The first anti reverse connection element 2411 (Q1) is connected between the first port S1 and the third port S3. As illustrated in Fig. 14A, the drain (D) electrode of Q1 is electrically connected to S1, the source (S) electrode of Q1 is electrically connected to S3, and the grid (G) electrode of Q1 is electrically connected to S2, thus turning the connection between the first port S1 and the third port S3 on. The second anti reverse connection element 2412 (Q2) is connected between the second port S2 and the third port S3. As illustrated in Fig. 14A, the drain (D) electrode of Q2 is electrically connected to S2, the source (S) electrode of Q2 is electrically connected to S3, and the grid (G) electrode of Q2 is electrically connected to S1, thus turning the connection between the second port S2 and the third port S3 on. The third anti reverse connection element 2421 (D1) is connected between the fourth port S4 and the first port S1, thus turning the connection between the fourth port S4 and the first port S1 on. The fourth anti reverse connection element 2422 (D2) is connected between the fourth port S4 and the second port S2, thus turning the connection between the fourth port S4 and the second port S2 on.

In the following, for example, high voltage and low voltage are applied to the first port S1 and the second port S2 respectively. With reference to Fig. 14A, description is made to specific circuit principle of the anti reverse connection module 240 according to this embodiment.

When high voltage is applied to S1 and low voltage is applied to S2, according to conduction characteristics of NMOS transistors and the diodes, the high voltage is applied to an anode of D1, thus D1 is turned on. The low voltage is applied to an anode of D2, thus D2 is cut off. The low voltage is applied to the grid electrode of Q1, Vgs<Vt, thus Q1 is cut off. The high voltage is applied to the grid electrode of Q2, Vgs>Vt, thus Q2 is turned on. At this time, the drain electrode of the NMOS transistor Q2 is connected to the low voltage, thus current flows from the source electrode of Q2 to the drain electrode of Q2. It is equivalent to that the NMOS transistor Q2 is turned on via a parasitic diode, with a small voltage drop. Therefore, the current flow direction is: S1-> D1-> S4-> S3-> Q2-> S2, thus forming a loop.

When low voltage is applied to S1 and high voltage is applied to S2, according to conduction characteristics of NMOS transistors and the diodes, the low voltage is applied to the anode of D1, thus D1 is cut off. The high voltage is applied to the anode of D2, thus D2 is turned on. The high voltage is applied to the grid electrode of Q1, Vgs>Vt, thus Q1 is turned on. At this time, the drain electrode of the NMOS transistor Q1 is connected to the low voltage, thus current flows from the source electrode of Q1 to the drain electrode of Q1. It is equivalent to controlling the NMOS transistor Q1 on via a parasitic diode, with a small voltage drop. The low voltage is applied to the grid electrode of Q2, Vgs<Vt, thus Q2 is cut off. Therefore, the current flow direction is: S2-> D2-> S4-> S3-> Q12-> S1, thus forming a loop.

Fig. 14B is another alternative schematic circuit diagram illustrating the anti reverse connection module 240 according to embodiment 1 of the present disclosure.

As illustrated in Fig. 14B, the first anti reverse connection element 2411 and the second anti reverse connection element 2412 in the first anti reverse connection unit 241 adopt diodes, i.e. D3 and D4 respectively. The third anti reverse connection element 2421 and the fourth anti reverse connection element 2422 in the second anti reverse connection unit 242 adopt PMOS transistors, i.e. Q3 and Q4 respectively. The first anti reverse connection element 2411 (D3) is connected between the first port S1 and the third port S3, thus controlling the connection between the first port S1 and the third port S3 to be turned on. The second anti reverse connection element 2412 (D4) is connected between the second port S2 and the third port S3, thus controlling the connection between the second port S2 and the third port S3 to be turned on. The third anti reverse connection element 2421 (Q3) is connected between the fourth port S4 and the first port S1. As illustrated in Fig. 14B, the drain (D) electrode of Q3 is electrically connected to S1, the source (S) electrode of Q3 is electrically connected to S3, and the grid (G) electrode of Q3 is electrically connected to S2, thus controlling the connection between the fourth port S4 and the first port S1 to be turned on. The fourth anti reverse connection element 2422 (Q4) is connected between the fourth port S4 and the second port S2. As illustrated in Fig. 14B, the drain (D) electrode of Q4 is electrically connected to S2, the source (S) electrode of Q4 is electrically connected to S3, and the grid (G) electrode of Q4 is electrically connected to S1, thus controlling the connection between the fourth port S4 and the second port S2 to be turned on.

In the following, for example, high voltage and low voltage are applied to the first port S1 and the second port S2 respectively. With reference to Fig. 14B, description is made to specific circuit principle of the anti reverse connection module 240 according to this embodiment.

When high voltage is applied to S1 and low voltage is applied to S2, according to conduction characteristics of PMOS transistors and the diodes, the low voltage is applied to the grid electrode of Q3, Vgs<Vt, thus Q3 is turned on. In this case, the drain electrode of the PMOS transistor Q3 is connected to the high voltage, thus current flows from the drain electrode of Q3 to the source electrode of Q3. It is equivalent to controlling the PMOS transistor Q3 to be turned on via a parasitic diode, with a small voltage drop. The high voltage is applied to the grid electrode of Q4, Vgs>Vt, thus Q4 is cut off. The high voltage is applied to a cathode of D3, thus D3 is cut off. The low voltage is applied to a cathode of D4, thus D4 is turned on. Therefore, the current flow direction is: S1-> Q3-> S4-> S3-> D4-> S2, thus forming a loop.

When low voltage is applied to S1 and high voltage is applied to S2, according to conduction characteristics of PMOS transistors and diodes, the high voltage is applied to the grid electrode of Q3, Vgs>Vt, thus Q3 is cut off. The low voltage is applied to the grid electrode of Q4, Vgs<Vt, thus Q4 is turned on. In this case, the drain electrode of the PMOS transistor Q4 is connected to the high voltage, thus current flows from the drain electrode of Q4 to the source electrode of Q4. It is equivalent to controlling the PMOS transistor Q4 on via a parasitic diode, with a small voltage drop. The low voltage is applied to a cathode of D3, thus D3 is turned on. The high voltage is applied to a cathode of D4, thus D4 is cut off. Therefore, the current flow direction is: S2-> Q4-> S4-> S3-> D3-> S1, thus forming a loop.

Fig. 14C is another alternative schematic circuit diagram illustrating the anti reverse connection module 240 according to embodiment 1 of the present disclosure.

As illustrated in Fig. 14C, the first anti reverse connection element 2411 and the second anti reverse connection element 2412 in the first anti reverse connection unit 241 adopt NMOS transistors, i.e. Q5 and Q6 respectively. The third anti reverse connection element 2421 and the fourth anti reverse connection element 2422 in the second anti reverse connection unit 242 adopt PMOS transistors, i.e. Q7 and Q8 respectively. The first anti reverse connection element 2411 (Q5) is connected between the first port S1 and the third port S3. As illustrated in Fig. 14C, the drain (D) electrode of Q5 is electrically connected to S1, the source (S) electrode of Q5 is electrically connected to S3, and the grid (G) electrode of Q5 is electrically connected to S2, thus controlling the connection between the first port S1 and the third port S3 to be turned on. The second anti reverse connection element (Q6) 2412 is connected between the second port S2 and the third port S3. As illustrated in Fig. 14C, the drain (D) electrode of Q6 is electrically connected to S2, the source (S) electrode of Q6 is electrically connected to S3, and the grid (G) electrode of Q6 is electrically connected to S1, thus controlling the connection between the second port S2 and the third port S3 to be turned on. The third anti reverse connection element 2421 (Q7) is connected between the fourth port S4 and the first port S1. As illustrated in Fig. 14C, the drain (D) electrode of Q7 is electrically connected to S1, the source (S) electrode of Q7 is electrically connected to S4, and the grid (G) electrode of Q7 is electrically connected to S2, thus controlling the connection between the fourth port S4 and the first port S1 to be turned on. The fourth anti reverse connection element 2422 (Q8) is connected between the fourth port S4 and the second port S2. As illustrated in Fig. 14C, the drain (D) electrode of Q8 is electrically connected to S2, the source (S) electrode of Q8 is electrically connected to S4, and the grid (G) electrode of Q8 is electrically connected to S1, thus controlling the connection between the fourth port S4 and the second port S2 to be turned on.

In the following, for example, high voltage and low voltage are applied to the first port S1 and the second port S2 respectively. With reference to Fig. 14C, description is made to specific circuit principle of the anti reverse connection module 240 according to this embodiment.

When high voltage is applied to S1 and low voltage is applied to S2, according to conduction characteristics of NMOS transistors and PMOS transistors, the low voltage is applied to the grid electrode of the PMOS transistor Q7, Vgs<Vt, thus Q7 is turned on. In this case, the drain electrode of the PMOS transistor Q7 is connected to the high voltage, thus current flows from the drain electrode of Q7 to the source electrode of Q7. It is equivalent to controlling the PMOS transistor Q7 to be turned on via a parasitic diode, with a small voltage drop. The high voltage is applied to the grid electrode of PMOS transistor Q8, Vgs>Vt, thus Q8 is cut off. While, the low voltage is applied to the grid electrode of the NMOS transistor Q5, Vgs<Vt, thus Q5 is cut off. The high voltage is applied to the grid electrode of the NMOS transistor Q6, thus Vgs>Vt, and Q6 is turned on. In this case, the drain electrode of NMOS transistor Q6 is connected to the low voltage, thus current flows from the source electrode of Q6 to the drain electrode of Q6. It is equivalent to controlling the NMOS transistor Q6 to be turned on via a parasitic diode, with a small voltage drop. Therefore, the current flow direction is: S1-> Q7-> S4-> S3-> Q6-> S2, thus forming a loop.

When low voltage is applied to S1 and high voltage is applied to S2, according to conduction characteristics of NMOS transistors and PMOS transistors, the high voltage is applied to the grid electrode of the PMOS transistor Q7, Vgs>Vt, thus Q7 is cut off. The low voltage is applied to the grid electrode of PMOS transistor Q8, Vgs<Vt, thus Q8 is turned on. In this case, the drain electrode of the PMOS transistor Q8 is connected to the high voltage, thus current flows from the drain electrode of Q8 to the source electrode of Q8. It is equivalent to controlling the PMOS transistor Q8 to be turned on via a parasitic diode, with a small voltage drop. While, the high voltage is applied to the grid electrode of the NMOS transistor Q5, Vgs>Vt, thus Q5 is turned on. In this case, the drain electrode of the NMOS transistor Q5 is connected to the low voltage, thus current flows from the source electrode of Q5 to the drain electrode of Q5. It is equivalent to controlling the NMOS transistor Q5 to be turned on via a parasitic diode, with a small voltage drop. The low voltage is applied to the grid electrode of the NMOS transistor Q6, thus Vgs<Vt, and Q6 is cut off. Therefore, the current flow direction is: S2-> Q8-> S4-> S3-> Q5-> S1, thus forming a loop.

In detail, in this embodiment, each of the NMOS transistors and PMOS transistors adopts a single MOS transistor. The single MOS transistor, due to manufacturing technique or other factors, has one parasitic diode, also called as an internal diode. Generally, when small current passes through the NMOS transistor and PMOS transistor, a voltage drop generated by current passing through the parasitic diode is smaller than that generated by current passing through an ordinary diode. In addition, under normal circumstances, a conduction direction of an NMOS transistor is from the drain electrode to the source electrode, that is, the voltage of drain electrode is higher than that of the source electrode, so as to achieve switching performance of the NMOS transistor. However, in this embodiment, the current conduction is realized by using the isolation characteristic of the NMOS transistor. That is, in this embodiment, the voltage of source electrode is higher than that of the drain electrode, thus it is equivalent to realizing the reverse current conduction via the parasitic diode, thus decreasing the voltage drop generated by the conduction. Correspondingly, under normal circumstances, a conduction direction of a PMOS transistor is from the source electrode to the drain electrode, that is, the voltage of source electrode is higher than that of the drain electrode, so as to achieve switching performance of the PMOS transistor. However, in this embodiment, the current conduction is realized by using the isolation characteristic of the PMOS transistor. That is, in this embodiment, the voltage of drain electrode is higher than that of the source electrode, thus it is equivalent to realizing the reverse current conduction via the parasitic diode, thus decreasing the voltage drop generated by the conduction.

In detail, in this embodiment, all of the diodes D1-D4 in this embodiment may be germanium diodes, or may also be silicon diodes. Alternatively, they may be Schottky diodes, as long as a diode function can be realized. In addition, because of the characteristic of the diode, a certain voltage drop may be generated by the current passing through the diode. In an electronic device using small voltage for power supply, a diode having a small conduction voltage drop can be used. Since the voltage drop is the characteristic of the diode, it is not described in detail herein.

In a specific implementation of this embodiment, the anti reverse connection module 240 may further include a protection resistor. The protection resistor may be added beside each MOS transistor (including the NMOS and the PMOS). The protection resistor may be connected in series between the grid electrode of the NMOS transistor (or the PMOS transistor) and one of S1 and S2. One of S1 and S2 refers to one of S1 and S2 that is connected to the grid electrode of the NMOS transistor (or the PMOS transistor) in Fig. 14A-Fig. 14C. The protection resistor in this embodiment may be configured to adjust turning-on/turning-off speed of the MOS transistor. When the resistance of the protection resistor connected to the grid electrode is small, the turning-on/ turning-off speed of the MOS transistor is fast, with small switching loss. In contrast, when the resistance of the protection resistor connected to the grid electrode is large, the turning-on/turning-off speed of the MOS transistor is slow, with large switching loss. However, too fast turning-on/turning-off speed of the MOS transistor may greatly increase the change rate of current and voltage of the MOS transistor, thus generating large interference and affecting operation of the whole device. Therefore, the resistance of the protection resistor in embodiments of the present disclosure may be set according to actual demand. In addition, a parasitic capacitor may be formed between the grid electrode and the source electrode of the MOS transistor. Thus a strong oscillation may be generated under driven of the voltage of the grid electrode. The protection resistor together with the parasitic capacitor connected in series between the grid electrode and the source electrode of the MOS transistor may form a serial anti oscillation circuit, which may reduce the oscillation.

It can be seen from above examples that, when the anti reverse connection module 240 is applied in the slave communication device, the load of the slave communication device may be connected to the external interface of the slave communication device via the anti reverse connection module 240. Thus, when the third external interface 230 is connected to the first external interface of the master communication device, no matter the third external interface is positively connected or reversely connected to the first external interface, it can ensure that the circuit of the slave communication device may normally operate. In addition, in this embodiment, the MOS transistor is adopted to realize the anti reverse connection circuit, compared with a mode using four diodes to implement the ant reverse connection circuit, it can effectively reduce the voltage drop. For the electronic device using relatively small voltage, it can improve utilization of electric energy and reduce loss.

### Embodiment 7

The present embodiment provides a schematic diagram of an optional master communication device of a communication system, as shown in FIG. 17, which consists of a signal generator 200 and a first external interface 130, the first external interface 130 consisting of a first pin 131 and a second pin 132, and a signal generator 200 can be electrically connected to one pin in the first pin 131 and second pins 132. An optional way, as shown in FIG. 17, is that the signal generator 200 is electrically connected to the first pin 131.

As another optional implementation of this embodiment, as shown in Fig. 18, the signal generator 200 in the master communication device can also be electrically connected to the first pin 131 and second pins respectively, in which the signal generator 200 is electrically connected to the first pin 131 and the ground end GND, and the second pin 132 is electrically connected to the ground end GND, respectively.

As an optional embodiment of this embodiment, as shown in Fig. 18, the communication system's slave communication device also includes: the signal generator 200 and the first external interface 130, the first external interface 130 is composed of the first pin 131 and the second pin 132, and the signal generator 200 is electrically connected to the first pin 131 and the ground end GND, and the second pin 132 of the first external interface 130 is electrically connected to the ground. End GND.

The master communication device and the communication device can send bit data to the other by means of the signal generator, thus realizing the dual line communication between the communication devices with only two pins.

Next, this embodiment takes the signal generator in the master communication device as an embodiment, and explains the structure and working principle of the signal generator in detail.

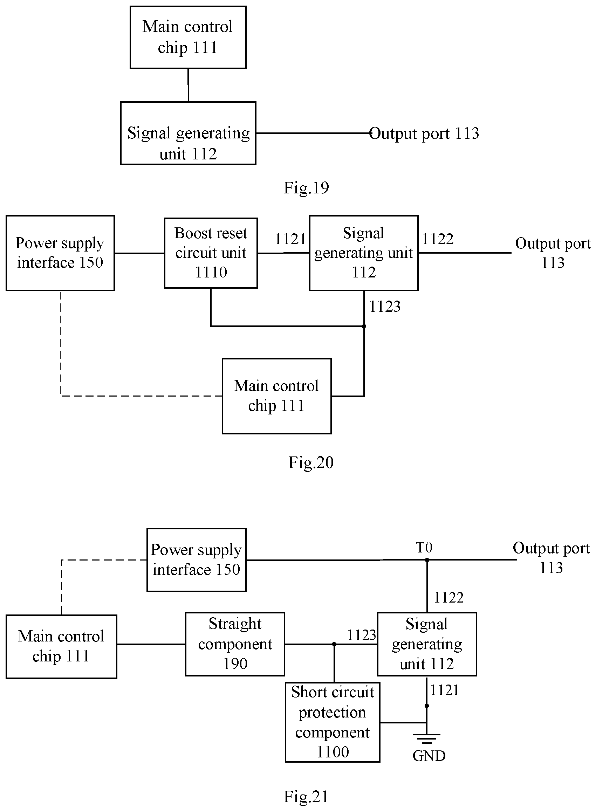

Fig. 19 is a schematic diagram of the structure of the signal generator 200 in the master communication device provided in this embodiment, as shown in Fig. 19, which includes the main control chip 111, the output port 113, and the signal generation unit 112 connected to the main control chip 111 and the output port 113 respectively; in which the main control chip 111 is used for the time corresponding to the bit string corresponding to the N length to be sent. The interval produces X control signals, and outputs the X control signal to generate X signals by the trigger signal generation unit 112, N > 1, X > 1 and X as natural numbers; the signal generation unit 112 is used to produce X signals, in which the time interval between the beginning time of each signal and the opening time of the adjacent first signal is the time interval corresponding to the bit string of the length N to be sent, X more than 1 and X. It's natural number, and output port 113 is used to output X signals.

As an optional implementation of this embodiment, the main control chip 111 can first obtain the corresponding relationship between each bit string in the 2N length N bit string and the time interval, in which the 2N bit strings are different from each other, and the time interval corresponding to the different bit strings is different, and the N is equal to 1. For embodiment, when N=1, each bit string in the 2 bit string of 1 is 0 and 1 respectively, the time interval of the bit string 0 corresponds to T+t1, the time interval of the bit string 1 is T+t2, and the T1 is not equal to T2. When N=2, each bit string in the bit string of 4 length 2 is respectively: 00, 01, 10 and 11, T+t3, T+t4, T+t5 and T+t6, and T3, T4, and T+t6. The duration of T5 and T6 is different. When N=3 or above is referred to N=2, no longer will be mentioned here. Then, a bit string of N of the length to be sent is then obtained, and the time interval corresponding to the bit string of the current length of N is determined according to the corresponding relationship between each bit string in the bit string of the length of N and the time interval.

In an optional implementation of this embodiment, a bit string of a length of N (i.e. N bit data) contains 2N different values, for embodiment, at N=1, 1 bit data, which contains 2 different values, respectively 0,1; N=2, 2 bit data, which contains 4 different values and is divided into 00,01,10,11. To obtain the corresponding relationship between each bit string in the bit string of 2N length N, it is understood that, for embodiment, when N=1, the 0 corresponding time interval is obtained and 1 corresponding time intervals are obtained; when N=2, the 00 corresponding time interval is obtained, the 01 corresponding time interval is obtained, the 10 corresponding time interval is obtained, the 11 corresponding time interval is obtained, the corresponding time interval is obtained, the corresponding bit string corresponds to the time interval. Different time intervals, for embodiment, 00, 01, 10 and 11 correspond to different time intervals. Of course, when N is the other value, it is the same as the above understanding.

In an optional implementation of this embodiment, the main control chip 111 can control the signal generation unit 112 to produce X signals, which means that X low level pulses can be generated or X high level pulses are generated, and the low level pulse / high level pulse may be represented by a waveform representation of a Fang Bo, a sinusoidal wave, a three angle wave, etc., which can be used to distinguish between high and low level pulses. The receiver can identify the received bit data by detecting the time interval between the low level pulse or the high level pulse.

In the present embodiment, the output port 113 is electrically connected with the first pin of the first external interface 130, and one end connected by the signal generation unit 112 and the output port 113 is the end of the output port which is output to the first pin 131 electrically connected with the low level pulse / high level pulse.

In an optional implementation of this embodiment, as shown in FIG. 20, the signal generator 200 also includes: a power supply interface 150 connected to the power supply; the signal generator 200 is connected between the power supply interface 150 and the output port 113, and, as an optional way, in the signal generator 200 of the master communication device, the output port 113 may be electrically connected to the first external interface of the master communication device. Therefore, the power supply can be supplied to the slave communication device 20 connected with the first external interface. The power supply may be supplied by an external power supply of the signal generator 200, or an internal power supply provided by the signal generator 200 (such as an internal battery power supply of the signal generator 200, or a continuous high level output by the main control chip of the signal generator 200 as a power supply, and this embodiment does not limit this).

In this optional implementation, it is optional, as shown in FIG. 20, that the signal generation unit 112 is set between the power supply interface 150 and the output port 113, disconnecting or conducting a path between the power supply interface 150 and the output port 113 under the control of the X control signal output from the main control chip 111, for producing X signals.

As an optional embodiment of the present disclosure, the signal generation unit 112 includes: the first connection end 1121, electrically connected with the power supply interface 150; the second connection end 1122, electrically connected with the output port 113; and the control end 1123, connected to the main control chip 111, and configured to control the 112 and second connection ends of the first connection end 112 and second at the connection end according to the main control chip 111.

In this optional implementation, the signal generation unit 112 may be a PMOS tube, its source (S) as the first connection end 1121 of the signal generation unit 112, whose drain (D) is the second connection end 1122 of the signal generation unit 112, and its gate (G) is the control end 1123 of the signal generation unit 112. Of course, the signal generation unit 112 can also be an NMOS tube, and the ends of each connection are set according to the conduction condition of the NMOS tube. There is no restriction here.

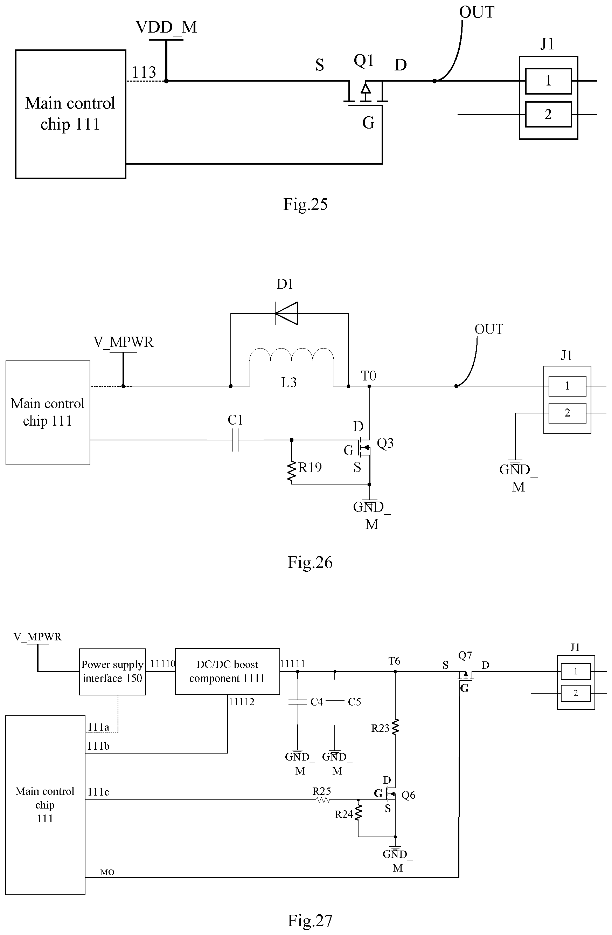

Specifically, as a specific implementation, in embodiment 8, the signal generator 200 provided by the present disclosure is illustrated with embodiment, and Fig. 25 is a circuit schematic of an optional master communication device based on the embodiment of the present disclosure, in which the circuit principle of the signal generator is described in a specific description in the embodiment 8.

In another alternative embodiment of the embodiment, as shown in Fig. 21, the power supply interface 150 is electrically connected to the output port 113. As an alternative way, in the signal generator 200 of the master communication device, the output port 113 can be electrically connected with the first pin of the first external interface of the master communication device, thereby providing a power supply for the communication device connected to the first external interface. The power supply can be supplied by an external power supply or an internal power supply provided by the signal generator 200 (such as the internal battery power of the signal generator 200, or the continuous high level output by the main control chip of the signal generator 200 as a power supply power supply, and this embodiment does not limit this).

In this optional implementation, the signal generation unit 112 is set between the ground end GND and the connection point T0 of the power supply interface 150 and the output port 113, and one end of the signal generation unit 112 is electrically connected to the connection point T0 of the power supply interface 150 and the output port 113, and the other end is electrically connected to the ground end GND, disconnected or between the ground end and the output port 113 under the control of the X control signal output from the main control chip 111. The passage.

As an optional embodiment of the present disclosure, the first connection end 1121 of the signal generation unit 112 is electrically connected with the end GND; the second connection end 1122 is connected to the connection point T0; and the control end 1123 is connected to the main control chip 111 and configured to control the first connection end 1121 and second connection end 1122 disconnection or conduction by the X signals output by the main control chip 111.

In this optional implementation, the signal generation unit 112 may be the NMOS tube, which is the source (S) as the first connection end of the signal generation unit, and its drain (D) is the second connection end of the signal generation unit, and the gate (G) is the control end of the signal generation unit. Of course, the signal generation unit 112 can also be a PMOS tube, and the ends of each connection are set according to the conduction condition of the PMOS tube. There is no restriction here.

In another optional implementation of this embodiment, as shown in figures 20 and 21, the power supply interface 150 can also be electrically connected with the main control chip 111 (as shown in a dotted line), thereby providing power supply for the main control chip 111, and the power supply can also be supplied to the communication device connected to the first pair of external interfaces.

As shown in Fig. 21, as an optional embodiment of an embodiment of the present disclosure, the signal generator 200 may also include: a straight component 190 connected between the main control chip 111 and the signal generation unit 112. As an alternative way, the isolating component 190 can be a capacitor or other components that can isolate DC. The DC signal can be isolated by this isolation component to prevent the control end of the main control device to output high level for a long time due to incorrect operation or other abnormal conditions, which causes the long time conduction of the connection module to cause the device to burn down.

As an optional embodiment of the embodiment of the present disclosure, as shown in Fig. 21, the signal generator 200 may also include a short circuit protection component 1100 in series between the first connecting end 1121 and the third connection end 1123 of the signal generation unit 112, and as an alternative, the short circuit protection component 1100 may be a resistor or other protection component, and this embodiment is not limited. Short circuit protection component 1100, for embodiment, can prevent the G pole of NMOS tube from causing MOS conduction due to the accumulation of abnormal charges.

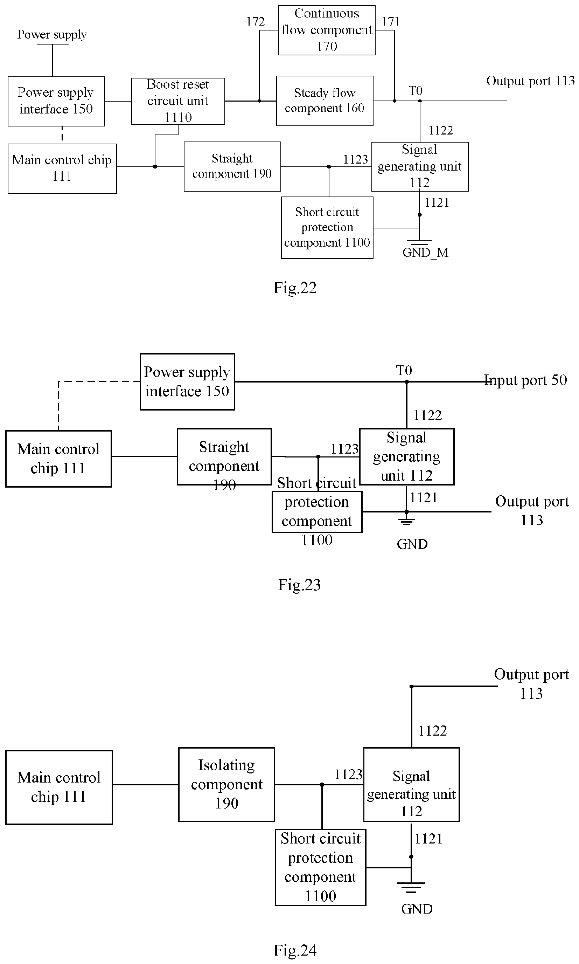

As an optional implementation of the embodiment of the present disclosure, on the basis of the figure 21, the signal generator 200 may also include: a current stabilizing component 160, as shown in Fig. 22, connected between the power supply interface 150 and the connection point T0. When implemented, as an alternative way, the steady flow assembly can include: inductance element. The steady flow component can make use of the characteristic of the inductor to ensure that the circuit current has no mutation, and the other devices of the master communication device will not be burned down when the signal generation unit 112 is on the ground.

In addition, as an optional embodiment of the embodiment of the present disclosure, as shown in Fig. 22, the signal generator 200 may also include: the continuation component 170, in which the first end 171 of the continuous flow component 170 is electrically connected with the connection point T0, the second end 172 of the continuous flow component 170 is connected electrically with the power supply interface, and the continuation component 170 can only be connected from the 171 to second end 172 at the first end. When implemented, as an alternative way, the freewheeling assembly 170 can be diode or other components that can be continued. The implementation is not limited. Taking diode as an embodiment, the positive pole of diode is used as the first end 171 and the negative pole as the second terminal 172, that is, diode can be parallel connected to two ends of inductor in parallel. When the signal generation unit 112 becomes disconnected from the conduction state, the electromotive force at both ends of the inductor in the current stabilizing component does not disappear immediately, the voltage of the connection point T0 is unstable, the wave peak or the trough of the waveform oscillates (with Burr), and the residual emf will generate the reverse voltage to the element in the circuit, and then burn down the components and reverse the diode at both ends of the inductor. The release of the residual electromotive force (called the diode of this function is called a continuous current diode), thus protecting the safety of the other components in the circuit, and further, through the continuation component, the oscillation of the fast down edge can be eliminated (i.e., the stationary waveform is obtained) to output a stable voltage (high level or low level).

Specifically, as a specific implementation, in Embodiment 9, the signal generator 200 provided by the present disclosure is illustrated with embodiment, and Fig. 26 is a circuit schematic of an optional master communication device based on the embodiment of the present disclosure, in which the circuit principle of the signal generator is described in a specific description in the embodiment 9.

As an optional embodiment of the embodiment of the present disclosure, as shown in figures 20 and 22, the signal generator 200 may also include: a boost reset circuit unit 1110, which can be connected between the power supply interface 150 and the output port 113, which is designed to increase the first external interface connected to the transmission outlet to the voltage from the communication device 20 so as to make a foot. Enough voltage for power supply or charging from communication devices. As shown in FIG. 20, the boost reset circuit unit 1110 can be connected between the first connection end 1121 of the power supply interface 150 and the signal generation unit 112 and connected with the main control chip 111; as another optional implementation, as shown in Fig. 22, the boost reset circuit unit 1110 may be connected between the power supply interface 150 and the current stabilizing component 160 and are connected to the main control chip 111 and configured to be roots. According to the boost control signal output by the master chip 10, the boost reset circuit unit 1110 enters the working state or does not work.

In the specific implementation, as an alternative way, as illustrated in Fig. 23, the boost reset circuit unit 1110 may include the DC/DC boost component 1111, and the DC/DC boost component 1111 includes an input end 11110, an electrical connection to the power supply interface 150, an output terminal 11111, a first connection end 1121 with a signal generating single 112 (a case of FIG. 20) or an electrical connection with the connection point T0 (the case of Fig. 22). And the control terminal 11112 is electrically connected with the main control chip 111 and is configured to control the DC/DC boost component 1111 into a working state or non working state by a boost control signal output according to the main control chip 111.

In this embodiment, in the normal state, the main control chip 111 will continue to send a boost control signal to the DC/DC boost component 1111, then the DC/DC boost component 1111 is in a working state, and when the DC/DC boost component 1111 is in a working state, the DC/DC boost component 1111 will boost the power supply voltage input to the input terminal 11110 in accordance with the boost control signal output by the main control chip 111. The output voltage of the end 11111 is higher than the power supply power supply; if the master control chip 111 does not send a boost control signal to the DC/DC boost component 1111, the DC/DC boost component 1111 is in a non operating state, and when the DC/DC boost component 1111 is in a non operating state, the output voltage of the output terminal 11111 of the DC/DC boost group 1111 is rapidly reduced to a low level, at this time, no matter the signal generation unit. 112 of the first connection end 1121 and second connection end 1122 are turned on or off, and the first pin 131 will always output a low level signal; if the first pin 131 continues to output a low level of time to a preset time length (the preset length mainly control chip 111 does not send a single continuous time of the rise voltage control signal to the DC/DC boost component 1111), the continuous low level signal is a reset signal at this time. The master communication device 10 is in the reset state from the communication device 20, and the master communication device 10 can not send out the bit data to be output, and can not receive bit data sent from the communication device 20. Therefore, when the master communication device 10 detects a data transmission or receiving exception (for embodiment, the response data that is not received in a valid time, etc.), the primary and slave communication device can be started to enter the reset state by this way, that is, the master control chip 111 does not send a boost control signal to the DC/DC boost component 1111.

Thus, through the master communication device 10 provided in the embodiment of the present disclosure, the voltage of the power supply power supply voltage is controlled by the DC/DC boost component 1111 by the boost control signal output by the main control chip 111, so that the voltage of the input to the signal generation module 110 is the voltage supply after the boost, and the main control chip 111 does not output the boost control signal to start the master-slave through the main control chip 111. The function of the communication device to enter the reset state.

As an alternative embodiment of the present disclosure, the boost reset circuit unit 1110 in the master communication device 10 can also be set between the power supply interface 150 and the power supply (the internal power supply interface of the communication device), and the boost reset circuit unit 1110 also needs to be connected to the master chip 111 to receive a control signal of the main control chip 111.

In the specific implementation, as an alternative, the boost reset circuit unit 1110 may use the structure of the boost reset circuit unit as shown in Fig. 7C, the internal structure of the boost reset circuit unit 1110 and the working principle can refer to the specific description of Fig. 7C in the above embodiment, and no longer is described here.

The purpose of the optional implementation with the boost reset circuit unit is to increase the output voltage of the output port 113 so that the first pin 131 connected to the output port is output to the voltage from the communication device 20 so that the signal generator has a high enough voltage to supply or charge a power supply from the communication device 20, thus avoiding the power loss or voltage reduction in the circuit. It is not possible to achieve the minimum input voltage of some components from communication device 20, and provide reset function for signal generator.

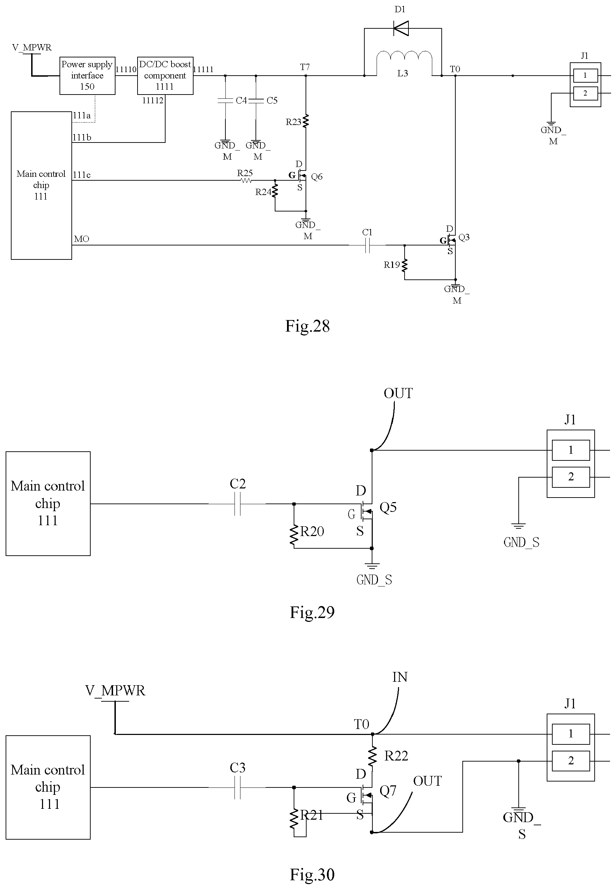

Specifically, as a specific implementation, in the embodiment 10, an embodiment is given to illustrate the case with the boost reset circuit unit 1110 in the signal generator 200 provided by the present disclosure, and Fig. 27 and Fig. 28 are circuit schematics of an optional master communication device based on the embodiment of the present disclosure, in which the circuit principle of the signal generator is referred to in the implementation embodiment 10. Body description.

The signal generator of the master communication device provided by this embodiment can send bit data from the communication device to realize the dual line communication between the communication devices with only two pins. In addition, the signal generator can also increase the output voltage of the output port, so that the first pin 131 is output to the voltage from the communication device 20 so that a sufficiently high voltage is supplied or charged from the communication device 20 so that the minimum input voltage of some components in the communication device 20 can not be reached as a result of the power loss or the decrease in the electric voltage in the circuit. And the signal generator also has reset function.

In this embodiment, as an optional implementation in this embodiment, the structure and working principle of the signal generator from the communication device are basically the same as the signal generator in the master communication device described in figures 19 and 21. The difference is that, from the signal generator of the communication device and the signal generator of the master communication device, the difference is that in the signal generator from the communication device, the power supply power supply of the power supply interface 150 comes only from the internal power supply provided from the communication device (such as the internal battery power from the communication device, this embodiment is not limited), not from the slave communication. The external power supply for the letter equipment. In addition, as shown in Fig. 23, the signal generator also includes: an input port 50, the input port 50 is electrically connected with the power supply interface 150, the output port 113 is connected to the ground end, and the signal generation unit 112 is set between the input port 50 and the output port 113, disconnecting or conducting a path between the input port 50 and the output port 113 under the control of the X control signal output of the main control chip, for producing a X letter. Number. In the communication device, the input port 50 is electrically connected with the first pin of the first external device interface, and the output port 113 is electrically connected with the second pin of the first external device interface.

As an optional embodiment of the present disclosure, the signal generation unit 112 includes: the first connection end 1121, electrically connected to the connection point T0 of the power supply interface 150 and the input port 50; the second connection end 1122, electrically connected to the output port 113, and the grounding end GND; and the control terminal 1123, connected to the main control chip 111, and configured to control the first connection to the X signals output according to the master chip 111 output. The connecting end 1121 and second connection end 1122 are disconnected or connected.

Specifically, as a specific implementation, in the embodiment 11, an embodiment of the signal generator 200 provided by the present disclosure is illustrated, and Fig. 29 is an optional circuit schematic of a communication device based on the embodiment of the present disclosure, in which the circuit principle of the signal occurrence is described in a specific description in the embodiment 11.

As another optional implementation in this embodiment, on the basis of Fig. 21, the signal generator in the communication device may not require a power supply interface 150, as shown in Fig. 24, as shown in Fig. 24, the signal generation unit 112 is set between the ground end GND and the output port 113, disconnecting or conducting a path between the ground end and the output port 113 under the control of the X control signal transmitted by the main control chip 111. In the communication device, the output port 113 is electrically connected with the first pin of the first external device interface, and is electrically connected to the first external device interface of the master communication device through the first external device interface, so that the output port 113 can obtain the high level provided by the master communication device, and the level of the output port 113 can be pulled down when the channel between the conduction ground and the output port 113 is lowered, and the output is low. A level pulse signal. For embodiment, the description of block 190 and short circuit protection component 1100 can be seen in the description in Figure 21.

Specifically, as a specific implementation, in embodiment 12, an embodiment of the signal generator 200 provided by the present disclosure is illustrated, and Fig. 30 is an optional circuit schematic of a communication device based on the embodiment of the present disclosure, in which the circuit principle of the signal generation is described in a specific description in the embodiment 12.

Thus, from the signal generator of the communication device, the bit data can be sent to the master communication device, thus realizing the dual line communication between the communication devices with only two pins.

The signal generator provided by the present embodiment can send bit data to the communication opposite end to achieve double line communication between communication devices with only two pins, and a signal generator of the master communication device can also supply power from the communication device.

### Embodiment 8

This embodiment illustrates the working principle of the master communication device of embodiment 7. Fig. 25 is a schematic diagram of an optional master communication device of embodiment 7 of the present disclosure.

The signal generation device 200 provided in this embodiment illustrates that in the optional circuit schematic diagram, the signal generation unit 112 is the PMOS tube Q1, its source (S) as the first connection end 1121 of the signal generation unit 112, and its drain (D) as the second connection end 1122 of the signal generation unit 112, and its gate (G) as the control end 1123 of the signal generation unit 112; the main source (G) is a control end 1123 of the signal generation unit 112; The control chip 111; the output port OUT; the first external pin 130 is J1, the first pin 131 is the J1 pin 1, the second pin 132 is the pin 2 of the J1, and the J1 pin 1 is connected to the D end of the Q1 by the output port OUT of the signal generator, and the S end of the Q1 is connected to the power supply source VDD_M, which is connected to the main control chip 111, and the output signal of 111 of the master chip 111. The path between VDD_M and pin 1 of J1 is disconnected or controlled under control. Among them, the PMOS tube can be adopted, but not limited to the following models: 2N7102, FDV301, FDV303 and so on.

The following is a brief description of the working principle of the signal generator 200, which is provided by the present disclosure.

In the silent state, the Q1 is in the conduction state (at this time, the main control chip 111 sends a low level signal or does not send a signal), and the VDD_M continues to power the high level so that the Vs>Vg, the Q1 is turned on, the pin 1 outputs the high level, at this time power supply from the communication device 20; when the data is sent, the main control chip 111 sends the high level signal to control the Q1 disconnection, at this time, the output port OUT passes through the first external device interface. The pin 1 outputs a low level signal, producing a low level pulse and returning to the silent state after the end of the data (at this time, the main control chip 111 sends a low level signal or does not send a signal, and the Q1 normal state is turned on).

The signal generator provided by the present embodiment can generate and send the above low level pulses at a time interval corresponding to the bit string of the length of N to be sent, transmits data to the communication opposite end, realizes the dual line communication between the communication devices with only two pins, and the signal generator of the master communication device can also supply power from the communication device.

### Embodiment 9

This embodiment illustrates the working principle of the master communication device of embodiment 7. Fig. 26 is a schematic diagram of another optional master communication device of embodiment 7 of the present disclosure.

The signal generation device 200 provided in this embodiment illustrates that in the optional circuit schematic diagram, the signal generation unit 112 is the NMOS tube Q3, its source (S) as the first connection end 1121 of the signal generation unit 112, and its drain (D) as the second connection end 1122 of the signal generation unit 112, and its gate (G) as the control end 1123 of the signal generation unit 112; the main source (G) is a control end 1123 of the signal generation unit 112; The control chip MO; the output port OUT; the first external interface 130 is J1, the first pin 131 is the pin 1 of J1, the second pin 132 is the J1 pin 2, the power supply V_MPWR (the power supply can be provided by the external supply also can be provided internally), the current stabilizing component 160 is the inductance L3, the continuous flow component 170 is a diode D1, the straight component 190 is C1, in which the J1 pin 1 and the output port of the signal generator. OUT electrical connection is connected to the power supply V_MPWR through inductance L3 and diode D1, and L3 is connected between power supply and OUT, D1 is connected with L3, D1's positive electrode is connected to the output port OUT, and the negative electrode is connected to the power supply; J1 pin 2 is connected to the ground end of the power supply; The D end is connected to the connection point T0 of the L3 and the output port OUT, and the R19 is connected to the S end of the septum capacitor C1 and Q3; the D end and the S end of the Q3 are disconnected from the output signal of the main chip MO. Among them, the NMOS tube can be used but not limited to the following models: 2N7102, FDV301, FDV303 and so on; diodes can be used but not limited to the following models: BAR43, BAR54, BAR46, BAR60 and so on. The following is a brief description of the working principle of the signal generator 100, which is provided by the present disclosure.

In the silent state, the Q3 is in a disconnected state (at this time, the main control chip MO sends a low level signal or does not send a signal), the voltage of the connection point T0 is a voltage of the power supply, and the high level is maintained, and the output port OUT outputs a high level through the pin 1 of the first external device interface J1 (at this time power supply from the communication device 20); when the data is sent, the master chip MO sends a high level signal to control the Q3 guide. Through, the voltage of the connection point T0 is pulled down (T0 grounding) to produce a low level pulse, and the output port OUT outputs a low level pulse signal through the pin 1 of the first external device interface J1, and returns to the silent state after the data is sent to the end.

The signal generator provided by the present embodiment can generate and send the above low level pulses at a time interval corresponding to the bit string of the length of N to be sent, transmits data to the communication opposite end, realizes the dual line communication between the communication devices with only two pins, and the signal generator of the master communication device can also supply power from the communication device.

### Embodiment 10

In this embodiment, the principle of boost reset circuit unit in signal generator 200 is illustrated in an Embodiment 7. Figures 27 and 28 are the schematic diagrams of two optional signal generator 200, respectively, for embodiment 7 of the present disclosure.

As shown in Fig. 27, as shown in Fig. 27, the off block 1113 is an NMOS tube Q6, and its source (S) is the first connection end 11130 of the off module, and its drain (D) is used as the second connection end 11131 of the off module, and its gate (G) is the control end 9032 of the off module; the signal generation unit 112 is the PMOS tube Q7, and its source (S) is the first connection end 1121 of the signal generation unit 112, and its drain pole (D) is used as the one. The second connection end 1122 of the signal generation unit 112 is a gate (G) as the control end 1123 of the signal generation unit 112; the first external interface 130 is J1, the first pin 131 is J1's pin 1, the second pin 132 is J1 pin 2, the power supply V_MPWR, the filter component 1112 as the capacitance C4 and C5, the discharge protection component 1115 is the resistance R23, the flow limiting component 1116 is resistance R25 and the block protection unit is broken. Part 1114 is a resistance R24; in which the control terminal 11112 of the power supply interface 150 and the DC/DC boost component 1111 are electrically connected to the power supply port 111a of the main control chip 1110, the boost reset control port 111b, the power supply interface 150 electrically connected to the input terminal 11110 of the DC/DC boost component 1111; the filter capacitor C4 and C5 are connected to the output terminal 11111 of the DC/DC boost component 1111 and the end GND_M respectively; the main control chip is connected. The 111 pass control port 111C is electrically connected to the G end of the Q6 through the loss resistance R25, the S end of the Q6 terminal GND_M, the D end of the Q6, and the connection point between the output end 11111 of the DC/DC boost component 1111 and the Q7 S end. The path between the GND_M and the connection point T6 is opened or guided; the pin 1 of the J1 is connected to the D end of the Q7, the S end of the Q7 is connected to the output end of the DC/DC boost component 1111, and the G end of the Q7 is connected to the signal of the master chip 10 to generate the control port MO, and the Q7 ends and the terminals disconnect or communicate between the voltage boost component 1111 and the pin 1 under the control signal of the signal production control port output. Access.

Among them, the DC/DC boost component 1111 can include the DC/DC boost chip, the inductor and the diode and the like, which is the common knowledge of the technical personnel in the field, no longer on the structure of the DC/DC boost component 1111, and the DC/DC boost chip can be used but not limited to the following models: MC34063A, BQ24195L, MP3209, etc.; PMOS tubes can be adopted but not limited to the following models: 2N7002, FDV301 FDV303 and so on; the NMOS tube can be used but not limited to the following models: 2N7002, FDV301, FDV303, etc.; to speed up the discharge speed V4 and V5 (V4=R23*C4, V5=R23*C5) R23 of capacitance C4 and C5, the smaller the better the better, a few ohms can be selected.

The following is a brief description of the working principle of the signal generator 200, which is provided by the present disclosure.

In the silent state, the DC/DC boost component 1111 receives the boost control signal sent by the boost reset control port 111b and boosts the power supply voltage of the power supply, and the capacitance C4 and C5 remove the burr in the voltage signal after the boost; the Q6 is in a disconnected state (at this time, the off control port 111C sends a low level signal or does not send a signal), and the voltage of the connection point T6 passes through DC/DC liters. The voltage after the pressure component 1111 increases, the Q7 is in the conduction state (at this time, the signal generation control port MO sends a low level signal or does not send a signal), V_MPWR keeps the power supply high, causes the Vs>Vg, Q7 to pass, and the J1 pin 1 continuously outputs the high level (the voltage after the boost).

When the data is sent, the signal generation control port MO sends a high level signal, and the Q7 is disconnected. The J1 pin 1 outputs the low level signal, and the transmission data is returned to the silent state (at this time, the signal generation control port MO sends the low level signal or does not send the signal, and the Q7 normal state is turned on).

When the reset is needed, the boost control port 111b of the main control chip 111 may not send the boost control signal to the DC/DC boost component 1111, the DC/DC boost component 1111 stops working, the output voltage of the output end 11111 is zero, the voltage of the connection point T6 is pulled down, and the J1 pin 1 continues to output the low level signal regardless of the Q7 conduction or turn off, and the master communication device 10 cannot move from the level change to slave. The communication device 20 sends bit data and can not receive bit data sent from the communication device 20. At this time, the master communication device 10 and the communication device 20 are in a reset state.

However, because the capacitor C4 and C5 have a certain electrical energy storage, after the DC/DC boost component 1111 stops working, C4 and C5 will go through a period of time (such as 10ms) to discharge completely, so the connection point T6 will also slow down from high level to low level, accordingly, the level of the 1 output of J1's pin will also change from high to low, so the C4 and C5 will need to be quickly placed by controlling Q6 conductance. Electric. Specifically, the pass off control port 111C sends a high level signal, controls the Q6 conduction, the voltage of the connection point T6 is pulled low, the C4 and C5 can be discharged completely completely, the level of the J1 pin 1 output will also be rapidly changed from high to low, thus the time of continuous output of the low level signal from the pin 1 identified from the communication device 20 is (preset long -10ms), leading to the failure to effectively identify the communication device 20 from the communication device 20. The continuous output low level signal is the reset signal.

Therefore, when the boost reset control port 111b does not send the initial time of the boost control signal to the DC/DC boost component 1111, the off control port 111C sends a off control signal to the Q6 and makes a rapid discharge of the C4 and C5 by controlling the Q6 conduction. Specifically, the connection control port 111C sends the high level signal, controls the Q6 conduction, C4 and C5 form the circuit with R23 and GND_M respectively, so that C4 and C5 can be fully discharged completely, and the level of the J1 pin 1 output will also be rapidly changed from high level to low level.

As shown in Fig. 28, as shown in Fig. 28, the off block 1113 is an NMOS tube Q6, and its source (S) is the first connection end 11130 of the off module, and its drain (D) is used as the second connection end 11131 of the off module, and its gate (G) is the control end 11132 of the off module; the signal generation unit 112 is the NMOS tube Q3, and its source (S) is the first connection end 1121 of the signal generation unit, and its drain (D) is used as a letter. The second connection end 1122 of the number generating unit, which is the gate (G) as the control end 1123 of the signal generation unit; the first external interface 130 is J1, the first pin 131 is the pin 1 of J1, the second pin 132 is the pin 2 of the J1, the power supply V_MPWR, the filter component 1112 is the capacitance C4 and C5, the discharge protection component 1115 is the resistance R23, the current limiting component 1116 is resistance R25, and the off module protects component 1114 for the module 1114 to be 1114 Resistance R24, the steady flow component 160 is inductor L3, the continuous flow component 170 is a diode D1, the first voltage load element 181 is the voltage divider resistance R3, the second partial pressure load element 182 is the voltage divider resistor R11, the straight component 190 is the capacitance C1, the short circuit protection component 1100 is the resistance R19; in which the control terminal 11112 of the power supply interface 150 and the DC/DC boost component 1111 is connected to the power port 11 of the main control chip 111 respectively. 1a, boost reset control port 111b, the power supply interface 150 is electrically connected to the input end 11111 of the DC/DC boost component 1111; the filter capacitance C4 and C5 are connected between the output end 11111 of the DC/DC boost component 1111 and the end GND_M; the pin 1 of the J1 is connected to the output end 11111 of the DC/DC boost component 1111 by the inductance L3 and the diode D1, and the D1 is connected to the pin 1 and the negative electrode is connected to the negative electrode 1. To the output end 11111, the pin 2 of the J1 is electrically connected with the ground end GND_M of the power supply; the open control port 111C of the main control chip 111 is electrically connected to the G end of the Q6 through the depletion resistance R25, the S end end end GND_M of the Q6, the D end of the Q6 and the connection between the output end 11111 of the DC/DC boost component 1111, and the connection between the connection point and the terminus, The D end and the S end disconnect or guide the path between the end GND_M and the connection point T7 under the control signal of the off control port 111C; the signal generation control port MO of the main control chip 111 connects to the G end of Q3 through a straight capacitor C1, and the S end of the Q3 is connected to the connection point of the pin 1. Under the control of the control signal of the signal generation control port MO, the path between the ground terminal GND_M and the connection point T0 is broken.

Among them, the DC/DC boost component 1111 can include the DC/DC boost chip, the inductor and the diode and the like, which is the common knowledge of the technical personnel in the field, no longer on the structure of the DC/DC boost component 1111, and the DC/DC boost chip can be used but not limited to the following models: MC34063A, BQ24195L, MP3209, etc.; NMOS tubes can be adopted but not limited to the following models: 2N7002, FDV301 FDV303 and so on. Diodes can be adopted but not limited to the following models: BAR43, BAR54, BAR46, BAR50 and so on. To speed up the discharge speed of capacitors C4 and C5, the smaller the resistance of V4 and V5 (V4=R23*C4, V5=R23*C5) R23, the better the choice of ohms. In addition, the resistance of the voltage divider R3 and the R11 can be selected according to the demand, so that the voltage detected by the detection port is matched with the output voltage of the power supply, and no longer will be described. Among them, the resistance value of divider resistance R3 and R11 can be followed by the following formula, V_T1=R11/ (R3+R11) *V_T0.

The following is a brief description of the working principle of the master communication device 10 provided by the present disclosure.

In the silent state, the DC/DC boost component 1111 receives the boost control signal sent by the boost reset control port 111b and boosts the power supply voltage of the power supply, and the capacitance C4 and C5 remove the burr in the voltage signal after the boost; Q3 and Q6 are in disconnected state (at this time, the signal generation control port MO, the off control port 111C sends the low level signal or does not send the signal). The voltage of connection point T0 and T7 is voltage rising after DC/DC boost component 1111, keeps high level, J1 pin 1 outputs high level.

When the data is sent, the signal generation control port MO sends a high level signal, controls the Q3 conduction, the voltage of the connection point T0 is pulled down, the level of the J1 pin 1 output is changed from high to low, the low level pulse is produced, the first pin output low level pulse signal, and the main control chip 111 can transmit the corresponding bit data according to the time interval between the low level pulse signals and send the end of the data. After the signal is generated, the control port MO sends a low level signal and controls the Q3 to disconnect. The voltage of the connection point T0 is a voltage after the 1111 boost of the DC/DC boost component, and the level of the J1 pin 1 output changes from low to high to the silent state; when the data is received, the detection port MI detects the voltage of the connecting point T1 suddenly from the high level to the low level, indicating that the data is received and the signal receiving mode is received. Block 120 can determine the corresponding bit string corresponding to the length of N based on the time interval between the low-level pulse signals detected by the detection port MI.

When the reset is needed, the boost control reset port 111b does not send a boost control signal to the DC/DC boost component 1111, the DC/DC boost component 1111 stops working, the output voltage of the output end 11111 is zero, the voltage of the connection point T7, T0 is pulled down, and the J1 pin 1 continues to output the low level signal, regardless of Q3 conduction or disconnection, and the master communication device 10 can not go from the communication device 20 through the level change. Sending bit data or receiving bit data transmitted from communication device 20, at this time, the master communication device 10 and the communication device 20 are in reset state.

However, because the capacitor C4 and C5 have a certain electrical energy storage, after the DC/DC boost component 1111 stops working, C4 and C5 will go through a period of time (such as 20ms) to discharge completely, so the connection point T7 will also slow down from high level to low level, accordingly, the level of the 1 output of J1's pin will also change from high to low, so the C4 and C5 will need to be quickly placed by controlling Q6 conductance. Electric. Specifically, the pass off control port 111C sends a high level signal, controls the Q6 conduction, the voltage of the connection point T7 is pulled low, the C4 and C5 can be discharged completely completely, the level of the J1 pin 1 output will also be rapidly changed from high to low, thus the time of continuous output of the low level signal from the pin 1 identified from the communication device 20 is (preset long -20ms), leading to the failure to effectively identify the communication device 20 from the communication device 20. The continuous output low level signal is the reset signal.

Therefore, when the boost reset control port 111b does not send the initial time of the boost control signal to the DC/DC boost component 1111, the off control port 111C sends a off control signal to the Q6, and the C4 and C5 are quickly discharged by controlling the Q6 conduction. Specifically, the connection control port 111C sends the high level signal, controls the Q6 conduction, C4 and C5 form the circuit with R23 respectively, so that the C4 and C5 can be fully discharged completely, the level of the J1 pin 1 output will also be rapidly changed from high to low.

The signal generator provided by the present embodiment can generate and send the above low level pulses at a time interval corresponding to the bit string of the length of N to be sent, to complete the transmission of data to the communication opposite end, and to realize the double line communication between the communication devices with only two pins. In addition, the signal generator can also increase the output voltage of the output port OUT, so that the first pin 131 is output to the voltage from the communication device 20 so that a high enough voltage is supplied or charged from the communication device 20 so that the minimum input voltage of some components from the communication device 20 can not be achieved because of the power loss or voltage reduction in the circuit. The signal generator also has the function of restoring the master communication device and the communication device.

### Embodiment 11

In the embodiment 7, the operation principle of the communication device is illustrated with embodiments. Fig. 29 is an optional schematic diagram of the communication device from the embodiment 7 of the present disclosure.

In the embodiment of the communication device, an embodiment is given for the signal generator 200 provided by the present disclosure, in which the signal generation unit 112 is the NMOS tube Q5, and its source (S) is the first connection end 1121 of the signal generation unit 112, and its drain (D) is the second connection end 1122 of the signal generation unit 112, and the gate (G) is used as the signal generation unit 11. 2 control terminal 1123; the main control chip 111; the output port OUT; the first external interface 130 is J1, the first pin 131 is the J1 pin 1, the second pin 132 is the pin 2, the straight component 190 is C2, and the J1 pin is electrically connected to the output port of the signal generator; the pin 2 of J1 is electrically connected to the ground end; the main control chip 111 connects to the Q5 G end through the straight capacitor C2. The end of the GND_S, the D end of the Q5 is connected to the output port OUT, and the R20 is connected to the S end of the straight capacitance C2 and Q5; the D end and the S end of the Q5 disconnect or lead the path between the GND_S and the output ports under the control of the output signal of the main control chip 111. Among them, the NMOS tube can be adopted, but not limited to the following models: 2N7102, FDV301, FDV303 and so on. The following is a brief description of the working principle of the signal generator 200, which is provided by the present disclosure.

In the silent state, the Q5 is in a disconnected state (at this time, the main control chip 111 sends a low level signal or does not send a signal), the voltage of the output port OUT is mainly a high level voltage provided by the communication device to the pin 1, and the electrical voltage of the output port OUT remains high when the master communication device continues to output the high level; when the data is sent, the main control chip 111 sends a high level signal to control the Q5 conduction. The voltage of the output port OUT is pulled down (ground) to produce a low level pulse, and the output port OUT outputs a low level pulse signal through the pin 1 of the first external device interface J1, and returns to the silent state after the data is sent to the end.

The signal generator provided by the present embodiment can generate and send the above low level pulses at a time interval corresponding to the bit string of the length of N to be sent, to complete the transmission of data to the communication opposite end, and to realize the double line communication between the communication devices with only two pins. In addition, the signal generator can also increase the output voltage of the output port OUT, so that the first pin 131 is output to the voltage from the communication device 20 so that a high enough voltage is supplied or charged from the communication device 20 so that the minimum input voltage of some components from the communication device 20 can not be achieved because of the power loss or voltage reduction in the circuit. The status occurs, and provides reset function for the master communication device 10.

### Embodiment 12

In the embodiment 7, the operation principle of the communication device is illustrated with embodiments. Fig. 30 is another optional circuit diagram of the communication device from the embodiment 7 of the present disclosure.

The signal generation device 200 provided in this embodiment illustrates that in the optional circuit schematic diagram, the signal generation unit 112 is the NMOS tube Q7, its source (S) as the first connection end 1121 of the signal generation unit 112, and its drain (D) as the second connection end 1122 of the signal generation unit 112, and its gate (G) as the control end 1123 of the signal generation unit 112; the main source (G) is a control end 1123 of the signal generation unit 112; The control chip 111; the input port IN, the output port OUT; the first external interface 130 is J1, the first pin 131 is the J1 pin 1, the second pin 132 is J1 pin 2, the power supply V_MPWR (the power supply power can be provided only internally), the straight component 190 is C3, the load resistor is R22, and the J1 pin 1 is electrically connected to the power supply V_MPWR by the input port of the signal generator; J1 The foot 2 is electrically connected to the input port of the signal generator, and is electrically connected to the ground end GND_S of the power supply; the main control chip 111 connects to the G end of the Q7 by the direct capacitor C3, and the S end GND_S of the Q7, and the D end of the Q7 is connected to the connection point of the power supply V_MPWR and input port through the load resistance R22. The terminal and the S port are controlled by the output signal of the main chip 111, and the path between the terminal GND_M and the connection point T0 is disconnected. Among them, the NMOS tube can be adopted, but not limited to the following models: 2N7102, FDV301, FDV303 and so on. In addition, the resistance of R22 can be selected according to the need, so that the host communication device can detect the obvious current change. The following is a brief description of the working principle of the signal generator 200, which is provided by the present disclosure.

In the silent state, the Q7 is in a disconnected state (at this time, the main control chip 111 sends a low level signal or does not send a signal), the input port IN and the power supply V_MPWR, the high level, the output end OUT is connected to the master communication device through the pin 2, the output terminal OUT output current is zero or very small; when the data is sent, the main control chip 111 sends the high level signal to control the Q7 conduction at this time, from this time, from transmission. The entrance IN to the output end OUT, then form a loop through the pin 2 to the ground in the master communication device, forms a large current in the loop from the input port IN to the master communication device, and the master communication device can judge that the high level pulse is received according to the large current flowing through the sampling resistance, and then the signal is received. Thus, when the Q7 is turned on, the output terminal OUT outputs a large current, in which the output is very large. The master communication device is reflected in the high level pulse, so the output port OUT can output a high level pulse signal from the pin 2 of the first external device interface J1 of the communication device and return to the silent state after the data is sent to the end.

The signal generator provided by the present embodiment can generate and send the above low level pulses at a time interval corresponding to the bit string of the length of N to be sent, to complete the transmission of data to the communication opposite end, and to realize the dual line communication between the communication devices with only two pins.

It will be understood that, the flow chart or any process or method described herein in other manners may represent a module, segment, or portion of code that comprises one or more executable instructions to implement the specified logic function(s) or that comprises one or more executable instructions of the steps of the progress. Although the flow chart shows a specific order of execution, it is understood that the order of execution may differ from that which is depicted. For example, the order of execution of two or more boxes may be scrambled relative to the order shown.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

It can be understood by those skilled in the art that all or part of the steps in the method of the above embodiments can be implemented by instructing related hardware via programs, the program may be stored in a computer readable storage medium, and the program includes one step or combinations of the steps of the method when the program is executed.

In addition, each functional unit in the present disclosure may be integrated in one progressing module, or each functional unit exists as an independent unit, or two or more functional units may be integrated in one module. The integrated module can be embodied in hardware, or software. If the integrated module is embodied in software and sold or used as an independent product, it can be stored in the computer readable storage medium.

The above-mentioned storage medium may be a read-only memory, a magnetic disc, an optical disc, etc.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases such as "an embodiment," "some embodiments," "an example," "a specific example," or "some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure. The scope of the present disclosure is defined by the claims and their equivalents.

## Claims

1. A communication device, comprising:
a first external interface comprising a first pin and a second pin; and
a signal generation module electrically connected to the first pin, wherein the signal generation module is configured to generate X signals according to time interval corresponding to an N-bit string to be sent, wherein the time interval corresponding to the N-bit string to be sent represents time interval between start times of each two adjacent signals, different bit strings correspond to different time intervals respectively, where N≥1, X≥1, and X is a natural number;
wherein, the first external interface is configured to send the X signals via the first pin.

2. The communication device according to claim 1, further comprising: a signal receiving module connected to the first external interface; wherein,
the first external interface is configured to receive Y signals;
the signal receiving module is configured to detect the Y signals received by the first external interface, and to obtain a bit string corresponding to continuous L time intervals in Y-1 time intervals of the Y signals according to a bit string corresponding to a single time interval of the continuous L time intervals in the Y-1 time intervals, wherein in a case of L> 1, respective time intervals in the continuous L time intervals are the same, where Y and L are positive integers, and L≤Y-1.

3. The communication device according to claim 2, wherein the second pin is electrically connected to the signal receiving module and configured to receive the Y signals.

4. The communication device according to claim 2, wherein
the first pin is electrically connected to the signal receiving module, the second pin is connected to a ground end; and
the first pin is configured to receive the Y signals.

5. The communication device according to any one of claims 1 to 4, further comprising:
a power supply interface connected to a power supply; and
wherein the signal generation module is connected between the power supply interface and the first pin.

6. The communication device according to any one of claims 1 to 4, further comprising:
a power supply interface connected to a power supply and the first pin.

7. The communication device according to any one of claims 1 to 4 and 6, wherein the signal generation module comprises a main control chip and a signal generation unit, wherein,
the main control chip is connected to the signal generation unit, and the main control chip is configured to generate X control signals according to the time interval corresponding to the N-bit string to be sent, and to output the X control signals to trigger the signal generation unit to generate the X signals; and
the signal generation unit is connected between a ground end and the first pin, and the signal generation unit is configured to control a connection between the ground end and the first pin to be turned on or off under the control of the X control signals output by the main control chip, and to generate the X signals, wherein the time interval corresponding to the N-bit string to be sent represents time interval between start times of each two adjacent signals, where X≥1, and X is a natural number.

8. The communication device according to claim 7, wherein the signal generation unit comprises:
a first connection end electrically connected to the ground end;
a second connection end electrically connected to the first pin; and
a control end connected to the main control chip, and configured to control a connection between the first connection end and the second connection end to be turned on or off according to the X control signals output by the main control chip.

9. The communication device according to claim 5, wherein the signal generation module comprises a main control chip and a signal generation unit, wherein,
the main control chip is connected to the signal generation unit, and the main control chip is configured to generate X control signals according to the time interval corresponding to the N-bit string to be sent, and to output the X control signals to trigger the signal generation unit to generate the X signals; and
the signal generation unit is arranged between the power supply interface and the first pin, and the signal generation unit is configured to control a connection between the power supply interface and the first pin to be turned on or off under the control of the X control signals output by the main control chip, and to generate the X signals, wherein the time interval corresponding to the N-bit string to be sent represents time interval between start times of each two adjacent signals, where X≥1, and X is a natural number.

10. The communication device according to claim 9, wherein the signal generation unit comprises:
a first connection end electrically connected to the power supply interface;
a second connection end electrically connected to the first pin; and
a control end connected to the main control chip, and configured to control a connection between the first connection end and the second connection end to be turned on or off according to the X control signals output by the main control chip.

11. The communication device according to any one of claims 1 to 10, wherein the X signals comprise X low level pulses.

12. The communication device according to any one of claims 7 to 11, further comprising:
a boost reset circuit, wherein the boost reset circuit is electrically connected between the power supply interface and the signal generation unit, electrically connected to the main control chip, and configured to enter a working state or a non-working state under the control of a boost control signal output by the main control chip.

13. The communication device according to claim 12, wherein the boost reset circuit comprises a DC/DC boost component, and the DC/DC boost component comprises:
an input end electrically connected to the power supply interface;
an output end electrically connected to the signal generation unit; and
a control end electrically connected to the main control chip, configured to control the DC/DC boost component to enter a working state or a non-working state according to the boost control signal output by the main control chip.

14. The communication device according to claim 13, wherein the boost reset circuit comprises a filter connected between the ground end and the output end of the DC/DC boost component.

15. The communication device according to claim 14, wherein the boost reset circuit comprises a switcher, wherein the switcher comprises:
a third connection end electrically connected to the ground end;
a fourth connection end electrically connected to the output end; and
a control end electrically connected to the main control chip, and configured to control a connection between the third connection end and the fourth connection end to be turned on or off according to a turning-on/turning-off control signal output by the main control chip.

16. The communication device according to any one of claims 1 to 15, further comprising a line protection circuit connected in series between a first component and a second component, wherein,
the first component is configured as the signal generation module, and the second component is configured as the first pin; or
the first component is configured as the power supply interface, and the second component is configured as the signal generation module; or
the first component is configured as the power supply interface, and the second component is configured as the first pin; or
the first component is configured as the power supply interface, and the second component is configured as the boost reset circuit; or
the first component is configured as the boost reset circuit, and the second component is configured as the signal generation unit; or
the first component is configured as the ground end, and the second component is configured as the second pin.

17. The communication device according to claim 16, wherein the line protection circuit comprises a control module and a switch module, wherein,
the switch module comprises a fifth connection end, a sixth connection end and a controlled port;
the control module comprises a first detection port, a second detection port and a control port, wherein the first detection port is electrically connected to the fifth connection end of the switch module, the second detection port is electrically connected to the sixth connection end of the switch module, and the control port is electrically connected to the controlled port of the switch module;
the control module is configured to, when the switch module switches on a connection between the fifth connection end and the sixth connection end, detect a first level of the fifth connection end of the switch module via the first detection port, and to detect a second level of the sixth connection end of the switch module via the second detection port, and when a difference between the first level and the second level satisfies a condition to trigger line protection, to output a first control signal to the controlled port of the switch module via the control port, and to control the switch module to switch off the connection between the fifth connection end and the sixth connection end;
wherein the fifth connection end is electrically connected to the first component; or the sixth connection end is electrically connected to the second component.

18. An adapter device, comprising: a communication device according to claim 1, a second external interface and a codec, wherein the codec is electrically connected between the second external interface and the signal generation module of the communication device,
the second external interface is configured to receive first data sent from an external terminal electrically connected to the second external interface;
the codec is configured to decode the first data according to a protocol supported by the second external interface to obtain an N-bit string to be sent, and to send the N-bit string to be sent to the signal generation module.

19. The adapter device according to claim 18, further comprising:
a signal receiving module connected to the first external interface of the communication device and the codec;
wherein, the first external interface is configured to receive Y signals;
the signal receiving module is configured to detect the Y signals received by the first external interface, and to obtain a bit string corresponding to continuous L time intervals in Y-1 time intervals of the Y signals according to a bit string corresponding to a single time interval of the continuous L time intervals in the Y-1 time intervals, and to send the bit string corresponding to the continuous L time intervals to the codec, wherein in a case of L>1, respective time intervals in the continuous L time intervals are the same, where Y and L are positive integers, and L≤Y-1;
the codec is configured to receive the bit string corresponding to the continuous L time intervals sent from the signal receiving module, and to encode the bit string corresponding to the continuous L time intervals according to the protocol supported by the second external interface to obtain second data;
the second external interface is configured to send the second data to the external terminal.

20. The adapter device according to claim 19, wherein the second pin is electrically connected to the signal receiving module and configured to receive the Y signals.

21. The adapter device according to claim 19, wherein
the first pin is electrically connected to the signal receiving module, the second pin is connected to a ground end; and
the first pin is configured to receive the Y signals.

22. The adapter device according to any one of claims 18 to 21, further comprising:
a power supply interface connected to a power supply; and
wherein the signal generation module is connected between the power supply interface and the first pin.

23. The adapter device according to any one of claims 18 to 21, further comprising:
a power supply interface connected to a power supply and the first pin.

24. The adapter device according to any one of claims 18 to 21 and 23, wherein the signal generation module comprises a main control chip and a signal generation unit, wherein,
the main control chip is connected to the signal generation unit, and the main control chip is configured to generate X control signals according to the time interval corresponding to the N-bit string to be sent, and to output the X control signals to trigger the signal generation unit to generate the X signals; and
the signal generation unit is arranged between a ground end and the first pin, and the signal generation unit is configured to control a connection between the ground end and the first pin to be turned on or off under the control of the X control signals output by the main control chip, and to generate the X signals, wherein the time interval corresponding to the N-bit string to be sent represents time interval between start times of each two adjacent signals, where X≥1, and X is a natural number.

25. The adapter device according to claim 24, wherein the signal generation unit comprises:
a first connection end electrically connected to the ground end;
a second connection end electrically connected to the first pin; and
a control end connected to the main control chip, and configured to control a connection between the first connection end and the second connection end to be turned on or off according to the X control signals output by the main control chip.

26. The adapter device according to claim 22, wherein the signal generation module comprises a main control chip and a signal generation unit, wherein,
the main control chip is connected to the signal generation unit, and the main control chip is configured to generate X control signals according to the time interval corresponding to the N-bit string to be sent, and to output the X control signals to trigger the signal generation unit to generate the X signals; and
the signal generation unit is arranged between the power supply interface and the first pin, and the signal generation unit is configured to control a connection between the power supply interface and the first pin to be turned on or off under the control of the X control signals output by the main control chip, and to generate the X signals, wherein the time interval corresponding to the N-bit string to be sent represents time interval between start times of each two adjacent signals, where X≥1, and X is a natural number.

27. The adapter device according to claim 26, wherein the signal generation unit comprises:
a first connection end electrically connected to the power supply interface;
a second connection end connected to the first pin; and
a control end connected to the main control chip, and configured to control a connection between the first connection end and the second connection end to be turned on or off according to the X control signals output by the main control chip.

28. The adapter device according to any one of claims 24 to 27, wherein the codec is electrically connected to the main control chip, and configured to decode the first data according to the protocol supported by the second external interface, to obtain the N-bit string to be sent, and to send the N-bit string to be sent to the main control chip.

29. The adapter device according to any one of claims 18 to 27, wherein the X signals comprise X low level pulses.

30. The adapter device according to any one of claims 24 to 28, further comprising:
a boost reset circuit, wherein the boost reset circuit is electrically connected between the power supply interface and the signal generation unit, electrically connected to the main control chip, and configured to enter a working state or a non-working state under the control of a boost control signal output by the main control chip.

31. The adapter device according to claim 30, wherein the boost reset circuit comprises a DC/DC boost component, and the DC/DC boost component comprises:
an input end electrically connected to the power supply interface;
an output end electrically connected to the signal generation unit; and
a control end electrically connected to the main control chip, configured to control the DC/DC boost component to enter a working state or a non-working state according to the boost control signal output by the main control chip.

32. The adapter device according to claim 31, wherein the boost reset circuit comprises a filter connected between the ground end and the output end of the DC/DC boost component.

33. The adapter device according to claim 32, wherein the boost reset circuit comprises a switcher, wherein the switcher comprises:
a third connection end electrically connected to the ground end;
a fourth connection end electrically connected to the output end; and
a control end electrically connected to the main control chip, and configured to control a connection between the third connection end and the fourth connection end to be turned on or off according to a turning-on/turning-off control signal output by the main control chip.

34. The adapter device according to any one of claims 18 to 33, further comprising a line protection circuit connected in series between a first component and a second component, wherein,
the first component is configured as the signal generation module, and the second component is configured as the first pin; or
the first component is configured as the power supply interface, and the second component is configured as the signal generation module; or
the first component is configured as the power supply interface, and the second component is configured as the first pin; or
the first component is configured as the power supply interface, and the second component is configured as the boost reset circuit; or
the first component is configured as the boost reset circuit, and the second component is configured as the signal generation unit; or
the first component is configured as the ground end, and the second component is configured as the second pin.

35. The adapter device according to claim 34, wherein the line protection circuit comprises a control module and a switch module, wherein,
the switch module comprises a fifth connection end, a sixth connection end and a controlled port;
the control module comprises a first detection port, a second detection port and a control port, wherein the first detection port is electrically connected to the fifth connection end of the switch module, the second detection port is electrically connected to the sixth connection end of the switch module, and the control port is electrically connected to the controlled portof the switch module;
the control module is configured to, when the switch module switches on a connection between the fifth connection end and the sixth connection end, detect a first level of the fifth connection end of the switch module via the first detection port, and to detect a second level of the sixth connection end of the switch module via the second detection port, and when a difference between the first level and the second level satisfies a condition to trigger line protection, to output a first control signal to the controlled portof the switch module via the control port, and to control the switch module to switch off the connection between the fifth connection end and the sixth connection end;
wherein the fifth connection end is electrically connected to the first component; or the sixth connection end is electrically connected to the second component.

36. A communication device, comprising:
a third external interface comprising a third pin and a fourth pin, wherein the third external interface is configured to receive W signals via the third pin; and
a signal receiving module electrically connected to the third pin, wherein the signal receiving module is configured to detect the W signals received by the third pin, and to obtain a bit string corresponding to continuous L time intervals in W-1 time intervals of the W signals according to a bit string corresponding to a single time interval of the continuous L time intervals in the W-1 time intervals, wherein in a case of L>1, respective time intervals in the continuous L time intervals are the same, where W and L are positive integers, and L≤ W-1.

37. The communication device according to claim 36, further comprising a signal generation module connected to the third external interface, wherein
the signal generation module is configured to generate Z signals according to time interval corresponding to an N-bit string to be sent, wherein, the time interval corresponding to the N-bit string to be sent represents time interval between start times of each two adjacent signals, different bit strings correspond to different time intervals respectively, where N≥1, Z≥1, and Z is a natural number;
the third external interface is further configured to send the Z signals.

38. The communication device according to claim 36, wherein
the third pin is electrically connected to the signal generation module, the fourth pin is connected to a ground end; and
the third pin is configured to receive the Z signals.

39. The communication device according to claim 36, wherein the fourth pin is electrically connected to the signal generation module and configured to send the Z signals.

40. The communication device according to any one of claims 36 to 39, further comprising an anti reverse connection module, wherein,
the anti reverse connection module is electrically connected to the third external interface, and electrically connected to an input end of the signal generation module and an input end of the signal receiving module, an output end of the signal generation module and an output end of the signal receiving module are electrically connected to a ground end respectively, the anti reverse connection module is connected to the ground end;
the anti reverse connection module is configured to conduct a first connection between a first connection point and one of the third pin and the fourth pin, and to conduct a second connection between the ground end and the other one of the third pin and the fourth pin, wherein the first connection point is a junction where the anti reverse connection module is connected to the input end of the signal generation module and the input end of the signal receiving module.

41. The communication device according to claim 40, wherein the anti reverse connection module comprises a first anti reverse connection unit, a second anti reverse connection unit, a first port, a second port, a third port and a fourth port, wherein
the first port is connected to the third pin, the second port is connected to the fourth pin, the third port is electrically connected to the first connection point, and the fourth port is electrically connected to the ground end;
the first anti reverse connection unit is connected to the first port, the second port and the third portrespectively, configured to conduct a connection between the third port and one of the first port and the second port;
the second anti reverse connection unit is connected to the fourth port, the first port and the second port, configured to conduct a connection between the fourth port and the other one of the first port and the second port.

42. The communication device according to any one of claims 40 to 41, wherein the signal generation module comprises a main control chip and a signal generation unit, where,
the main control chip is connected to the signal generation unit, and the main control chip is configured to generate Z control signals according to the time interval corresponding to the N-bit string to be sent, and to output the Z control signals to trigger the signal generation unit to generate the Z signals; and
the signal generation unit is arranged between a ground end and the first connection point, and the signal generation unit is configured to control a connection between the ground end and the first connection point to be turned on or off under the control of the Z control signals output by the main control chip, and to generate the Z signals.

43. The communication device according to claim 42, wherein the signal generation unit comprises:
a first connection end electrically connected to the ground end;
a second connection end electrically connected to the first connection point; and
a control end connected to the main control chip, and configured to control a connection between the first connection end and the second connection end to be turned on or off according to the Z control signals output by the main control chip.

44. The communication device according to any one of claims 36 to 38 and 40 to 43, wherein the Z signals comprise Z low level pulses.

45. The communication device according to any one of claims 40 to 44, further comprising:
a fixed load, wherein one end of the fixed load is electrically connected to the first connection point, and the other end of the fixed load is electrically connected to the ground end.

46. The communication device according to claim 45, wherein the fixed load further comprises a charging switch and a charging battery, wherein,
the charging switch is connected between the first connection point and one end of the charging battery, configured to be controlled to switch to be turned on or off a connection between the first connection point and the charging battery, wherein the other end of the charging battery is connected to the ground end.

47. The communication device according to any one of claims 45 to 46, further comprising a filter, wherein the filter is connected between the ground end and the first connection point, or the filter is connected between the ground end and a junction connecting the charging switch and the charging battery.

48. The communication device according to claim 36, further comprising an anti reverse connection module, wherein the signal receiving module comprises an input end and an output end;
the anti reverse connection module is electrically connected to the third external interface, and electrically connected to the input end and the output end of the signal receiving module;
the anti reverse connection module is configured to conduct a first connection between the input end of the signal receiving module and one of the third pin and the fourth pin, and to conduct a second connection between the output end of the signal receiving module and the other one of the third pin and the fourth pin.

49. The communication device according to claim 48, wherein the anti reverse connection module comprises a first anti reverse connection unit, a second anti reverse connection unit, a first port, a second port, a third port and a fourth port, wherein
the first port is connected to the third pin, the second port is connected to the fourth pin, the third port is electrically connected to the input end of the signal receiving module, and the fourth port is electrically connected to the output end of the signal receiving module;
the first anti reverse connection unit is connected to the first port, the second port and the third portrespectively, configured to conduct a connection between the third port and one of the first port and the second port;
the second anti reverse connection unit is connected to the fourth port, the first port and the second port, configured to conduct a connection between the fourth port and the other one of the first port and the second port.

50. The communication device according to 41 or 49, wherein the first anti reverse connection unit comprises a first anti reverse connection element and a second anti reverse connection element, the second anti reverse connection unit comprises a third anti reverse connection element and a fourth anti reverse connection element;
the first anti reverse connection element is connected between the first port and the third port, configured to conduct a connection between the first port and the third port;
the second anti reverse connection element is connected between the second port and the third port, configured to conduct a connection between the second port and the third port;
the third anti reverse connection element is connected between the fourth port and the first port, configured to conduct a connection between the fourth port and the first port;
the fourth anti reverse connection element is connected between the fourth port and the second port, configured to conduct a connection between the fourth port and the second port.

51. The communication device according to any one of claims 48 to 50, further comprising:
a fixed load, wherein one end of the fixed load is connected to a connection point between the anti reverse connection module and the input end of the signal receiving module, and the other end of the fixed load is connected to the ground end.

52. The communication device according to claim 51, wherein the fixed load further comprises a charging switch and a charging battery, wherein,
the charging switch is connected between one end of the charging battery and a junction connecting the anti reverse connection module and the input end of the signal receiving module, configure to be controlled to switch to be turned on or off a connection between the charging battery and the junction connecting the anti reverse connection module and the input end of the signal receiving module, the other end of the charging battery is connected to the ground end.

53. The communication device according to any one of claims 51 to 52, further comprising a filter, wherein the filter is connected between the ground end and the junction connecting the anti reverse connection module and the input end of the signal receiving module, or the filter is connected between the ground end and a junction connecting the charging switch and the charging battery.

54. The communication device according to any one of claims 36 to 53, wherein the W signals comprise W low level pulses.

55. A communication system, comprising a master communication device and a slave communication device, wherein the master communication device comprises a communication device according to any one of claims 1 to 18, the slave communication device comprises a communication device according to any one of claims 36 to 54, the third external interface of the slave communication device is connected to the first external interface of the master communication device.

56. The communication system according to claim 55, further comprising a communication terminal, wherein the second external interface of the master communication device is connected to the communication terminal.

57. A signal generator, comprising: a main control chip, an output port and a signal generation unit electrically connected to the main control chip and the output port respectively, wherein the main control chip is configured to generate X signals according to time interval corresponding to an N-bit string to be sent, and to output the X control signals to trigger the signal generation unit to generate the X signals, where N≥1, X≥1, and X is a natural number;
the signal generation unit is configured to generate the X signals, wherein the time interval corresponding to the N-bit string to be sent represents time interval between start times of each two adjacent signals;
the output port is configured to output the X signals.

58. The signal generator according to claim 57, further comprising: a power supply interface connected with the power supply, and the signal generation unit is connected between the power supply interface and the output port.

59. The signal generator according to claim 57, further comprising: a power supply interface connected with the power supply, and the power supply interface is electrically connected with the output port.

60. The signal generator according to claim 58, wherein the signal generation unit is set between the power supply interface and the output port, disconnecting or conducting a path between the power supply interface and the output port under the control of the X control signals output by the main control chip, for producing the X signals.

61. The signal generator according to claim 60, wherein the signal generation unit comprises:
a first connection end electrically connected to the power supply interface;
a second connection end electrically connected to the output port; and
a control end connected to the main control chip, and configured to control a connection between the first connection end and the second connection end to be turned on or off according to the X control signals output by the main control chip.

62. The signal generator according to claim 58, further comprising: an input port connected electrically to the power supply interface; the signal generation unit is set between the input port and the output port, disconnecting or conducting a path between the input port and the output port under the control of the X control signals output from the main control chip, for producing the X signals.

63. The signal generator according to claim 62, wherein the signal generation unit comprises:
a first connection end electrically connected to the power supply interface;
a second connection end electrically connected to the output port; and
a control end connected to the main control chip, and configured to control a connection between the first connection end and the second connection end to be turned on or off according to the X control signals output by the main control chip.

64. The signal generator according to claim 57 or 59, wherein the signal generation unit is set between the ground end and the output port, and the path between the ground end and the output port is disconnected or through under the control of the X control signals output by the main control chip.

65. The signal generator according to claim 64, wherein the signal generation unit comprises:
a first connection end electrically connected to the power supply interface;
a second connection end electrically connected to the output port; and
a control end connected to the main control chip, and configured to control a connection between the first connection end and the second connection end to be turned on or off according to the X control signals output by the main control chip.

66. The signal generator according to any of claims 57 to 65, wherein the X signals comprise X low level pulses.

67. The signal generator according to any of claims 58 to 66, further comprising:a boost reset circuit, wherein the boost reset circuit is electrically connected between the power supply interface and the output port, electrically connected to the main control chip, and configured to enter a working state or a non-working state under the control of a boost control signal output by the main control chip.

68. The signal generator according to claim 57, wherein the boost reset circuit comprises a DC/DC boost component, and the DC/DC boost component comprises:
an input end electrically connected to the power supply interface;
an output end electrically connected to the output port; and
a control end electrically connected to the main control chip, configured to control the DC/DC boost component to enter a working state or a non-working state according to the boost control signal output by the main control chip.

69. The signal generator according to claim 68, wherein the boost reset circuit comprises a filter connected between the ground end and the output end of the DC/DC boost component.

70. The signal generator according to claim 69, wherein the boost reset circuit comprises a switcher, wherein the switcher comprises:
a first connection end electrically connected to the ground end;
a second connection end electrically connected to the output end; and
a control end electrically connected to the main control chip, and configured to control a connection between the first connection end and the second connection end to be turned on or off according to a turning-on/turning-off control signal output by the main control chip.

71. A communication device,comprises: a signal generator, as described in any of claims 57 to 61, 64 to 70, and a first external interface composed of the first and second pins, and the output port is electrically connected with the first pin.

72. A communication device,comprises: a signal generator, as described in any of claims 57 to 61, 64 to 70, and a first external interface composed of the first and second pins, and the output port is electrically connected with the second pin.

73. A communication device,comprises: a signal generator, as described in any of claims 62 to 63, 66 to 70, and a first external interface composed of the first and second pins, and the output port is electrically connected with the second pin.
